(19) **Europäisches Patentamt European Patent Office Office européen des brevets**

(11) **EP 4 487 296 B1**

(12) **EUROPEAN PATENT SPECIFICATION**

(45) Date of publication and mention of the grant of the patent:
**14.01.2026 Bulletin 2026/03**

(21) Application number: **22708618.8**

(22) Date of filing: **01.03.2022**

(51) International Patent Classification (IPC):
**G06T 7/70** (2017.01)

(52) Cooperative Patent Classification (CPC):
**G06T 7/70; G06T 2207/10081; G06T 2207/10088; G06T 2207/20081; G06T 2207/20084; G06T 2207/30048; G06T 2207/30101**

(86) International application number:
**PCT/IB2022/051785**

(87) International publication number:
**WO 2023/166330 (07.09.2023 Gazette 2023/36)**

(54) **A METHOD OF DETECTION OF A LANDMARK IN A VOLUME OF MEDICAL IMAGES**

VERFAHREN ZUR DETEKTION EINES ORIENTIERUNGSPUNKTS IN EINEM VOLUMEN MEDIZINISCHER BILDER

PROCÉDÉ DE DÉTECTION D'UN POINT DE REPÈRE DANS UN VOLUME D'IMAGES MÉDICALES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.01.2025 Bulletin 2025/02**

(73) Proprietor: **HEMOLENS DIAGNOSTICS SPÓLKA Z OGRANICZONA ODPOWIEDZIALNOSCIA**
**54-202 Wroclaw (PL)**

(72) Inventors:
• **KONOPCZYNSKI, Tomasz**
**54-105 Wroclaw (PL)**
• **RYGIEL, Patryk**
**52-411 Wroclaw (PL)**
• **GAJOWCZYK, Milosz**
**48-200 Prudnik (PL)**
• **GRÓDEK, Piotr**
**53-601 Wroclaw (PL)**
• **MOROZ, Lukasz**
**66-010 Nowogród Bobrzanski (PL)**
• **CUPIAL , Bartlomiej**
**44-100 Gliwice (PL)**

(74) Representative: **JWP Patent & Trademark Attorneys**
**ul. Minska 75**
**03-828 Warszawa (PL)**

(56) References cited:
• **NAHIAN SIDDIQUE ET AL: "U-Net and its variants for medical image segmentation: theory and applications", ARXIV.ORG, CORNELL UNIVERSITY LIBRARY, 201 OLIN LIBRARY CORNELL UNIVERSITY ITHACA, NY 14853, 2 November 2020 (2020-11-02), XP081929727, DOI: 10.1109/ACCESS.2021.3086020**
• **PAYER CHRISTIAN ET AL: "Integrating spatial configuration into heatmap regression based CNNs for landmark localization", MEDICAL IMAGE ANALYSIS, vol. 54, 1 May 2019 (2019-05-01), GB, pages 207 - 219, XP055973192, ISSN: 1361-8415, DOI: 10.1016/j.media.2019.03.007**
• **AIDEN NIBALI ET AL: "Numerical Coordinate Regression with Convolutional Neural Networks", ARXIV.ORG, CORNELL UNIVERSITY LIBRARY, 201 OLIN LIBRARY CORNELL UNIVERSITY ITHACA, NY 14853, 23 January 2018 (2018-01-23), XP081231492**

- JULIA M H NOOTHOUT ET AL: "CNN-based Landmark Detection in Cardiac CTA Scans", ARXIV.ORG, CORNELL UNIVERSITY LIBRARY, 201 OLIN LIBRARY CORNELL UNIVERSITY ITHACA, NY 14853, 13 April 2018 (2018-04-13), XP080870583
- ZHENG YEFENG ET AL: "Efficient Detection of Native and Bypass Coronary Ostia in Cardiac CT Volumes: Anatomical vs. Pathological Structures", 18 September 2011, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 403 - 410, ISBN: 978-3-540-74549-5, XP047367292

**Description**

FIELD OF THE INVENTION

The present invention pertains to detection of landmarks in medical images, such as computational tomography (CT) volumes and magnetic resonance (MR) image volumes. Landmarks include in particular coronary ostia. Detection is done using a deep learning model including neural network. Specifically, residual U-Net architecture. Transformation of probability to coordinates is done using non-trainable 3D Differentiable Spatial to Numerical Transform (DSNT).

BACKGROUND

An automatic ostia detection is used in various medical image analysis techniques. It is often paired with other tasks such as an image segmentation or a registration. The main challenges in automatic ostia detection are anatomical differences between patients and differences in image acquisition. Regression of landmarks' coordinates is done globally and does not require a local refinement whereas other most common techniques do [4, 17, 18, 26, 31], especially to achieve the state of the art (SOTA) performance of a median Euclidean distance error equal to 1.12 mm and 1.05 mm for the left ostium and for the right ostium, respectively.

The first methods which tackled the problem of coronary ostia detection from a Coronary Computed Tomography Angiography (CCTA) are based on finding intensity patterns. Both Waechter et al. [26] and Elattar et al. [4] use a prior aortic valve segmentation to perform an intensity-based landmark detection on the surface of the aorta. Elattar et al. achieved a Euclidean error of 2.81 $\pm$ 2.07 mm. These methods were strictly designed to detect coronary ostia and required a two-step setup to perform the detection. The required two-step setup was time-consuming and the methods were not time-efficient. Moreover, the accuracy of these methods is limited by anatomical anomalies and said anatomical differences between patients.

The introduction of machine learning was beneficial both for robustness and for time consumption. Classical machine learning methods can be divided into two types: a classification-based [2, 3, 7, 8, 12, 13, 19, 25, 31] and a regression-based [1, 3, 5, 6, 19, 22, 25] methods. The classification-based methods are producing a probability for a given pixel/voxel to be a landmark of interest. For the application in the ostia detection, Ionasec et al. [8] proposed to use probabilistic boosting trees to achieve a Euclidean error of 2.28 mm. Zheng et al. [31] used global-to-local marginal space learning and obtained a Euclidean error of 2.11 $\pm$ 1.34 mm.

The regression-based methods are designed to output a continuous value that defines sub-resolution coordinates for a landmark of interest. Al et al. [1] employed an approach based on colonial walks to the problem of ostia detection and achieved a Euclidean error of 2.01 $\pm$ 1.04 mm. Due to the recent growth in the area of artificial neural networks, many Deep Neural Network (DNN) based approaches to the problem of landmark detection were introduced. The first networks which tackled the problem of landmark detection employed a Convolutional Neural Network (CNN) model with a fully-connected head to regress landmark coordinates [9, 24]. Mostafa et al. [14] proposes to use a U-Net architecture [21] with a fully-connected head to solve the problem of ostia detection. They report 68.3% and 74.1% SDR (success detection rate), respectively, for the threshold of 2 mm.

Using heatmap matching as another approach has been introduced in subsequent work [23]. In this approach, a landmark is represented as a Gaussian centered at its coordinates. The model comprised in this approach produces heatmaps which are supposed to match Gaussian landmark representations and are penalized by the mean square error (MSE) loss. This landmark representation is similar to classification-based ML (ML - machine learning) methods where a probability of a landmark presence at its position is predicted for each pixel/voxel. A current SOTA performance level regarding landmark detection is achieved by models based on the pyramid/hourglass architecture [15, 28]. Heatmap matching was also used for medical images by Payer et al. [20] to perform a landmark detection on X-ray images. Wolterink et al. [27] used it in ostia detection and obtained a Euclidean error of 1.8 $\pm$ 1.0 mm for a test set of 36 images.

The current best-performing methods of coronary ostia detection employ a two-step hybrid approach. Noothout et al. developed in 2018 an approach that performed a slice-wise image analysis [18]. This approach comprises a vector pointing from the center of each slice to a landmark of interest. The vector is regressed for said each slice and the probability of a given landmark presence on the given slice is predicted. A CNN was implemented for this task with two heads and the final landmark location was found by weighing a prediction vector by a predicted presence probability. The backbone of the CNN was responsible for finding rough landmark locations which were subsequently individually refined by a subsequent network of the same design as the main network. They reported a Euclidean error of 2.19 and 2.88 mm for the right and left coronary ostium, respectively, for a test set of 40 CCTA volumes. Noothout's approach was further refined by its creators and expanded in 2020 by Noothout et al [17]. The slice-wise approach was changed to the patch-wise approach and a CCTA dataset was further expanded to 672 volumes with 200 volumes comprised in a test set. With a larger dataset and a greater anatomical variability, they achieved a median (IQR - interquartile range) Euclidean error of 1.45 (1.20) and 1.55 (0.97) mm for the right and the left coronary ostium, respectively. However, such results were only achieved by using a subsequent local refinement network. The lowest median (IQR) Euclidean error achieved with the use of a global network only was reported to be 2.90 (1.93) 3.31 (2.23) mm for the right and the left coronary ostium, respectively.

This review of prior art developments is underlying that there is a need for a reliable and precise method that will allow to find landmark coordinates fast. The present invention addresses this need.

BRIEF DESCRIPTION OF THE INVENTION

The forthcoming description is to better understand the principle and benefits of the invention claimed in the appended claims. Therefore, it is not meant to be limiting in any sense. In particular, certain explanations to the meaning or to the function of, for example, equations used within the invention cannot be understood as limiting or exhaustive. They are provided to facilitate understanding and cannot replace the full understanding provided by a common general knowledge of a skilled person in this field.

The invention pertains to a problem of landmark detection, in particular to automatic ostia detection. The invention implements learning a supervised regression model of landmark coordinates from, for example, a computational tomography (CT) volume and from human annotations. Term supervised has a typical definition used in this filed and refers to use of examples to teach the algorithm.

We refer to input volume as x, human annotations as y and model predictions as ŷ. Within the scope of this disclosure, bolded symbols used in equations refer to vectors and not bolded symbols refer to scalars.

The invention includes a heatmap matching regression which is combined with extraction of heatmap center coordinates by a Differentiable Spatial to Numerical Transform (DSNT) layer. The invention involves a combination of residual U-Net with 3D DSNT for landmark detection. In particular, for coronary ostia detection.

For simplification of the description, residual blocks can be used interchangeably with blocks. For example, encoding residual block can also be called encoding block. Volumes are results of medical scans. For example, a computational tomography volume is a result of a CT scan

In one aspect, the invention pertains to a method of localization of a landmark in a volume of medical images. The method comprises generating at least one heatmap using a trained residual U-Net applied on the volume of medical images. For the method, the volume of medical images consists of a computational tomography volume or a magnetic resonance volume. The volume of medical images comprises voxels. The method can be realized as a computer-implemented invention. Localization can include, but is not limited to, indicating of probable position on a heatmap, providing coordinates of a landmark, providing estimated coordinates of a landmark or providing a range of coordinates in which a landmark is located. The range of coordinates can be a range for only one coordinate, two or three coordinates.

Said at least one heatmap according to the invention is produced using a trained residual U-Net applied on the volume of medical images. Each said heatmap represents a probability of finding localization of said at least one landmark in voxels.

The residual U-Net of the invention comprises a contracting path and an expansive path. The contracting path comprises residual encoding blocks for encoding the volume of medical images. The expansive path comprises residual decoding blocks for decoding the volume of medical images encoded by the contracting path.

The method of the present invention, when compared to known methods, provides localization of landmarks fast and with significantly improved accuracy. Furthermore, the method, when trained, becomes a one-step method which is relevant from the standpoint of view of application of the method in medical practice.

The method additionally involves transforming said at least one heatmap to coordinates of at least one landmark using a 3D Differentiable Spatial to Numerical Transform. This additional step makes the method performing even better when compared to the method using only a residual U-Net.

In one embodiment, each said heatmap is normalized. Normalization makes the method less computationally demanding.

In one embodiment, the volume of medical images is a pre-processed volume of medical images. Pre-processing can be different for training and for using the method of the invention. For example, the reprocessed volume of medical images is obtained using at least one of central cropping, clipping and setting values of selected voxels to defined values, normalizing the values of voxels, downsizing the volume of medical images and augmenting. Pre-processing is done to remove unnecessary information to make the method less computationally demanding.

Said clipping and setting values of selected voxels to defined values can comprise setting values of voxels smaller than -300 HU to -300 HU and setting values of voxels higher than 1100 HU to 1100 HU.

Said normalizing the values of voxels can include setting values of voxels equal -300 HU to 0, setting values of voxels equal 1100 HU to 1, and scaling linearly values between -300 HU and 1100 HU are set to a corresponding value in the scale from 0 to 1.

Said downsizing can include decreasing the volume of the volume of medical images 3 to 4 times. In particular, downsizing includes decreasing the volume of the volume of medical images 3.1, 3.2, 3.3, 3.4, 3.5, 3.6, 3.7, 3.8 or 3.9 times.

The augmenting can include rotation up to $\pi/6$ radians and translation up to 10 voxels in each dimension.

In one embodiment, encoding comprises downsampling of the volume of medical images and increasing the number of channels to produce a downsampled output and sending the downsampled output to a corresponding encoding residual block and to a corresponding decoding residual block.

In one embodiment, said downsampling is done by a factor of two.

In another embodiment, said decoding comprises upsampling of an input to a residual decoding block of the volume of medical images to produce an upsampled output with a decreased number of channels. The upsampling can done by a factor of two.

In one embodiment, training of the trained residual U-Net comprises at least one of:

- minimization of the divergence between said at least one heatmap and an annotated heatmap comprising at least one annotation, wherein said at least annotation points to localization of the landmark on said at least one heatmap, and

- minimization of the Euclidean distance between the localization on said at least one heatmap and the localization on the heatmap comprising at least one annotation.

In one embodiment, training of the trained residual U-Net comprises both minimization of the divergence between said at least one heatmap and an annotated heatmap comprising at least one annotation, wherein said at least annotation points to localization of the landmark on said at least one heatmap, and minimization of the Euclidean distance between the localization on said at least one heatmap and the localization on the heatmap comprising at least one annotation. Training involving both minimizations allows for obtaining the most precise results.

In embodiments, the probability of finding the landmark has a normal distribution.

In an embodiment, said minimization of the Euclidean distance includes $\mathcal{L}_{E}(\hat{\mathbf{y}}, \mathbf{y}) = \|\hat{\mathbf{y}} - \mathbf{y}\|_2$ and said minimization of the divergence includes $\mathcal{L}_{D}(\hat{\mathbf{H}}, \mathbf{y}) = D_{JS}(\hat{\mathbf{H}} \| \mathcal{N}(\mathbf{y}, \sigma^2))$,

$D_{JS}(\cdot \| \cdot)$ is the Jensen-Shannon divergence.

In embodiments, the training of the trained residual U-Net includes a linear combination of said minimization of the divergence and said minimization of the Euclidean distance.

In embodiments, said at least one heatmap and said annotated heatmap are produced using the same volume of medical images.

In embodiments, the 3D Differentiable Spatial to Numerical Transform includes:

$$\mathrm{DSNT}(\hat{\mathbf{H}}) = \left[ \langle \hat{\mathbf{H}}, \mathbf{X} \rangle_F, \langle \hat{\mathbf{H}}, \mathbf{Y} \rangle_F, \langle \hat{\mathbf{H}}, \mathbf{Z} \rangle_F \right],$$

where $\hat{\mathbf{H}} = \varphi(\mathbf{H})$, and $\hat{\mathbf{H}}$ is the heatmap $\mathbf{H}$ output from the residual U-Net and normalized by a normalization function, wherein $\langle \cdot, \cdot \rangle_F$ represents a Frobenius inner product of two matrices, wherein said two matrices are selected from $\hat{\mathbf{H}}, \mathbf{X}, \mathbf{Y}$ and $\mathbf{Z}$.

X, Y and Z are grids in the form of $m \times n \times l$ matrices defined as:

$$\mathbf{X}_{i,j,k} = \frac{2j - (n+1)}{n}, \mathbf{Y}_{i,j,k} = \frac{2i - (m+1)}{m}, \mathbf{Z}_{i,j,k} = \frac{2k - (l+1)}{l}.$$

This 3D DSNT outperforms known methods for landmark detection, especially for coronary ostia landmarks.

In embodiments, each residual block comprises:

$$\mathbf{y}_l = \mathrm{h}(\mathbf{x}_l) + \mathcal{F}(\mathbf{x}_l, \mathbf{W}_l),$$

$$\mathbf{x}_{l+1} = f(\mathbf{y}_l)$$

where $x_l$ and $x_{l+1}$ are the input and output of the $l$-th residual block, $\mathcal{F}(\cdot)$ is a residual function, $f(y_l)$ is an activation function and $h(x_l)$ is an identity mapping function.

In embodiment, said at least one landmark is selected from the list comprising:

inlets and outlets surrounding ostium of Left Coronary Artery, inlets and outlets surrounding ostium of Right Coronary Artery, apex of left ventricle, base/basis of left ventricle, 17 segments of left ventricle according to American Heart Association, junction points of left and right ventricles, ostium LCA ostium of Left Coronary Artery, ostium RCA ostium of Right Coronary Artery, LM division of Left Main Coronary Artery, DG1 origin of 1st diagonal artery, DG2 origin of 2st diagonal artery origin of ramus intermedius artery, OM1 origin of 1st obtuse marginal artery, OM2 origin of 2st obtuse marginal artery, RCA origin of Right Coronary Artery, AM origin of Acute Marginal Branch, PDA origin of Posterior Descending Artery, PL origin of Posterior Left Ventricular Artery, inlet of Superior Vena Cava to right atrium, inlet of Inferior Vena Cava to right atrium, inlet of coronary sinus to right atrium, inlet of right appendage/auricle to right atrium, apex of right appendage/auricle, inlet of left superior/inferior and right superior/inferior pulmonary veins to left atrium, inlet of right appendage/auricle to right atrium, apex of left appendage/auricle, origin of pulmonary trunk, tricuspid valve including leaflets: anterior, posterior and septal, apex of Right Ventricle, origin of ascending aorta, aortic valve including leaflets: right, left, posterior anterior, right anterior, right posterior, anterior coronary, left coronary, right coronary, non-coronary, bicuspid valve including leaflets: anterior and posterior, mitral valve including leaflets: anterior and posterior, ANTETIOR CEREBRAL ARTERY, landmarks located at the beginning of horizontal or pre-communicating segment, vertical, post-communicating or infracallosal segment, precallosal segment, supracallosal segment, postcallosal segment, ANTERIOR COMMUNICATING ARTERY, SUPERIOR CEREBELLAR ARTERY, ANTERIOR INFERIOR CEREBELLAR ARTERY, POSTERIOR INFERIOR CEREBELLAR ARTERY, MIDDLE CEREBRAL ARTERY, landmarks located at the beginning of sphenoidal/horizontal segment, insular segment, opercular segment, cortial segment, POSTERIOR CEREBRAL ARTERY, landmarks located at the beginning of pre-communicating segment, post-communicating segment, quadrigeminal segment, cortical segment, POSTERIOR COMMUNICATING ARTERY, OPHTALMIC ARTERY, RIGHT AND LEFT CHOROIDAL ARTERY, BASILAR ARTERY, ANTERIOR SPINAL ARTERY, BRACHIOCEPHALIC ARTERY/TRUNK, RIGHT/LEFT SUBCLAVIAN ARTERY, RIGHT/LEFT COMMON CAROTID ARTERY, RIGHT/LEFT INTERNAL CAROTID ARTERY, RIGHT/LEFT EXTERNAL CAROTID ARTERY, RIGHT/LEFT VERTEBRAL ARTERY, RIGHT/LEFT THYROCERVICAL TRUNK, RIGHT/LEFT INTERNAL THORACIC ARTERY, RIGHT/LEFT COSTOCERVICAL TRUNK, RIGHT/LEFT SUPRASCAPULAR ARTERY, RIGHT/LEFT TRANSVERSE CERVICAL ARTERY, RIGHT/LEFT AXILLARY ARTERY, RIGHT/LEFT BRACHIUAL ARTERY, RIGHT/LEFT ULNAR ARTERY, RIGHT/LEFT RADIAL ARTERY, RIGHT/LEFT SUPERIOR THYROID ARTERY, RIGHT/LEFT LINGUAL ARTERY, RIGHT/LEFT FACIAL ARTERY, RIGHT/LEFT ASCENDING PHARYNGEAL ARTERY, RIGHT/LEFT OCCIPITAL ARTERY, RIGHT/LEFT POSTERIOR AURICULAR ARTERY, RIGHT/LEFT SUPERFICIAL TEMPORAL ARTERY, RIGHT/LEFT MAXILLARY ARTERY, POSTERIOR INTERCOSTAL ARTERIES, SUBCOSTAL ARTERIES, SUPERIOR PHRENIC ARTERIES, PERICARDIAL ARTERIES, OESOPHAGAL ARTERIES, ESOPHAGEAL BRANCHES OF INFERIOR THYROID ARTERY (TOP THIRD), ESOPHAGEAL BRANCHES OF THORACIC PART OF AORTA (MIDDLE THIRD), ESOPHAGEAL BRANCHES OF LEFT GASTRIC ARTERY (BOTTOM THIRD), LOWER DIAPHRAGMATIC ARTERIES, LUMBAR ARTERIES, CELIAC TRUNK, SUPERIOR MESENTRIC ARTERY, INFERIOR MESENTRIC ARTERY, MIDDLE SUPRARENAL ARTERY, RENAL ARTERIES, TESTICULAR ARTERY/INTERNAL SPERMATIC ARTERY/OVARIAN ARTERY, COMMON ILIAC ARTERIES, INTERNAL ILIAC ARTERIES, EXTERNAL ILIAC ARTERIES, FEMORAL ARTERIES, POPLITEAL ARTERIES, ANTERIOR TIBIAL ARTERIES, DORSAL ARTERIES OF FOOT, POSTERIOR TIBIAL ARTERIES, MEDIAL PLANTAR ARTERIES, LATERAL PLANTAR ARTERIES, V. CAVA SUPERIOR, VV. BRACHIOCEPHALICAE, V. SUBCLAVIA, VV. IUGULARES, V. CAVA INFERIOR, VV. ILIACAE COMMUNES, V. ILIACA EXTERNA, V. ILIACA INTERNA, VV. CORDIS, V. CARDIACA MAGNA, V. CARDIACA PARVA, V. CARDIACA MEDIA, V. POSTERIOR VENTRICULI SINISTRI, V. OBLIQUA ATRII SINISTRI, VV. CARDIACAE ANTERIORES, V. MARGINALIS DEXTRA, V. MARGINALIS SINISTRA, VV. CARDIACAE MINIMAE, VV. CEREBRI, V. CEREBRI INTERNA, V. SEPTI PELLUCIDI ANTERIOR, V. SEPTI PELLUCIDI POSTERIOR, V. THALAMOSTRIATA SUPERIOR, VV. THALAMOSTRIATAE INFERIORES, V. CHOROIDEA SUPERIOR, V. CHOROIDEA INFERIOR, V. CEREBRI MAGNA, VV. CEREBRI SUPERIORES, VV. CEREBRI INFERIORES, V. CEREBRI ANTERIOR, V. CEREBRI MEDIA PROFUNDA, V. CEREBRI MEDIA SUPERFICIALIS, VV. ANASTOMOTICAE, V. ANASTOMOTICA SUPERIOR, V. ANASTOMOTICA INFERIOR, V. BASALIS, V. COMMUNICANS ANTERIOR, V. COMMUNICANS POSTERIOR, CIRCULUS VENOSUS CEREBRI, V. COMMUNICANS POSTERIOR, V. SUPERIOR VERMIS, VV. HEMISPHAERII CEREBELLI SUPERIORES, V. VERMIS INFERIOR, VV. HEMISPHAERII CEREBELLI INFERIORES, VV. DIPLOICAE, V. DIPLOICA FRONTALIS, V. DIPLOICA TEMPORALIS ANTERIOR, V. DIPLOICA TEMPORALIS POSTERIOR, V. DIPLOICA OCCIPITALIS, VV. EMISSARIAE, V. EMISSARIA PARIETALIS, V. EMISSARIA MASTOIDEA, V. EMISSARIA CONDYLARIS, V. EMISSARIA OCCIPITALIS, PLEXUS VENOSUS FORAMINIS OVALIS, PLEXUS VENOSUS CAROTICUS INTERNUS, PLEXUS VENOSUS CANALIS HYPOGLOSSI, VV. MENINGEAE, VV. MENINGEAE MEDIAE, SINUS DURAE MATRIS, SINUS SAGITTALIS SUPERIOR, SINUS SAGITTALIS INFERIOR, SINUS RECTUS, SINUS TRANSVERSUS, SINUS SIGMOIDEUS, SINUS OCCIPITALIS, CONFLUENS SINUUM, SINUS CAVERNOSUS, SINUS INTERCAVERNOSI, PLEXUS BASILARIS, V. OPHTHALMICA SUPERIOR, V. LACRIMALIS, VV. ETHMOIDALES, ANTERIOR ET POSTERIOR, V. NASOFRONTALIS, V. OPHTHALMICA INFERIOR, V. FACIALIS, V. ANGULARIS, V. SUPRATROCHLEARIS, V. SUPRAORBITALIS, VV. PALPEBRALES, VV. NASALES EXTERNAE, VV. LABIALES, V. PROFUNDA FACIEI, RAMI PAROTIDEI, V. SUBMENTALIS, V. PALATINA EXTERNA, V. RETROMANDIBULARIS, VV. TEMPORALES SUPERFICIALES, V. TEMPORALIS MEDIA, V. TRANSVERSA FACIEI, VV. ARTICULARES, V. STYLOMASTOIDEA, VV. AURICULARES ANTERIORES, VV. PAROTIDEAE, VV. MAXILLARES, V. IUGULARIS EXTERNA, V. AURICULARIS POSTERIOR, V. OCCIPITALIS, V.

SUPRASCAPULARIS, VV. TRANSVERSAE COLLI, V. IUGULARIS ANTERIOR, PLEXUS PTERYGOIDEUS, V. SPHENOPALATINA, VV. MENINGEAE MEDIAE, VV. TEMPORALES PROFUNDAE, VV. ALVEOLARES SUP., VV. MASSETERICAE, V. ALVEOLARIS INFERIOR, V. VERTEBRALIS, V. VERTEBRALIS ANTERIOR, V. CERVICALIS PROFUNDA, V. IUGULARIS INTERNA, SINUS SIGMOIDEUS, SINUS OCCIPITALIS, PLEXUS VENOSUS CANALIS HYPOGLOSSI, V. CANALICULI COCHLEAE, SINUS PETROSUS INFERIOR, V. OCCIPITALIS, V. FACIALIS, VV. PHARYNGEALES, V. LINGUALIS, V. PROFUNDA LINGUAGE, VV. DORSALES LINGUAE, V. COMITANS N. HYPOGLOSSI, VV. THYROIDEAE SUPERIORES, VV. SUBFASCIALES, ARCUS VENOSUS PALMARIS PROFUNDUS, VV. RADIALES, VV. ULNARES, VV. BRACHIALES, V. BRACHIALIS COMMUNIS, V. BASILICA, VV. MUSCULUS, VV. COLATERALIS ULNAE, V PROFUNDA BRACHII, V. AXILLARIS, V. SUBCLAVIA, VV. CUTANEAE, VV. DIGITORUM, V. INTERCAPITALIS, ARCUS VENOSUS DIGITALIS PALMARIS, V. INTERDIGITALIS, ARCUS VENOSUS DIGITALIS DORSALIS, RETE VENOSUM DORSALE MANUS, VV. METACARPALES DORSALES, ARCUS VENOSUS METACARPALIS DORSALIS, VV. MARGINALES, V. SALVATELLA, V. CEPHALICA POLLICIS, V. CEPHALICA, V. CEPHALICA ANTEBRACHII, V. CEPHALICA ACCESSORIA, V. INTERMEDIA CUBITI, V. BASILICA, V. INTERMEDIA ANTEBRACHII, V. INTERMEDIA BASILICA, V. INTERMEDIA CEPHALICA, V. CAVA SUPERIOR, V. BRACHIOCEPHALICA, ANGULUS VENOSUS, V. THYROIDEA INFERIOR, VV. THYROIDEAE IMAE, V. VERTEBRALIS, V. CERVICALIS PROFUNDA, V. IUGULARIS EXT., VV. PERICARDIACOPHRENICAE, VV. THYMICAE, VV. PERICARDIALES, VV. MEDIASTINALES, VV. BRONCHIALES, VV. TRACHEALES, VV. ESOPHAGEALES, VV. THORACICAE INTERNAE, VV. MUSCULOPHRENICAE, VV. EPIGASTRICAE SUPERIORES, VV. INTERCOSTALES ANTERIORES, RAMI PERFORANTES, RAMI STERNALES, V. INTERCOSTALIS SUPERIOR, VV. CUTANEAE ABDOMINIS ET PECTORIS, PLEXUS VENOSUS AREOLARIS, VV. THORACOEPIGASTRICAE, VV. COSTOAXILLARES, V. AZYGOS, V. HEMIAZYGOS, PLEXUS VENOSI VERTEBRALES EXTERNI, PLEXUS VENOSI VERTEBRALES INTERNI, VV. BASIVERTEBRALES, VV. INTERVERTEBRALES, VV. SPINALES, VV. SPINALES INTERNAE, VV. SPINALES EXTERNAE, VV. RADICULARES, VV. DORSALES PEDIS, VV. PLANTARES LATERALES, ARCUS VENOSUS PLANTARIS, VV. PLANTARES MEDIALES, VV. METATARSALES PLANTARES, VV. PERFORANTES, VV. TIBIALES ANTERIORES, VV. TIBIALES POSTERIORES, VV. FIBULARES S. PERONEALES, V. POPLITEA, VV. GENICULARES, VV. SURALES, V. SAPHENA PARVA, V. FEMORALIS, V. EPIGASTRICA SUPERFICIALIS, V. CIRCUMFLEXA ILIACA SUPERFICIALIS, VV. THORACOEPIGASTRICAE, VV. PUDENDAE EXTERNAE,: VV. SCROTALES ANTERIORES, VV. LABIALES ANTERIORES, VV. DORSALES SUPERFICIALES PENIS, VV. DORSALES SUPERFICIALES CLITORIDIS, V. SAPHENA MAGNA, V.PROFUNDA FEMORIS, VV. PERFORANTES, VV. CRICUMFLEXAE MEDIALES FEMORIS, VV. CRICUMFLEXAE LATERALES FEMORIS, VV. GLUTEAE SUPERIORES, VV. GLUTEAE INFERIORES, VV. DIGITALES DORSALES, VV. INTERCAPITALES, VV. METATARSALES DORSALES, ARCUS VENOSUS DORSALIS PEDIS, VV. DIGITALES PLANTARES, ARCUS VENOSUS PLANTARIS, RETE VENOSUM PLANTARE, RETE VENOSUM DORSALE, V. SAPHENA, V. SAPHENA PARVA, V. CAVA INFERIOR, VV. PHRENICAE INFERIORES, VV. LUMBALES, VV. HEPATICAE, VV. RENALES, V. SUPRARENALIS, V. TESTICULARIS, V. OVARICA, VV. ILIACAE COMMUNES, V. SACRALIS MEDIANA, V. ILIACA EXTERNA, V. CIRCUMFLEXA ILIACA PROFUNDA, V. EPIGASTRICA INFERIOR, V. ILIACA INTERNA, V. ILIOLUMBALIS, VV. SACRALES LATERALES, VV. GLUTEAE SUPERIORES, VV. GLUTEAE INFERIORES, VV. OBTURATORIAE, V. PUDENDA INTERNA, VV. PROFUNDAE PENIS RESP. CLITORIDIS, VV. BULBI PENIS RESP. VV. BULBI VESTIBULI VAGINAE, VV. SCROTALES POSTERIORES RESP. LABIALES POSTERIORES, VV. RECTALES INFERIORES, V. DORSALIS PENIS, VV. CRICUMFLEXAE PENIS, V. DORSALIS CLITORIDIS, VV. DORSALES PENIS SUPERFICIALES, VV. DORSALES CLITORIDIS SUPERFICIALES, PLEXUS VENOSUS RECTALIS, PLEXUS VENOSUS VESICALIS, PLEXUS VENOSUS PROSTATICUS, PLEXUS VENOSUS UTERINUS, PLEXUS VENOSUS VAGINALIS, V. PORTAE HEPATIS, V. MESENTERICA SUPERIOR, VV. IEIUNALES ET ILEALES, V. ILEOCOLICA, V. APPENDICULARIS, V. COLICA DEXTRA, VV. PANCREATICAE, V. GASTROOMENTALIS DEXTRA, V. PANCREATICODUODENALIS INF., V. SPLENICA S. LIENALIS, VV. PANCREATICAE, VV. GASTRICAE BREVES, V. GASTROOMENTALIS SINISTRA, V. MESENTERICA INFERIOR, VV. SIGMOIDEAE, V. COLICA SIN., V. RECTALIS SUP., V. GASTRICA SINISTRA, V. GASTRICA DEXTRA, V. PREPYROLICA, V. PANCREATICODUODENALIS SUPERIOR POSTERIOR, V. CYSTICA, V. UMBILICALIS, major duodenal papilla/ papilla of Vater, inlet of cystic duct to common biliary duct, outlet of cystic duct from gallbladder, junction of right and left hepatic duct, junction of right anterior and right posterior hepatic duct, carina, subdivision to right superior lobar bronchus, subdivision to right middle lobar bronchus, subdivision to right inferior lobar bronchus, subdivision to left superior lobar bronchus, subdivision to left inferior lobar bronchus, subdivision to right first segmental bronchus, subdivision to right second segmental bronchus, subdivision to right third segmental bronchus, subdivision to right fourth segmental bronchus, subdivision to right fifth segmental bronchus, subdivision to right sixth segmental bronchus, subdivision to right seventh segmental bronchus, subdivision to right eight segmental bronchus, subdivision to right ninth segmental bronchus, subdivision to right tenth segmental bronchus, subdivision to right first segmental bronchus, subdivision to left first segmental bronchus, subdivision to left second segmental bronchus, subdivision to left third segmental bronchus, subdivision to left fourth segmental bronchus, subdivision to left fifth segmental bronchus, subdivision to left sixth segmental bronchus, subdivision to left seventh segmental bronchus, subdivision to left eighth segmental bronchus, anterior nares, outlet/drainage of right posterior ethmoidal cells to right sphenoethmoidal recess, outlet/drainage of left posterior ethmoidal cells to left sphenoethmoidal recess, outlet/drainage of right sphenoid sinus to right spheno-ethmoidal recess, outlet/drainage of right sphenoethmoidal recess to right superior nasal meatus, outlet/drainage of left sphenoethmoidal recess to left superior nasal meatus, outlet/drainage of right frontal sinus to right frontal recess, outlet/drainage of left frontal sinus to left frontal recess, outlet/drainage of right frontal recess to right middle nasal meatus, outlet/drainage of left frontal recess to left middle nasal meatus, outlet/drainage of right frontal ethmoidal cells to right ostiomeatal complex, outlet/drainage of right frontal ethmoidal cells to right ostiomeatal complex, outlet/drainage of right maxillary sinus to right ostiomeatal complex, outlet/drainage of left maxillary sinus to left ostiomeatal complex, outlet/drainage of right ostiomeatal complex to right middle nasal meatus, outlet/drainage of lewft ostiomeatal complex to left middle nasal meatus, outlet/drainage of right nasolacrimal duct to right inferior nasal meatus, outlet/drainage of left nasolacrimal duct to left inferior nasal meatus, postrior nares/ posterior nasal aperture/chonoae, uvula, pharyngeal tonsil, opening of left and right auditory tube, tip of epiglottis, right and left piriform recess/fossa/sinus, postcricoid region, cricoid cartillage, interarytenoid fold, right and left aryepiglottic fold, right and left arytenoid cartillages, right and left vesibular fold, outlet of right and left laryngeal sacc, vocal chords, right and left vocal fold, first tracheal cartillage, Kidneys, Renal papilla, Minor calyxes, Renal pyramids, Renal pelvis, inlet ureter, Abdominal aortic plexus, Abducens nerves, Accessory nerve, Accessory obturator nerve, Alderman's nerve, Anococcygeal nerve, Ansa cervicalis, Anterior interosseous nerve, Anterior superior alveolar nerve, Auerbach's plexus, Auriculotemporal nerve, Axillary nerve, Brachial plexus, Buccal branch of the facial nerve, Buccal nerve, Cardiac plexus, Cavernous nerves, Cavernous plexus, Celiac ganglia, Cervical branch of the facial nerve, Cervical plexus, Chorda tympani, Ciliary ganglion, Coccygeal nerve, Cochlear nerve, Common fibular nerve, Common palmar digital nerves of median nerve, Deep branch of the radial nerve, Deep fibular nerve, Deep petrosal nerve, Deep temporal nerves, Diagonal band of Broca, Digastric branch of facial nerve, Dorsal branch of ulnar nerve, Dorsal nerve of clitoris, Dorsal nerve of the penis, Dorsal scapular nerve, Esophageal plexus, Ethmoidal nerves, External laryngeal nerve, External nasal nerve, Facial nerve, Femoral nerve, Frontal nerve, Gastric plexuses, Geniculate ganglion, Genital branch of genitofemoral nerve, Genitofemoral nerve, Glossopharyngeal nerve, Greater auricular nerve, Greater occipital nerve, Greater petrosal nerve, Hepatic plexus, Hypoglossal nerve, Iliohypogastric nerve, Ilioinguinal nerve, Inferior alveolar nerve, Inferior anal nerves, Inferior cardiac nerve, Inferior cervical ganglion, Inferior gluteal nerve, Inferior hypogastric plexus, Inferior mesenteric plexus, Inferior palpebral nerve, Infraorbital nerve, Infraorbital plexus, Infratrochlear nerve, Intercostal nerves, Intercostobrachial nerve, Intermediate cutaneous nerve, Internal carotid plexus, Internal laryngeal nerve, Interneuron, Jugular ganglion, Lacrimal nerve, Lateral cord, Lateral cutaneous nerve of forearm, Lateral cutaneous nerve of thigh, Lateral pectoral nerve, Lateral plantar nerve, Lateral pterygoid nerve, Lesser occipital nerve, Lingual nerve, Long ciliary nerves, Long root of the ciliary ganglion, Long thoracic nerve, Lower subscapular nerve, Lumbar nerves, Lumbar plexus, Lumbar splanchnic nerves, Lumboinguinal nerve, Lumbosacral plexus, Lumbosacral trunk, Mandibular nerve, Marginal mandibular branch of facial nerve, Masseteric nerve, Maxillary nerve, Medial cord, Medial cutaneous nerve of arm, Medial cutaneous nerve of forearm, Medial cutaneous nerve, Medial pectoral nerve, Medial plantar nerve, Medial pterygoid nerve, Median nerve, Meissner's plexus, Mental nerve, Middle cardiac nerve, Middle cervical ganglion, Middle meningeal nerve, Motor nerve, Muscular branches of the radial nerve, Musculocutaneous nerve, Mylohyoid nerve, Nasociliary nerve, Nasopalatine nerve, Nerve of pterygoid canal, Nerve to obturator internus, Nerve to quadratus femoris, Nerve to the Piriformis, Nerve to the stapedius, Nerve to the subclavius, Nervus intermedius, Nervus spinosus, Nodose ganglion, Obturator nerve, Oculomotor nerve, Olfactory nerve, Ophthalmic nerve, Optic nerve, Otic ganglion, Ovarian plexus, Palatine nerves, Palmar branch of the median nerve, Palmar branch of ulnar nerve, Pancreatic plexus, Patellar plexus, Pelvic splanchnic nerves, Perforating cutaneous nerve, Perineal branches of posterior femoral cutaneous nerve, Perineal nerve, Petrous ganglion, Pharyngeal branch of vagus nerve, Pharyngeal branches of glossopharyngeal nerve, Pharyngeal nerve, Pharyngeal plexus, Phrenic nerve, Phrenic plexus, Posterior auricular nerve, Posterior branch of spinal nerve, Posterior cord, Posterior cutaneous nerve of arm, Posterior cutaneous nerve of forearm, Posterior cutaneous nerve of thigh, Posterior scrotal nerves, Posterior superior alveolar nerve, Proper palmar digital nerves of median nerve, Prostatic plexus (nervous), Pterygopalatine ganglion, Pudendal nerve, Pudendal plexus, Pulmonary branches of vagus nerve, Radial nerve, Recurrent laryngeal nerve, Renal plexus, Sacral plexus, Sacral splanchnic nerves, Saphenous nerve, Sciatic nerve, Semilunar ganglion, Sensory nerve, Short ciliary nerves, Sphenopalatine nerves, Splenic plexus, Stylohyoid branch of facial nerve, Subcostal nerve, Submandibular ganglion, Suboccipital nerve, Superficial branch of the radial nerve, Superficial fibular nerve, Superior cardiac nerve, Superior cervical ganglion, Superior ganglion of glossopharyngeal nerve, Superior ganglion of vagus nerve, Superior gluteal nerve, Superior hypogastric plexus, Superior labial nerve, Superior laryngeal nerve, Superior lateral cutaneous nerve of arm, Superior mesenteric plexus, Superior rectal plexus, Supraclavicular nerves, Supraorbital nerve, Suprarenal plexus, Suprascapular nerve, Supratrochlear nerve, Sural nerve, Sympathetic trunk, Temporal branches of the facial nerve, Third occipital nerve, Thoracic aortic plexus, Thoracic splanchnic nerves, Thoraco-abdominal nerves, Thoracodorsal nerve, Tibial nerve, Transverse cervical nerve, Trigeminal nerve, Trochlear nerve, Tympanic nerve, Ulnar nerve, Upper subscapular nerve, Uterovaginal plexus, Vagus nerve, Ventral ramus, Vesical nervous plexus, Vestibular nerve, Vestibulocochlear nerve, Zygomatic branches of facial nerve, Zygomatic nerve, Zygomaticofacial nerve, Zygomaticotemporal nerve, Foramen caecum, Optic canal, Superior orbital fissure, Foramen rotundum, Foramen ovale, Foramen spinosum, Foramen lacerum, Carotid canal, Internal acoustic foramen, Jugular foramen, Hypoglossal canal, and Foramen magnum.

Another aspect of the invention pertains to a computer-readable [storage] medium comprising instructions which, when executed by a computer, cause the computer to carry the steps according to any embodiment of the invention.

Another aspect of the invention involves a system for defining of coordinates of landmarks in a volume of medical images, wherein the system comprises a measuring means for collection a computational tomography volume or a magnetic resonance volume, for a human patient, and a computer system adapted to perform the steps of any embodiment of the method of the invention.

In one embodiment, the system according to the invention comprises a computer system that is adapted to perform the steps of a method that includes embodiments with training. This embodiment allows for even faster obtaining of coordinates. In particular, for this embodiment an operator gathering CT or MR images can prepare annotations indicating landmarks at least for a part of said images thereby allowing the method of the invention to learn using said part of images and define coordinates for the rest of images. This also allows the method to be tuned towards particular landmarks since annotations comprise particular landmarks.

Further characteristics and advantages of the invention will be more apparent from the detailed description of non-limiting embodiments and from the appended figures. It should be understood that embodiments presented in the description and in the claims, unless stated otherwise, can be combined together in any order and number to produce new embodiments that form part of the disclosure. The description comprises a great number of references to prior art documents, in particular to scientific journals. The full disclosure of said references is part of this disclosure.

BRIEF DESCRIPTION OF FIGURES

The invention will now be described in more detail with reference to the appended figures.

FIG. 1 depicts application of an embodiment of method of the invention including trained residual U-Net.

FIG. 2 shows a detailed diagram of an embodiment of method of the invention including training steps.

FIG. 3 presents an architecture of a residual U-Net according to an embodiment of a method of the invention.

FIG. 4 presents an architecture of an encoding block according to an embodiment of the invention.

FIG. 5 presents an architecture of an decoding block according to an embodiment of the invention.

FIG. 6 shows a more detailed steps of training of a residual U-Net according to an embodiment of a method of the invention.

FIG. 7 presents exemplary slices from two datasets with coronary ostium annotations. The first row shows examples from the CCTA dataset and the second from the ImageTBAD CTA dataset.

FIG. 8 presents a 3D rendered example from the CCTA dataset showing localization of the left coronary ostium and the right coronary ostium.

FIG. 9 presents a success detection rate (SDR) for landmark localization in the experiments on the CCTA dataset and the ImageTBAD CTA dataset.

DETAILED DESCRIPTION

The forgoing description is focused on embodiments including computational tomography volumes. Magnetic resonance (MR) image volumes can also be used in said embodiments following adaptation of said embodiments.

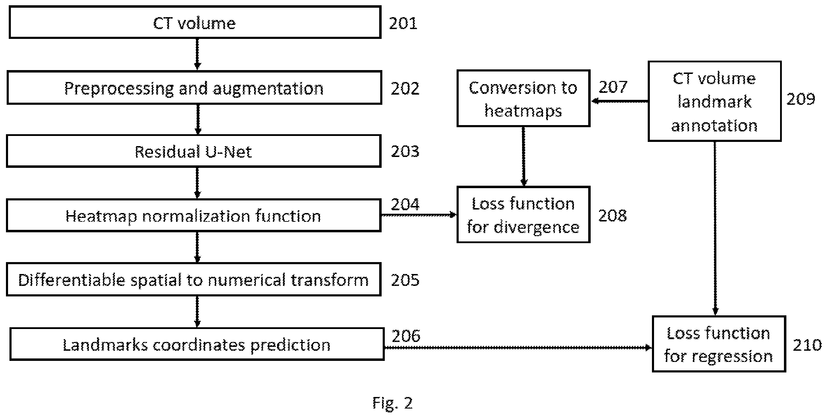

The core of one of embodiment of the invention is deep learning model with 3D Differentiable spatial to numerical transform (DSNT) enhanced with a residual U-Net architecture **103**. In other embodiments that are not claimed herein, residual U-Net architecture can be used without DSNT. To use the model, it first must be trained. Various embodiments of the method including training and details of the architecture are illustrated in FIG. 2, FIG. 3, FIG. 4, FIG. 5 and FIG. 6 and described herein. In one embodiment, output are coronary ostium landmark coordinates **104**. Once the model **103** is trained, in one embodiment, it infers two predictions of coordinates with a sub-voxel precision for a given preprocessed input CT volume. One coordinate prediction for the left coronary ostium and one coordinate prediction for the right coronary ostium. Each coordinate includes three numbers for the sagittal, coronal and axial position, respectively. The use of the invention including a trained model is referred to as the inference phase. Training of the model is referred to as the training phase.

The invention will be presented in detail for coronary ostia landmarks. However, the invention is applicable to other modalities and other landmarks. This requires different datasets to be used and, if needed, preprocessing step or steps. A skilled person will understand that different data preprocessing may be needed for different datasets. The principle of preprocessing, which can be defined as obtaining a dataset easier to use in a particular detection, remains the same. In order to perform localization of a different number of points, $C_{out}$ in a decoding block (310) has to be set to a different number. Thereby, an output (311) will include said different number of landmark predictions. List of landmarks for which detection of coordinates can be made is included in the description and in the appended claims.

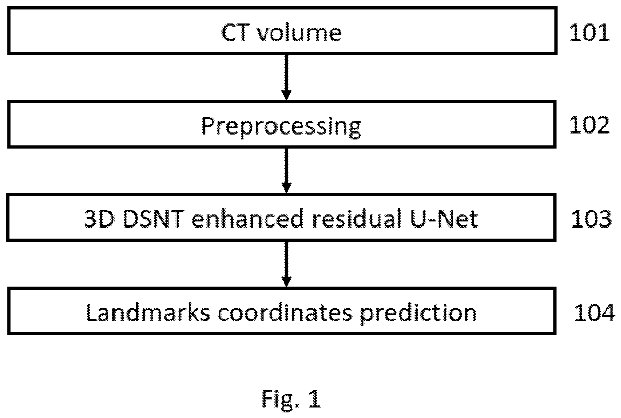

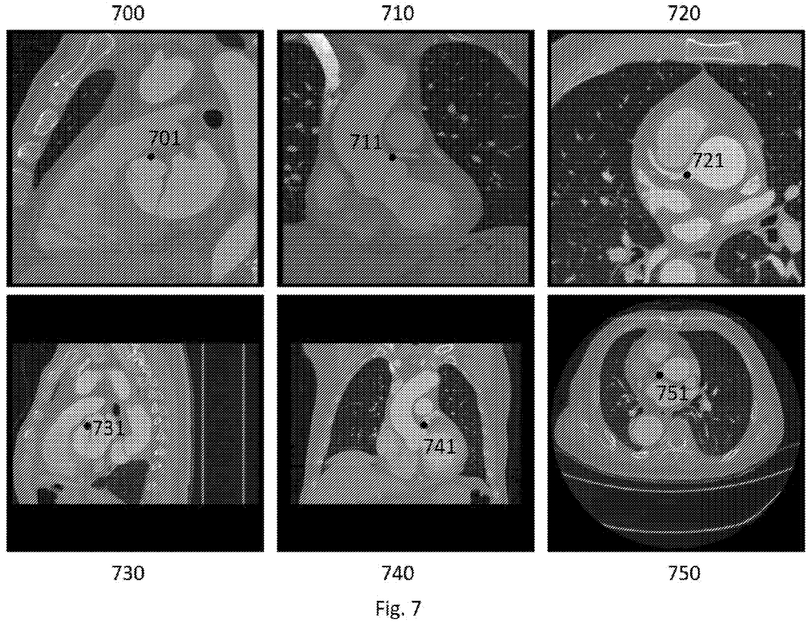

FIG. 1 illustrates application of a method adapted to coronary ostia detection in a CT volume 101 according to the invention comprising a trained residual U-Net. A CT volume is a 3-dimensional gird composed of 3-dimensional pixels named voxels. Each voxel contains the information of relative radiodensity. Voxels are usually displayed according to the mean attenuation of the tissue that it corresponds to in the Hounsfield units (HU). Values range from +3 071 HU to -1 024 HU in the Hounsfield scale. Volumes are expected to be calibrated to water with an attenuation of 0 HU. Typical volumes have 512 voxels in width, 512 voxels in height and z number of voxels in length. The z number of voxels in length depends on the number of slices. For example, the CTA volume in FIG. 7 shown in 730, 740 and 750 images, has 330 slices, and therefore contain 512x512x330 voxels in total having 330 voxels in length. For example, the CCTA volume in FIG. 7 shown in 700, 710 and 720 slices has a voxel size of 0.3281 x 0.3281 x 0.4 mm³.

The input CT volume is preprocessed 102 to remove unnecessary information and to normalize it to make the method less computationally demanding. In the preprocessing step, voxels in the volume are clipped to the range from -300 HU to 1100 HU. That is, every value smaller than -300 HU is set to -300 HU and each value higher than 1100 HU is set to 1100 HU. Next, voxel values are normalized by linearly scaling them to values from 0 to 1. That is, each voxel of -300 HU is set to 0, each voxel of 1100 HU is set to 1, and voxels with values between -300 HU and 1100 HU are set to corresponding values in the scale from 0 to 1. Other normalization techniques can be used. To keep the most information and to resolve memory issues, volumes are downsized in the preprocessing step. In one embodiment, the volume is downsized to a spatial size of 144x144x144 voxel using trilinear interpolation. Other interpolation techniques can be used. In other embodiments, the input CT volume is downsized by 3-4 times, in particular 3.1, 3.2, 3.3, 3.4, 3.5, 3.6, 3.7, 3.8 or 3.9 times. Even though downsizing makes data less detailed and spatially accurate, it was shown that accuracy of results obtained using the method according to the invention did not suffer and even surpassed known methods using local refinement.

FIG. 2 illustrates details of the training phase of the model on a single input volume. A trained model used in the invention does not require 207, 208, 209 and 210 from FIG. 2 and augmentation of a CT volume.

The training phase comprises an input volume x 201. Same input can be used in the inference phase. The training phase, in one embodiment, also comprises inputting coordinates of two coronary ostia y, wherein the coordinates are provided by trained radiologists (CT landmark annotation 209). In the same embodiment, the training phase comprises providing two coronary ostia localizations ŷ (landmarks coordinates prediction 206).

In general, the method combines a heatmap matching regression with extraction of heatmap center coordinates (shown in step 210) by a Differentiable Spatial to Numerical Transform (DSNT) layer shown in step 205.

**Preprocessing and augmentation for training**

Volumes can be preprocessed in the same manner in the training phase and in the inference phase. In one embodiment, preprocessing in the training phase additionally includes augmenting volumes as disclosed in this application. The input volume can be preprocessed and subsequently augmented 202. Voxels can be clipped to the range from -300 HU to 1100 HU. In that embodiment, every value smaller than -300 HU is set to -300 HU and each value higher than 1100 HU is set to 1100 HU. Next, voxel values are normalized by linearly scaling them to values from 0 to 1. That is, each voxel of -300 HU is set to 0, each voxel of 1100 HU is set to 1, and HU values between -300 HU and 1100 HU are set to a corresponding value, for example, in the scale from 0 to 1. Finally, the volume can be resized to a spatial size of 144x144x144 voxels using trilinear interpolation. Other spatial size and other interpolation techniques can be used. In addition to that, the input volume can be augmented with rotations up to $\pi/6$ radians and translations up to 10 voxels in each dimension.

An additional preprocessing step in the form of central cropping can be applied to each volume during training and inference phases for the ImageTBAD CTA dataset. The central cropping may include, in one example, a 112 voxel cut from a volume of size of 512x512xZ voxel on slices along Z-axis to arrive at a volume of 288x288xZ. The central cropping removes unnecessary regions from the volume and keeps the hearth area only.

Heatmap generation

In general, the unnormalized heatmap $H = f_\Theta(x)$ is an output from a model $f_\Theta$ which is parameterized by learnable parameters (also called weights) Θ with an input volume **x.** At step **203,** the $f_\Theta$ model that acts as a backbone feature extracting network in this invention is the residual U-Net [10, 30] that adopts a classic U-Net architecture [21] and combines it with a residual neural network. A residual U-Net of the invention finds heatmaps which can be called features found by said residual U-Net. For avoidance of doubts, $f_\Theta$ represents residual U-Net. Θ are found during training and remain unchanged in application (the inference phase). A skilled person knows that there are many residual U-Net architectures and the difference between them is structure of encoding residual and decoding residual blocks included in said architectures. The structure of said residual blocks influences application of a particular residual U-Net architecture. As the result, a particular structure of residual U-Net architecture can be defined by its purpose. Despite this and in order to provide a full disclosure of the invention, details of embodiments of residual U-Net architecture of the invention are provided in the description and in the claims.

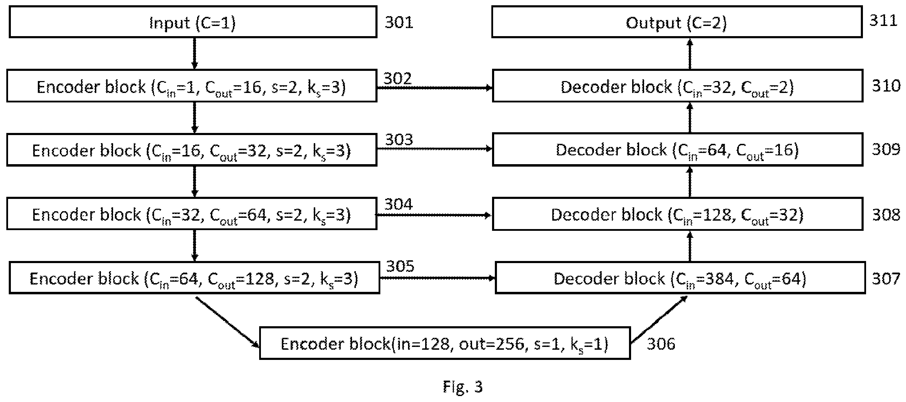

FIG. 3 illustrates the residual U-Net architecture according to an embodiment of the invention. It receives an input volume **301**. The input **301** is passed to a series of encoding residual blocks **(302, 303, 304, 305)** which sequentially decrease the dimensionality and resolution size of the volume until achieving the last encoding residual block **306**. In FIG. 3 encoder block and decoder block are used instead of encoding residual block and decoding residual block, respectively, for brevity.

In embodiments, an encoding residual block receives an input volume with a certain input ($C_{in}$) number of channels and outputs a volume with an output ($C_{out}$) number of channels. It also decreases the size of a volume depending on the value of stride (*s*). When stride equals, for example, two, the output volume decreases its size by two. When stride equals one, the volume does not decrease its size. Usually, all convolution kernels in the encoding convolution layers of the encoding residual block have dimension of 3x3x3, and it is denoted as $k_s = 3$. $k_s=1$, as in the encoding residual block **306,** means that the kernels dimension of the encoding convolution layer in the mapping function in the encoding residual block is of size 1x1x1. Encoding residual blocks are also connected to corresponding decoding residual blocks **(307, 308, 309, 310)** to share information which would be otherwise be lost during the decrease of spatial size. Sharing should be understood as making a copy of the information. In other words, each encoding residual block that is connected to another encoding residual block outputs the same information twice and one copy is transferred to another encoding residual block and one copy is transferred to a corresponding decoding residual block.

Each volume contains X, Y, Z and C dimensions. X, Y, Z are called spatial or shape dimensions. C is the number of channels. A volume in the architecture of the residual U-Net, according to an embodiment, is transferred as described below: Input volume **301** with 1 channel (grayscale Hounsfield scale) goes to the encoding block **302** and produces volume with 16 channels and half the size in shape (stride = 2). Copies of the signal follow to encoding block **303** and decoding block **310**. Encoding block **303** produces volume with 32 channels downsampled by a factor of two (stride = 2). Copies of the signal follow to encoding block **304** and decoding block **309**. Encoding block **304** produces volume with 64 channels downsampled by a factor of two (stride = 2). Copies of the signal follow to encoding block **305** and decoding block **308**. Encoding block **305** produces volume with 128 channels downsampled by a factor of two (stride = 2). Copies of the signal follow to encoding block **306** and decoding block **307**. Encoding block **305** produces volume with 128 channels and does not change the volume size as opposed to other encoding blocks (stride = 1). The output from **306** goes to the decoding block **307**. The decoding block **307** concatenates signal from encoding blocks **305** and **306** resulting in a volume with 384 channels on its input. The decoding block **307** produces volume with 64 channels upsampled by a factor of two. The output from **307** goes to the decoding block **308**. The decoding block **308** concatenates signal from encoding blocks **304** and **307** resulting in a volume with 128 channels on its input. The decoding block **308** produces volume with 32 channels upsampled by a factor of two. The output from the decoding block **308** goes to the decoding block **309**. The decoding block **309** concatenates signal from encoding block **303** and **308** resulting in a volume with 64 channels on its input. The decoding block **309** produces volume with 16 channels upsampled by a factor of two. The output from the decoding block **309** goes to the decoding block **310**. The decoding block **310** concatenates signal from the encoding block **302** and **309** resulting in a volume with 32 channels on its input. The decoding block **310** produces volume with 2 channels upsampled by a factor of two. The last step in architecture is the output volume **311** of the same spatial size as the input volume **301** but with two channels. In embodiments, each channel corresponds to the estimated probability of a landmark localization. One for the probability of the left coronary ostium localization, one for the probability of the right coronary ostium localization. In other embodiments, number of channels, downsampling factor, upsampling factor and/or stride values can be different.

Each residual block, both encoding and decoding, can be defined as follows:

$$\mathbf{y}_l = \mathrm{h}(\mathbf{x}_l) + \mathcal{F}(\mathbf{x}_l, \mathbf{W}_l),$$

$$\mathbf{x}_{l+1} = f(\mathbf{y}_l), (1)$$

where $\mathbf{x}_l$ and $\mathbf{x}_{l+1}$ are the input and output of the *l*-th residual unit, $\mathcal{F}(\cdot)$ is a residual function, $f(y_1)$ is an activation function

and h($\mathbf{x}_l$) is usually an identity mapping function. The residual function $\mathcal{F}(\cdot)$ depends on the residual block structure. For each encoding block it is defined as a product of: **402, 403, 404, 405, 406, 407.** For each decoding block it is defined as a product of: **506, 507, 508.**

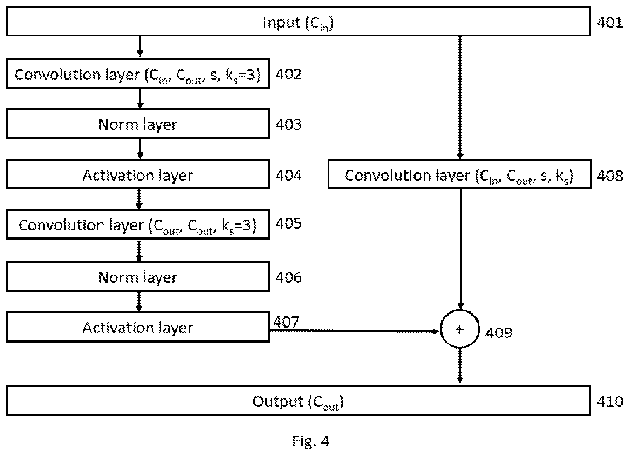

FIG. 4 illustrates architecture of an encoding residual block according to an embodiment of the invention. Each encoding residual block comprises encoding layers. For brevity, the word "encoding" is omitted on the figure. A volume which enters an encoding residual block can be called an encoding residual block input. An encoding residual block receives an input volume **401** with a certain input ($C_{in}$) number of channels and outputs a volume with an output ($C_{out}$) number of channels **410**. **402** is the first encoding convolution layer and **405** is the second encoding convolution layer in the residual function $\mathcal{F}(\cdot)$ of an encoding residual block. At **408** a mapping function h($x_l$) = $conv$($x_l$, **K**, $C_{in}$, $C_{out}$, s) which consists of a single encoding convolution layer is applied.

For an encoding residual block according to an embodiment of the invention, h($\mathbf{x}_l$) = $conv$($\mathbf{x}_l$, **K,** $C_{in}$, $C_{out}$, s) and it is defined as follows:

$$conv(\mathbf{x}_l, \mathbf{K}, C_{in}, C_{out}, s) \ = \ \sum_{c=0}^{C_{in}-1} (\mathbf{K}_{C_{out},c} \ \star \ \mathbf{x}_{l_c}),$$

where * is either the 3D cross-correlation operator or a strided version of it. $C_{in}$ is the number of input channels, $C_{out}$ is the number of output channels. **K** is a set of learnable weights in the form of convolution kernels and s is the stride value. The 3D cross-correlation is defined as follows:

$$\mathbf{K} \star \mathbf{I}(x, y, z) \ = \ \sum_{i=-N}^{N} \sum_{j=-N}^{N} \sum_{l=-N}^{N} \mathbf{K}(i, j, l) \times \ \mathbf{I}(x + i, y + j, z + l),$$

Where **K** is a kernel, defined as a 3D matrix of size $N \times N \times N$, and $I(x,y,z)$ is a voxel of an example input volume **I** of coordinates $x,y,z$. The strided version of the 3D cross-correlation is defines as:

$$\mathbf{K} \star_s \mathbf{I} = \sum_{p=1}^{s} \sum_{q=1}^{s} \sum_{r=1}^{s} \mathbf{K}_{p,q,r} \star \mathbf{I}_{p,q,r},$$

where **K** is a kernel, defined as a 3D matrix, **I** is an example input volume, and s is the stride.

A first encoding convolution layer **402** and a subsequent encoding convolution layer **408** increase the number of channels from $C_{in}$ to $C_{out}$, while a second encoding convolution layer **405** does not change the number of channels and for it $C_{in} = C_{out}$. The first encoding convolution layer **402** as well as the subsequent encoding convolution layer **408** use the strided 3D cross-correlation operator, while the second encoding convolution layer **405** does not use stride (i.e., stride is equal one). The first encoding convolution layer **402** and the second encoding convolution layer **405** have kernel size $k_s$=3 which means that the kernel size is of dimension 3x3x3. The subsequent encoding convolution layer **408** has a kernel size $k_s$ which equals three for encoding residual blocks **302, 303, 304, 305** and equals one for the encoding residual block 306.

Encoding convolution layers **402** and **405** are followed by encoding norm layers **403** and **406,** respectively. Examples of encoding norm layers include batch normalization [33], instance normalization [36], layer normalization [37], group normalization [35] etc. In one embodiment a 3D Batch Normalization [33] is used. It is defined as follows:

$$\mathbf{y} = \frac{\mathbf{x} - E[\mathbf{x}]}{\sqrt{Var[\mathbf{x}] + \epsilon}} \cdot \gamma \ + \ \beta,$$

where x is the input, and y output of the encoding norm layer. $\gamma$ and $\beta$ are learnable parameters and $\varepsilon$ is a small constant value added to the denominator for numerical stability.

Encoding norm layers **403** and **406** are followed by encoding activation layers including activation functions **404** and **407,** respectively. Examples of activation functions include tanh, Rectified Linear Unit (ReLU), Parametric Rectified Linear Unit (PReLU) etc. In one embodiment, a PReLU is used. It is defined as follows:

$$f(\mathbf{y}_i) = \mathbf{y}_i \text{ if } \mathbf{y}_i \geq 0,$$

$$f(\mathbf{y}_i) = \alpha_i \mathbf{y}_i \text{ if } \mathbf{y}_i < 0$$

where $y_i$ is the *i*-th element of the input volume y, and *a* is a learnable parameter.

The output from **407** and **408** are merged with an element-wise addition function, which is defined as a regular matrix addition **409** and result in the output volume **410** of a shape $C_{out}$.

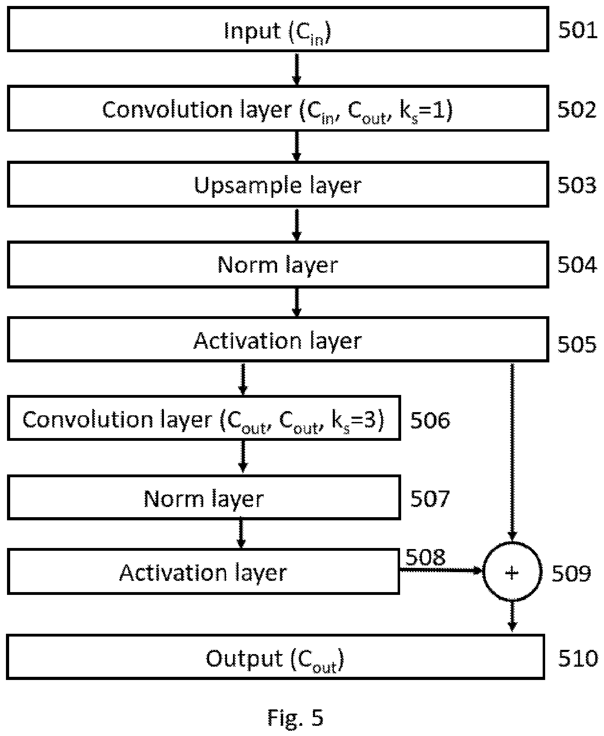

FIG. 5 illustrates architecture of a decoding residual block of an embodiment of the invention. Each decoding residual block comprises decoding layers. For brevity, the word "decoding" is omitted on the figure. A volume which enters a decoding residual block can be called a decoding residual block input. A decoding residual block receives an input volume **501** with a certain input ($C_{in}$) number of channels and outputs a volume with an output ($C_{out}$) number of channels **510**. First, the input volume goes to **502,** which is a first decoding convolution layer as defined for **402, 405,** or **408**. It decreases the number of channels from $C_{in}$ to $C_{out}$. It uses unstrided 3D cross-correlation operator. The decoding convolution layer **502** uses a constant kernel size $k_s$=1 of size 1 x 1 x 1. **503** upsamples the volume spatially by the factor of two using nearest neighbor interpolation. **504** applies a decoding norm layer, here a 3D Batch Normalization as defined for **403** or **406**. **505** is a first decoding activation layer, here a PReLU as defined for **404** or **407**. **506** is a second decoding convolution layer in the residual function of the residual decoding block. It is defined as in **402, 405** and **408**. It keeps the same number of channels $C_{out}$. The second decoding convolution layer **506** uses a constant kernel size $k_s$=3 of size 3 x 3 x 3. It is followed by a second decoding norm layer **507,** here a 3D Batch Normalization as defined for **403** or **406**. The second decoding norm layer **507** is followed by a second decoding activation layer **508,** here a PReLU as defined for **404** or **407**. The output from **505** and **508** are merged with an element-wise addition function, which is defined as a regular matrix addition **509** and result in the output volume **510** of a shape $C_{out}$. For a decoding residual block, the mapping function has the form of $h(x_l) = x_l$ and is a connection between **505** and **509** of Fig. 5.

The learnable parameters, which are parameters changed during the training phase, are: kernel weights **K** for the convolutional layers, parameters $\gamma$ and $\beta$ in the Batch normalization layers and parameter *a* in the activation layers.

## Heatmap normalization function

Fig. 2. 204. A normalization function $\varphi(\cdot)$ is a rectification operation followed by the $L^1$ normalization. A one-channel heatmap **H** output from the residual U-Net is normalized by the normalization function to produced normalized one-channel heatmap **Ĥ**. **Ĥ** is outputted to **208** and to **205**.

## 3D DSNT

FIG. 2. The 3D Differentiable Spatial to Numerical Transform (3D DSNT) [16] **205** is a fully differentiable and a non-trainable layer. Due to this fact, numerical coordinates can be obtained during training and can be used as a learning criterion since back-propagation does pass via the 3D DSNT.

We define the 3D extension of the DSNT as follows:

$$\text{DSNT}(\hat{\mathbf{H}}) = \left[\langle\hat{\mathbf{H}}, \mathbf{X}\rangle_F, \langle\hat{\mathbf{H}}, \mathbf{Y}\rangle_F, \langle\hat{\mathbf{H}}, \mathbf{Z}\rangle_F\right], \qquad (2)$$

where $\hat{\mathbf{H}} = \varphi(\mathbf{H})$, and $\hat{\mathbf{H}}$ is a one-channel heatmap **H** output from the residual U-Net normalized by a normalization function (step **204**). $<\cdot, \cdot>_F$ represents a Frobenius inner product of two matrices. The two matrices are selected from $\hat{\mathbf{H}}$, **X, Y** and **Z**.

**X, Y** and **Z** are grids in the form of $m \times n \times l$ matrices used to calculate expected values of a landmark's coordinate and are defined as:

$$\mathbf{X}_{i,j,k} = \frac{2j-(n+1)}{n}, \mathbf{Y}_{i,j,k} = \frac{2i-(m+1)}{m}, \mathbf{Z}_{i,j,k} = \frac{2k-(l+1)}{l}, \qquad (3)$$

Each entry of **X, Y** and **Z** contains its own coordinates, scaled such that the top-left-upper corner of the volume is at (-1,-1,-1) and bottom-right-down is at (1,1,1).

## Loss functions

Coronary ostia localization manually annotated by trained radiologists are provided in step **209**. The conversion from coronary ostia localizations manually annotated to annotated heatmaps is done in step **207**. This can be done assuming a normal distribution of coronary ostia localizations on heatmaps.

In **208,** minimalization of the divergence between **Ĥ** and an annotated heatmap is done. This can be done using a Jensen-Shannon divergence regularization $\mathcal{L}_D$ as a term to calculate and by performing minimization of the divergence between **Ĥ** and an appropriate target normal distribution $\mathcal{N}(y, \sigma^2)$ with $\sigma$ being a hyper-parameter that controls the spread of the desired distribution.

In **210,** minimalization of the Euclidean distance between coronary ostia localizations manually annotated and coronary ostia localizations provided by 3D DSNT is done. We can utilize the popular Euclidean metric $\mathcal{L}_E$ between the network output $\hat{\mathbf{y}}$ = DSNT($\hat{\mathbf{H}}$) and the ground-truth y. It has been shown [16] that forcing the network to produce heatmaps with normal distribution of probability (e.g., gaussian-like) improves the quality of the overall prediction.

The complete loss is defined as a linear combination of loss function for divergence **(208)** and loss function for regression **(210)** can be defined as:

$$\mathcal{L}\big(\hat{\mathbf{H}}, \mathbf{y}\big) = \mathcal{L}_E\big(\text{DSNT}(\hat{\mathbf{H}}), \mathbf{y}\big) + \lambda \mathcal{L}_D\big(\hat{\mathbf{H}}, \mathbf{y}\big) = \mathcal{L}_E(\hat{\mathbf{y}}, \mathbf{y}) + \lambda \mathcal{L}_D\big(\hat{\mathbf{H}}, \mathbf{y}\big), \quad (4)$$

where $\lambda$ is a regularization coefficient hyperparameter controlling the strength of the regularization.

The Euclidean loss LE (can be used in **210**) can be defined as:

$$\mathcal{L}_E(\hat{\mathbf{y}}, \mathbf{y}) = \|\hat{\mathbf{y}} - \mathbf{y}\|_2, \quad (5)$$

and the Jensen-Shannon divergence regularization LD (can be used in 208) can be defined as:

$$\mathcal{L}_D\big(\hat{\mathbf{H}}, \mathbf{y}\big) = D_{JS}\big(\hat{\mathbf{H}} || \mathcal{N}(\mathbf{y}, \sigma^2)\big), \quad (6)$$

where $D_{JS}(\cdot \| \cdot)$ is the Jensen-Shannon divergence [11].

**Training procedure**

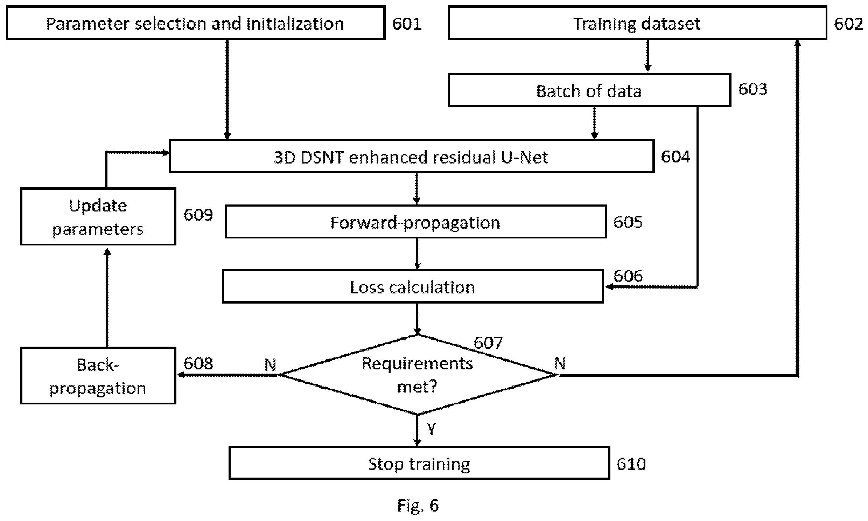

FIG. 6 illustrates an exemplary training procedure of the method with more details. Step **602** requires a training dataset, which can be a dataset requiring landmark prediction. The training dataset can be the same dataset which requires landmark detection. In embodiments, CCTA or CTA datasets are used. The training dataset is split into training and validation data splits. The training dataset split is used to train the model weights, while the validation data split is used to validate the model performance after each epoch of training. An epoch includes one iteration over all volumes in the training data split.

For the CCTA dataset a cross-validation with 3-folds can be used. This gives 104 volumes in the train data split and 53 in the validation data split per fold. For the Image TBAD dataset, a cross-validation with 4-folds can be used to produce 58 volumes in the train data split and 19 in the validation data split per fold. Each volume x in the dataset has a corresponding landmark annotation y.

At step **601** a set of training parameters (weights) is initialized, and training parameters are selected. There are two sets of parameters: trainable parameters and parameters of training (hyperparameters). The deep learning model weights **W** comprises all trainable parameters. That is W comprises of kernel weights K in convolutional layers, parameters $\gamma$ and $\beta$ in batch normalization layers, and parameter *a* in PReLU activation layers. In one embodiment, model weights are initialized as follows: kernel weights **K** for the convolutional layers are initialized by sampling from the Kaiming Uniform Distribution as described in [32]. Parameters $\gamma$ and $\beta$ in the Batch normalization layers are set to ones and zeros, respectively. Parameter *a* in the PReLU activation layers is initialized to 0.25. These weights are used as initialization weights in step 601 and are updated after each iteration during the training phase.

We can use the following training parameters: 1) The number of epochs, which is the maximum number of epochs used in the training phase. For example, it can be set to 1 000 epochs. 2) A training batch size value, which is the number of training volumes in one iteration of training, is usually limited be the GPU memory on which the training takes place. It can be set to four. That is four volumes are concatenated and passed through the network in a single iteration of training. Other values can be used. 3) A learning rate, which controls the strength of the weights update, is a scalar which is multiplied by the weight's derivative during training. It can be set to 0.00025. 4) A hyperparameter of choice can be an optimization algorithm. The Adam optimization algorithm as defined in [34] can be used as a hyperparameter. 5) Next, a hyperparameter is used as the evaluation metric. This hyperparameter is defined to monitor the model quality and is used for evaluation after each epoch. In one embodiment, we define said hyperparameter as the localization accuracy on the validation data split. 6) Stopping criterion is a hyperparameter used for early stopping of the training phase. In one embodiment, it is defined as reaching the max number of epochs, which can be 1 000. Other number can be used. 7) Finally, a hyperparameter specific to the invention's architecture is parameter $\sigma$ which controls the spread of distribution of localization annotation in the divergence loss and a regularization rate parameter $\lambda$ which controls the strength of the divergence loss effect. In one embodiment, parameters are set to $\sigma$ = 3 and $\lambda$ = 1.

A 3D DSNT enhanced with a residual U-Net of **604** (deep learning model) and **103** includes the residual U-Net **203**, Heatmap normalization function **204,** and the 3D DSNT **205.** In each iteration it receives a batch of data **603** from the training data split **602** which comprises training CT input volumes **201** and corresponding CT landmark annotations **209**. The deep learning model **604** infers predictions from the batch of data **603** using the current values of weights in the Forward-propagation step **605**. These predictions are then used in the loss calculation step **606** together with corresponding data annotations of the batch of data **603**. The loss calculation step **606** comprises the loss function for divergence from step **208** and the loss function for regression from step **210**. As shown in step **207,** a CT landmark annotation 209 has to be converted into a heatmap in order to calculate the divergence loss **208**.

Once the loss is calculated, after each epoch, the model of the invention infers a prediction for the entire data validation split. The decision to continue training is made in step **607** after each epoch. If the requirements are not met, a back-propagation step **608** is performed to calculate weights gradient with respect to the calculated loss **606** using, for example, the chain rule. Specifically, given the complete loss function L = $\mathcal{L}(\hat{\mathbf{H}}, \mathbf{y})$ **606** for the current training iteration, a gradient is calculated for each deep learning trainable parameter weight $\mathbf{W_i}$, where $\mathbf{W_i}$ is the i-th trainable parameter. If the model has $m$ trainable parameters, the gradient of the loss function is defined as follows:

$$\frac{\partial L}{\partial W} = \left[\frac{\partial L}{\partial W_1}, \frac{\partial L}{\partial W_2}, \cdots, \frac{\partial L}{\partial W_m}\right].$$

In one embodiment, a stochastic gradient-descent version of the back-propagation is used over the training batch. The gradients show how much the parameter $\mathbf{W_i}$ needs to be changed in a positive or a negative direction to minimize the loss $L$ **606**.

Weights are updated according to the loss gradient from **608** according to the optimizer and its learning rate in **609**. An optimizer is an algorithm that modifies the attributes of the neural network, such as weights and learning rate. Thus, it helps in reducing the overall loss and improve the accuracy. In one embodiment the Adam optimization algorithm is used as defined in [34].

The batch of data **603** for the next iteration is updated with new volumes and annotations from the training data **603** in each iteration.

The training continues, batch after batch in each iteration over all epochs, until the requirements **607** are met.

If the requirements in step **607** are met, the training procedure stops in step **610** and the model weights are trained and ready to be used in the 3D DSNT enhanced residual U-Net in the inference phase as illustrated in FIG. 1.


**Datasets**


**CCTA dataset**

The CCTA dataset comprises of 157 CCTA volumes gathered from eight different medical centers. It comprises of 67 volumes of female and 90 volumes of male patients who are in average 69.7±11.1 years old. Images were acquired from six kinds of scanners: Siemens SOMATOM Force, Siemens SOMATOM Definition Flash, Siemens Sensation Cardiac 64, Canon Medical Systems Aquilion ONE, GE Medical Systems Discovery CT750 HD, and GE Medical Systems Optima CT660. Volumes have a size of 512×512×(130 - 420), with spacing 0.4 -0.6 mm and a typical voxel size of 0.25 mm. Landmarks include the position of the left and the right coronary ostium and are manually annotated by trained radiologists.


**ImageTBAD CTA dataset**

The ImageTBAD CTA dataset [29] is a computed tomography angiography (CTA) image dataset of Type-B Aortic Dissection. The dataset comprises of 100 CTA images gathered from Guangdong Provincial Peoples' Hospital, China. It comprises of 31 volumes of female and 69 volumes of male patients who were in average 52.5±11.3 years old. Images were acquired from two kinds of scanners: Siemens SOMATOM Force, and Philips 256-slice Brilliance iCT system. Volumes have a size of 512×512×(135 -416), with spacing of 0.75 mm and a typical voxel size of 0.25 mm. The dataset comprises of Type-B aortic dissection segmentation annotations and was extended for the purpose of this invention by trained radiologists. Identically to the CCTA dataset, landmarks include the position of the left and the right coronary ostium and were manually annotated by trained radiologists. During the annotation 23 volumes were discarded due to the insufficient data quality and reconstruction artefacts in the ostium neighborhood resulting in 77 volumes with ostia annotations. The inventors shared these annotations with the public for further use.

**Comparison with known methods**

The method according to the invention was compared with three popular regression methods using the two datasets described above. For a reliable comparison of all methods, the popular regression methods used in comparison comprised the same residual U-Net backbone as is used in the invention. The three popular regression methods were CNN (which consist of U-Net encoding part) + FC for coordinates regression, Residual U-Net + FC for coordinates regression, and Residual U-Net Heatmap regression with argmax. We used standard evaluation criteria [as disclosed in 17] to compare the methods on the task of landmark detection. The standard evaluation criteria comprised the Euclidean distance (EUC) with its median, mean, standard deviation (STD), interquartile range (IQR) and Success Detection Rate (SDR). SDR is defined as the percentage of predicted landmarks which have the Euclidean distance to the reference landmark below the given threshold.

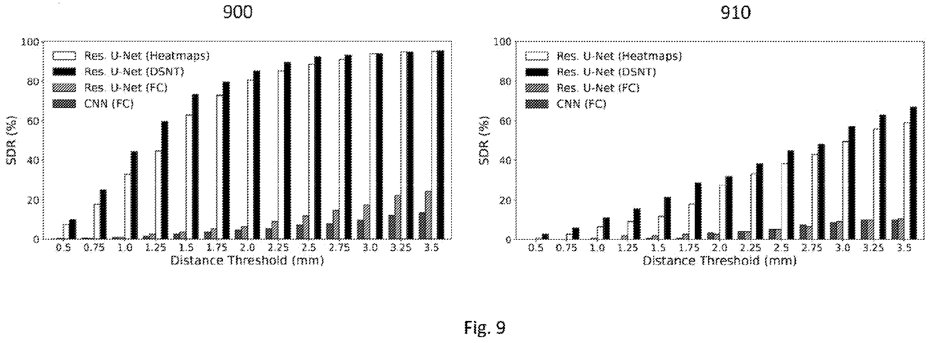

Table 1 shows a comparison between the method according to the invention and the three popular methods. The SDR histogram plots are shown in FIG. 9. The trend is similar for both datasets. Architectures, which use fully connected (FC) layer at the end of a backbone performed poorly in comparison. This proves that for the task of ostia regression, or landmark regression in particular, utilizing heatmap generation is beneficial over exact coordinate regression. In general, the use of argmax over heatmaps and the use of DSNT according to the invention performed much better. The method with DSNT achieved a median Euclidean distance error of 1.11 mm and 1.05 mm and a mean Euclidean distance error of 1.32 $\pm$ 0.94 mm and 1.48 $\pm$ 1.66 mm and IQR of 0.76 mm and 0.79 mm on the left and right ostium, respectively, on all 157 scans by applying a 3-fold cross validation. Among all 314 landmarks (157 scans with two annotated landmarks), only 14 had a higher EUC error than 3.5 mm which equates to 95.5% SDR. For the clinically accepted SDR range of 3.5mm, the invention outperforms other methods for both datasets by achieving 95.5% and 65% accuracy on the CCTA and ImageTBAD CTA datasets, respectively.

Table 1: Euclidean distance error (mm). Comparison between the method of the invention and the three popular methods.

| Model | Landmarks | CCTA dataset | | | | ImageTBAD CTA dataset | | | |
|---|---|---|---|---|---|---|---|---|---|
| | | Median | Mean | Std | IQR | Median | Mean | Std | IQR |
| CNN (FC) | Left CA ostium | 6.45 | 6.56 | 2.65 | 3.65 | 8.33 | 9.20 | 4.70 | 6.09 |
| | Right CA ostium | 6.58 | 7.2 | 4.36 | 4.58 | 10.03 | 11.05 | 6.20 | 8.16 |
| Residual U-Net (FC) | Left CA ostium | 4.85 | 5.23 | 2.40 | 2.97 | 9.07 | 9.16 | 4.87 | 5.45 |
| | Right CA ostium | 5.25 | 6.13 | 3.72 | 4.58 | 8.79 | 10.02 | 5.55 | 7.61 |
| Residual U-Net (Heatmaps) | Left CA ostium | 1.37 | 1.49 | 0.86 | 0.92 | 3.15 | 3.44 | 1.86 | 1.94 |
| | Right CA ostium | 1.29 | 1.65 | 1.67 | 0.90 | 2.82 | 3.16 | 1.78 | 2.23 |
| Residual U-Net (DSNT) | Left CA ostium | 1.11 | 1.32 | 0.93 | 0.76 | 2.66 | 3.19 | 2.06 | 2.40 |
| | Right CA ostium | 1.05 | 1.48 | 1.66 | 0.79 | 2.82 | 3.09 | 2.12 | 2.36 |

**Ablation study**

The effect of $\sigma$ in the Jensen-Shannon divergence regularization $\mathcal{L}_D$ which controls the desired heatmap spread over the volume on the CCTA dataset was evaluated. See Table 2 for the results of evaluation. If $\sigma$ is too large, or too small, heatmaps are forced to be shaped to unnatural sizes. These results in heatmaps having too much or too little context and that affected the accuracy of prediction of ostium position. In the preferred embodiment, for $\sigma$ = 3 the best results were achieved.

Table 2: Euclidean distance error (mm). Ablation study of standard deviation parameter in heatmap generation from the ground truth for the CCTA dataset.

The method according to the invention outperforms other methods, achieving mean Euclidean distance error of 1.32 $\pm$ 0.94 mm and 1.48$\pm$1.66 mm on left and right ostium respectively on the CCTA dataset and mean Euclidean distance error of 3.19 $\pm$2.06 mm and 3.09 $\pm$2.12 mm on left and right ostium respectively on the ImageTBAD CTA dataset. For the clinically accepted SDR range of 3.5mm, the inventive method achieves 95.5% accuracy on the CCTA dataset and 65% accuracy on the ImageTBAD CTA dataset.

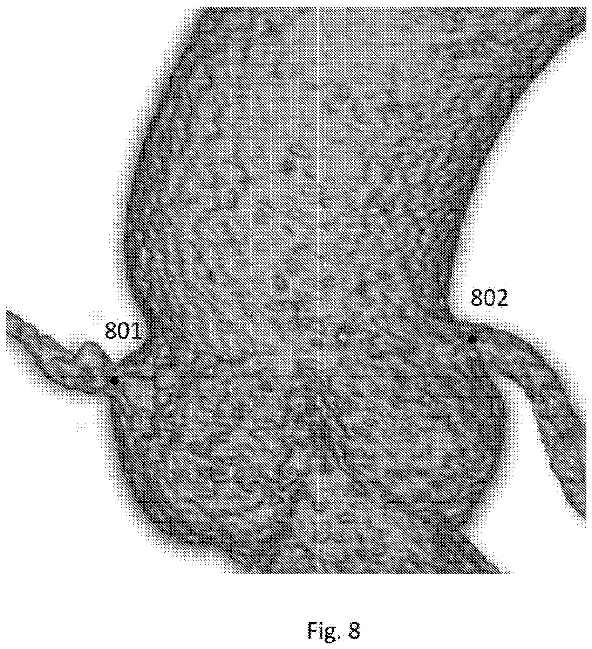

FIG. 8 illustrates a 3D rendering of a CCTA volume with left coronary ostium 801 and right coronary ostium **802.** The invention was tested and evaluated on a CCTA dataset with 157 volumes and a CTA dataset with 77 volumes. FIG. 7 illustrates slices from two exemplary volumes from these datasets. Images **700, 710** and **720** are exemplary slices from the CCTA dataset in the sagittal, coronal and axial view, respectively. Points **701, 711** and **712** show position of a left coronary ostium. Images **730, 740** and **750** are exemplary slices from the CCTA dataset in the sagittal, coronal and axial view, respectively. Points **731, 741** and **752** show position of a left coronary ostium.

Table 2:

| Model | Landmark | Median [mm] | Mean [mm] | Std [mm] | IQR |
|---|---|---|---|---|---|
| $\sigma$=1 | Left CA ostium | 1.01 | 1.50 | 2.14 | 0.84 |
| | Right CA ostium | 1.16 | 1.68 | 2.56 | 0.9 |
| $\sigma$=2 | Left CA ostium | 1.15 | 1.32 | 0.98 | 0.87 |
| | Right CA ostium | 0.96 | 1.54 | 2.6 | 0.86 |
| $\sigma$=3 | Left CA ostium | 1.11 | 1.32 | 0.93 | 0.76 |
| | Right CA ostium | 1.05 | 1.48 | 1.66 | 0.79 |
| $\sigma$=4 | Left CA ostium | 1.36 | 1.65 | 1.21 | 1.15 |
| | Right CA ostium | 1.07 | 1.67 | 2.07 | 0.95 |
| $\sigma$=5 | Left CA ostium | 1.72 | 1.87 | 1.13 | 1.33 |
| | Right CA ostium | 1.20 | 1.69 | 1.77 | 1.08 |

## References

[1] Al, W.A., Jung, H.Y., Yun, I.D., Jang, Y., Park, H.B., Chang, H.J.: Automatic aortic valve landmark localization in coronary ct angiography using colonial walk. PloS one 13(7), e0200317 (2018). [2] Dabbah, M.A., Murphy, S., Pello, H., Courbon, R., Beveridge, E., Wiseman, S., Wyeth, D., Poole, I.: Detection and location of 127 anatomical landmarks in diverse ct datasets. In: Medical Imaging 2014: Image Processing. vol. 9034, p. 903415. International Society for Optics and Photonics (2014). [3] Donner, R., Menze, B.H., Bischof, H., Langs, G.: Global localization of 3d anatomical structures by pre-filtered hough forests and discrete optimization. Medical image analysis 17(8), 1304-1314 (2013). [4] Elattar, M., Wiegerinck, E., van Kesteren, F., Dubois, L., Planken, N., Vanbavel, E., Baan, J., Marquering, H.: Automatic aortic root landmark detection in cta images for preprocedural planning of transcatheter aortic valve implantation. The international journal of cardiovascular imaging 32(3), 501-511 (2016). [5] Gao, Y., Shen, D.: Collaborative regression-based anatomical landmark detection. Physics in Medicine & Biology 60(24), 9377 (2015). [6] Han, D., Gao, Y., Wu, G., Yap, P.T., Shen, D.: Robust anatomical landmark detection for mr brain image registration. In: International Conference on Medical Image Computing and Computer-Assisted Intervention. pp. 186-193. Springer (2014). [7] Ibragimov, B., Likar, B., Pernus, F., Vrtovec, T.: Computerized cephalometry by game theory with shape-and appearance-based landmark refinement. In: Proceedings of International Symposium on Biomedical imaging (ISBI) (2015). [8] Ionasec, R.I., Georgescu, B., Gassner, E., Vogt, S., Kutter, O., Scheuering, M., Navab, N., Comaniciu, D.: Dynamic model-driven quantitative and visual evaluation of the aortic valve from 4d ct. In: International Conference on Medical Image Computing and Computer-Assisted Intervention. pp. 686-694. Springer (2008). [9] Jaderberg, M., Simonyan, K., Zisserman, A., et al.: Spatial transformer networks. Advances in neural information processing systems 28, 2017-2025 (2015). [10] Khanna, A., Londhe, N.D., Gupta, S., Semwal, A.: A deep residual u-net convolutional neural network for automated lung segmentation in computed tomography images. Biocybernetics and Biomedical Engineering 40(3), 1314-1327 (2020). [11] Lin, J.: Divergence measures based on the shannon entropy. IEEE Transactions on Information theory 37(1), 145-151 (1991). [12] Lu, X., Jolly, M.P.: Discriminative context modeling using auxiliary markers for lv landmark detection from a single mr image. In: International Workshop on Statistical Atlases and Computational Models of the Heart. pp. 105-114. Springer (2012). [13] Mahapatra, D.: Landmark detection in cardiac mri using learned local image statistics. In: International Workshop on Statistical Atlases and Computational Models of the Heart. pp. 115-124. Springer (2012). [14] Mostafa, A., Ghanem, A.M., El-Shatoury, M., Basha, T.: Improved centerline extraction in fully automated coronary ostium localization and centerline extraction framework using deep learning. In: 2021 43rd Annual International Conference of the IEEE Engineering in Medicine Biology Society (EMBC). pp. 3846-3849 (2021). [15] Newell, A., Yang, K., Deng, J.: Stacked hourglass networks for human pose estimation. In: European conference on computer vision. pp. 483-499. Springer (2016). [16] Nibali, A., He, Z., Morgan, S., Prendergast, L.: Numerical coordinate regression with convolutional neural networks. arXiv preprint arXiv:1801.07372 (2018). [17] Noothout, J.M., De Vos, B.D., Wolterink, J.M., Postma, E.M., Smeets, P.A., Takx, R.A., Leiner, T., Viergever, M.A., Išgum, I.: Deep learning-based regression and classification for automatic landmark localization in medical images. IEEE transactions on medical imaging 39(12), 4011-4022 (2020). [18] Noothout, J.M., de Vos, B.D., Wolterink, J.M.. Leiner, T., Išgum, I.: Cnn-based landmark detection in cardiac cta scans. arXiv preprint arXiv: 1804.04963 (2018). [19] Oktay, O., Bai, W., Guerrero, R., Rajchl, M., de Marvao, A., O'Regan, D.P., Cook, S.A., Heinrich, M.P., Glocker, B., Rueckert, D.: Stratified decision forests for accurate anatomical landmark localization in cardiac images. IEEE transactions on medical imaging 36(1), 332-342 (2016). [20] Payer, C., Štern, D., Bischof, H., Urschler, M.: Integrating spatial configuration into heatmap regression based cnns for landmark localization. Medical image analysis 54, 207-219 (2019). [21] Ronneberger, O., Fischer, P., Brox, T.: U-net: Convolutional networks for biomedical image segmentation. In: International Conference on Medical image computing and computer-assisted intervention. pp. 234-241. Springer (2015). [22] Štern, D., Ebner, T., Urschler, M.: From local to global random regression forests: exploring anatomical landmark localization. In: International Conference on Medical Image Computing and Computer-Assisted Intervention. pp. 221-229. Springer (2016). [23] Tompson, J.J., Jain, A., LeCun, Y., Bregler, C.: Joint training of a convolutional network and a graphical model for human pose estimation. Advances in neural information processing systems 27, 1799-1807 (2014). [24] Toshev, A., Szegedy, C.: Deeppose: Human pose estimation via deep neural networks. In: Proceedings of the IEEE conference on computer vision and pattern recognition. pp. 1653-1660 (2014). [25] Urschler, M., Ebner, T., Štern, D.: Integrating geometric configuration and appearance information into a unified framework for anatomical landmark localization. Medical image analysis 43, 23-36 (2018). [26] Wächter, I., Kneser, R., Korosoglou, G., Peters, J., Bakker, N., Weese, J., et al.: Patient specific models for planning and guidance of minimally invasive aortic valve implantation. In: International Conference on Medical Image Computing and Computer-Assisted Intervention. pp. 526-533. Springer (2010). [27] Wolterink, J.M., van Hamersvelt, R.W., Viergever, M.A., Leiner, T., Išgum, I.: Coronary artery centerline extraction in cardiac ct angiography using a cnn-based orientation classifier. Medical image analysis 51, 46-60 (2019). [28] Yang, W., Li, S., Ouyang, W., Li, H., Wang, X.: Learning feature pyramids for human pose estimation. In: proceedings of the IEEE international conference on computer vision. pp. 1281-1290 (2017). [29] Yao, Z., Xie, W., Zhang, J., Dong, Y., Qiu, H., Yuan, H., Jia, Q., Wang, T., Shi, Y., Zhuang, J., et al.: Imagetbad: A 3d computed tomography angiography image dataset for automatic segmentation oftype-b aortic dissection. Frontiers in Physiology 12 (2021). [30] Zhang, Z., Liu, Q., Wang, Y.: Road extraction by deep residual u-net. IEEE Geoscience and Remote Sensing Letters 15(5), 749-753 (2018). [31] Zheng, Y., John, M., Liao, R., Nottling, A., Boese, J., Kempfert, J., Walther, T., Brockmann, G., Comaniciu, D.: Automatic aorta segmentation and valve landmark detection in c-arm ct for transcatheter aortic valve implantation. IEEE transactions on medical imaging 31(12), 2307-2321 (2012). [32] He, Kaiming, et al. "Delving deep into rectifiers: Surpassing human-level performance on imagenet classification." Proceedings of the IEEE international conference on computer vision. 2015. [33] Ioffe, Sergey, and Christian Szegedy. "Batch normalization: Accelerating deep network training by reducing internal covariate shift." International conference on machine learning. PMLR, 2015. [34] Kingma, Diederik P., and Jimmy Ba. "Adam: A method for stochastic optimization." arXivpreprint arXiv:1412.6980 (2014). [35] Wu, Yuxin, and Kaiming He. "Group normalization." Proceedings of the European conference on computer vision (ECCV). 2018. [36] Ulyanov, Dmitry, Andrea Vedaldi, and Victor Lempitsky. "Instance normalization: The missing ingredient for fast stylization." arXiv preprint arXiv:1607.08022 (2016). [37] Ba, Jimmy Lei, Jamie Ryan Kiros, and Geoffrey E. Hinton. "Layer normalization." arXiv preprint arXiv:1607.06450 (2016).

Any calculation step or substep of the method according to the invention can be implemented using a computer or a computer program. In some specific embodiments, some or all calculations are done using a computer program stored on a computer or on any type of a memory device or both. In another embodiments, some or all calculations for the purpose of the method can be done remotely e.g., using cloud-based infrastructure which can include the use of Internet or a local network.

While all measurement methods and algorithms described here are intended to define the parameters of the invention and to provide tangible results to be compared with clinical trials, there are by no means limiting and are exemplary. The words like "including" or "comprising" are not limiting and, for example, when an element A includes another element B, the element A may include other element or elements in addition to the element B. The use of a singular or plural form is not limiting for the scope of the disclosure and, for example, a part of the description which is indicating that an element A contains an element B, this part also discloses that multiple elements B are contained in one element A and multiple elements A are contained in one element B as well as an embodiment where multiple elements A contain multiple elements B. Many other embodiments will be apparent and clear for those skilled in the art upon reviewing the content of the present disclosure. The scope of the invention, therefore, should be determined with reference to the appended claims.

## Claims

1. A computer-implemented method of detection of a landmark (104, 206) in a volume (101, 201) of medical images, wherein

   the method comprises generating at least one heatmap using a trained U-Net applied on the volume of medical images, wherein the volume of medical images comprises a computational tomography volume (101, 201) or a magnetic resonance volume, wherein the volume of medical images comprises voxels, wherein said at least one heatmap comprises a probability of finding localization of said landmark (104, 206) in voxels, **characterized in that** the trained U-Net is a trained residual U-Net (203) that comprises a contracting path and an expansive path, and wherein the contracting path comprises encoding residual block (302, 303, 304, 305) for encoding the volume of medical images and the expansive path comprises decoding residual block (307, 308, 309, 310) for decoding the volume of medical images encoded by the contracting path, and wherein the method additionally comprises transforming said at least one heatmap to coordinates of at least one landmark (104, 206) using a 3D Differentiable Spatial to Numerical Transform (103, 206).

2. The method of claim 1, wherein the volume of medical images is a pre-processed volume (102) of medical images.

3. The method of claim 2, wherein the pre-processed volume of medical images is obtained using at least one of central cropping, clipping and setting values of selected voxels to defined values, normalizing (204) the values of voxels and downsizing the volume of medical images and augmenting (202).

4. The method of claim 3, wherein said clipping and setting values of selected voxels to defined values comprises setting values of voxels smaller than -300 HU to -300 HU and setting values of voxels higher than 1100 HU to 1100 HU.

5. The method of claim 4, wherein said normalizing (204) the values of voxels includes setting values of voxels equal -300 HU to 0, setting values of voxels equal 1100 HU to 1, and scaling linearly values between -300 HU and 1100 HU are set to a corresponding value in the scale from 0 to 1.

6. The method of any of claims 3-5, wherein said downsizing includes decreasing the volume of the volume of medical images 3 to 4 times.

7. The method of claim 6, wherein said downsizing includes decreasing the volume of the volume of medical images 3.1, 3.2, 3.3, 3.4, 3.5, 3.6, 3.7, 3.8 or 3.9 times.

8. The method of any of claims 3-7, wherein said augmenting (202) includes rotation up to $\pi/6$ radians and translation up to 10 voxels in each dimension.

9. The method of any of claims 1-8, wherein encoding comprises downsampling of the volume of medical images and increasing the number of channels to produce a downsampled output and sending the downsampled output to a corresponding encoding residual block (302, 303, 304, 305) and to a corresponding decoding residual block (307, 308, 309, 310).

10. The method of claim 9, wherein downsampling is done by a factor of two.

11. The method of any of claims 1-10, wherein decoding comprises upsampling of an input to a residual decoding block of the volume of medical images to produce an upsampled output with a decreased number of channels.

12. The method of claim 11, wherein upsampling is done by a factor of two.

13. The method of any of claims 1-12, wherein training of the trained residual U-Net (203) comprises at least one of:

- minimization of the divergence between said at least one heatmap and an annotated heatmap comprising at least one annotation, wherein said at least annotation points to localization of the landmark (104, 206) on said at least one heatmap, and
- minimization of the Euclidean distance between the localization on said at least one heatmap and the localization on the heatmap comprising at least one annotation.

14. The method of any of claims 1-13, wherein the probability of finding the landmark (104, 206) has a normal distribution.

15. The method of any of claims 13-14, wherein said minimization of the Euclidean distance includes $\mathcal{L}_{\mathrm{E}}(\hat{\mathbf{y}},\mathbf{y}) = \|\hat{\mathbf{y}} - \mathbf{y}\|_2$ and said minimization of the divergence includes $\mathcal{L}_{\mathrm{D}}(\hat{\mathbf{H}},\mathbf{y}) = D_{\mathrm{JS}}(\hat{\mathbf{H}}\|\mathcal{N}(\mathbf{y}, \sigma^2))$, where $D_{\mathrm{JS}}(\cdot\|\cdot)$ is the Jensen-Shannon divergence, $\hat{\mathbf{H}}$ is the heatmap generated by the residual U-Net (203) and normalized by a normalization function, $\mathbf{y}$ is the expected localization, $\hat{\mathbf{y}}$ is the predicted localization, and $\mathcal{N}(\mathbf{y}, \sigma^2)$ is the expected heatmap generated by sampling from the normal distribution $\mathcal{N}$ with standard deviation $\sigma$ around expected localization **y**.

16. The method of claim 15, wherein $\sigma$ is equal 3.

17. The method of any of claims 13-16, wherein training of the trained residual U-Net (203) includes a linear combination of said minimization of the divergence and said minimization of the Euclidean distance: $\mathcal{L}(\hat{H},\mathbf{y}) = \mathcal{L}_{E}(DSNT(\hat{H}), \mathbf{y}) + \lambda$
$\mathcal{L}_{D}(\hat{H}, \mathbf{y}) = \mathcal{L}_{E}(\hat{\mathbf{y}},\mathbf{y}) + \lambda \mathcal{L}_{D}(\hat{H}, \mathbf{y})$,
where $\lambda$ is a regularization coefficient hyperparameter.

18. The method of claim 17, wherein $\lambda$ is equal 1.

19. The method of any of claims 13-18, wherein said at least one heatmap and said annotated heatmap are produced using the same volume of medical images or using a different volumes.

20. The method of any of claims 1-19, wherein the 3D Differentiable Spatial to Numerical Transform includes:

$$DSNT(\hat{H}) = \left[ \langle \hat{H}, \mathbf{X} \rangle_F , \langle \hat{H}, \mathbf{Y} \rangle_F , \langle \hat{H}, \mathbf{Z} \rangle_F \right],$$

where $\hat{H} = \varphi(\mathbf{H})$, and $\hat{H}$ is the heatmap **H** generated by the residual U-Net (203) and normalized by a normalization function, wherein $\langle \cdot , \cdot \rangle_F$ represents a Frobenius inner product of two matrices, wherein said two matrices are selected from $\hat{H}$, **X**, **Y** and **Z**, and wherein
**X**, **Y** and **Z** are grids in the form of $m \times n \times l$ matrices defined as:

$$\mathbf{X}_{i,j,k} = \frac{2j - (n+1)}{n}, \mathbf{Y}_{i,j,k} = \frac{2i - (m+1)}{m}, \mathbf{Z}_{i,j,k} = \frac{2k - (l+1)}{l}.$$

21. The method of any of claims 1-20, wherein each encoding residual block (302, 303, 304, 305) comprises: a first encoding convolution layer (402) for receiving an encoding residual block (302, 303, 304, 305) input, a first encoding norm layer (403) for receiving output from the first encoding convolution layer (402), a first encoding activation layer (404) for receiving output from the first encoding norm layer (403), a second encoding convolution layer (405) for receiving output from the first encoding activation layer (404), a second encoding norm layer (406) for receiving output from the second encoding convolution layer (405), a second encoding activation layer (407) for receiving output from the second encoding norm layer (406), and a subsequent encoding convolution layer (408) for receiving the encoding residual block (302, 303, 304, 305) input (301), and

wherein the subsequent encoding convolution layer (408) contains a 3D matrix of size 3 x 3 x 3 or 1 x 1 x 1, wherein the second encoding convolution layer (405) contains a 3D matrix of size 3 x 3 x 3 and the first encoding convolution layer (402) contains a 3D matrix of size 3 x 3 x 3,
wherein output from the subsequent encoding convolution layer (408) has greater number of channel than the encoding residual block (302, 303, 304, 305) input (301), wherein the output from the first encoding convolution layer (402) has greater number of channel than the encoding residual block (302, 303, 304, 305) input,
wherein an output from the subsequent convolution encoding layer and from the second encoding activation layer (407) is merged (409) by regular matrix addition,
wherein the first encoding convolution layer (402) and the subsequent encoding convolution layer (408) comprises a strided 3D convolution operator, wherein the strided 3D convolution operator comprises:

$$\mathbf{K} \star_s \mathbf{I} = \sum_{p=1}^{s} \sum_{q=1}^{s} \sum_{r=1}^{s} \mathbf{K}_{p,q,r} \star \mathbf{I}_{p,q,r},$$

where **K** is a kernel comprising a 3D matrix, **I** is an example input volume, and s is the stride, and
wherein the first encoding norm activation and the second encoding activation layer (407) comprise an activation function, wherein said activation function is selected from tanh, a Rectified Linear Unit or a Parametric Rectified Linear Unit, wherein the Parametric Rectified Linear Unit comprises:

$$f(\mathbf{y}_i) = \mathbf{y}_i \text{ if } \mathbf{y}_i \geq 0,$$

$$f(\mathbf{y}_i) = \alpha_i \mathbf{y}_i \text{ if } \mathbf{y}_i < 0$$

wherein $y_i$ is the *i*-th element of the input volume y, and *a* is a learnable parameter, and

wherein the first encoding norm layer (403) and the second encoding norm layer (406) include a Batch normalization, an instance normalization, a layer normalization or a 3D Batch Normalization, and wherein the 3D Batch Normalization includes:

$$\mathbf{y} = \frac{\mathbf{x} - E[\mathbf{x}]}{\sqrt{Var[\mathbf{x}] + \epsilon}} \cdot \gamma + \beta,$$

where x is the input, and y output of the Batch Normalization layer; $\gamma$ and $\beta$ are learnable parameters and $\varepsilon$ is a small constant value added to the denominator for numerical stability.

**22.** The method of any of claims 1-21, wherein each decoding residual block (307, 308, 309, 310) comprises:

a first decoding convolution layer (502) for receiving a decoding residual block (307, 308, 309, 310) input (501), comprising a 3D cross-correlation operator and a 3D matrix of size 1 x 1 x 1, a decoding unsample layer (503) for receiving output of the first decoding convolution layer (502), wherein the decoding unsample layer (503) is configured to unsample the output of the first decoding convolution layer (502) spatially by the factor of two using nearest neighbor interpolation, a first decoding norm layer (504) for receiving output of the decoding unsample layer (503), a first activation layer (505) for receiving output of the first decoding norm layer (504), a second decoding convolution layer (506) for receiving output of the first activation layer (505), wherein the second decoding convolution layer (506) comprises a kernel comprising a 3D matrix of size 3 x 3 x 3, a second decoding norm layer (507) for receiving output of the second decoding convolution layer (506), a second decoding activation layer (508) for receiving output of the second decoding norm layer (507), and wherein the 3D cross-correlation operator comprises:

$$\mathbf{K} \star \mathbf{I}(x, y, z) = \sum_{i=-N}^{N} \sum_{j=-N}^{N} \sum_{l=-N}^{N} \mathbf{K}(i, j, l) \times \mathbf{I}(x + i, y + j, z + l),$$

where **K** is a kernel comprising a 3D matrix of size $N \times N \times N$, and **I**(*x,y,z*) is a voxel of an example input volume **I** of coordinates *x,y,z*,

wherein the first decoding norm layer (504) and the second decoding norm layer (507) include a Batch normalization, an instance normalization, a layer normalization or a 3D Batch Normalization, and wherein the 3D Batch Normalization includes:

$$\mathbf{y} = \frac{\mathbf{x} - E[\mathbf{x}]}{\sqrt{Var[\mathbf{x}] + \epsilon}} \cdot \gamma + \beta,$$

where **x** is the input, and **y** output of the Batch Normalization layer; $\gamma$ and $\beta$ are learnable parameters and $\varepsilon$ is a small constant value added to the denominator for numerical stability, and

wherein the first decoding activation layer (505) and the second decoding activation layer (508) comprise an activation function, wherein said activation function is selected from tanh, a Rectified Linear Unit or a Parametric Rectified Linear Unit, wherein the Parametric Rectified Linear Unit comprises:

$$f(\mathbf{y}_i) = \mathbf{y}_i \text{ if } \mathbf{y}_i \geq 0,$$

$$f(\mathbf{y}_i) = \alpha_i \mathbf{y}_i \text{ if } \mathbf{y}_i < 0$$

wherein $\mathbf{y}_i$ is the *i*-th element of the input volume **y,** and *a* is a learnable parameter.

**23.** The method of any of claims 21-22, wherein each residual block (302, 303, 304, 305, 307, 308, 309, 310) comprises:

$$\mathbf{y}_l = \mathrm{h}(\mathbf{x}_l) + \mathcal{F}(\mathbf{x}_l, \mathbf{W}_l),$$

$$\mathbf{x}_{l+1} = f(\mathbf{y}_l)$$

where $\mathbf{x}_l$ and $\mathbf{x}_{l+1}$ are the input and output of the *l*-th residual block, $\mathcal{F}(\cdot)$ is a residual function, $f(y_1)$ is an activation function and $h(\mathbf{x}_l)$ is an identity mapping function,

wherein for each encoding residual block (302, 303, 304, 305) the residual function comprises the first encoding convolution layer (402), the first encoding norm layer (403), the first encoding activation layer (404), the second encoding convolution layer (405), the second encoding norm layer (406), and the second encoding activation layer (407), and

wherein for each decoding residual block (307, 308, 309, 310) the residual function comprises the second decoding convolution layer (506), the second decoding norm layer (507) and the second decoding activation layer (508).

24. The method of claim 23, wherein for each encoding residual block (302, 303, 304, 305):

$$h(\mathbf{x}_l) = \sum_{c=0}^{C_{in}-1}(\mathbf{K}_{C_{out},c} \star \mathbf{x}_{l_c}),$$

where * is a 3D cross-correlation operator or a strided 3D cross-correlation operator; $C_{in}$ is the number of input channels; $C_{out}$ is the number of output channels; $\mathbf{K}$ is a set of learnable weights in the form of convolution kernels; and s is the stride value, wherein the 3D cross-correlation operator comprises:

$$\mathbf{K} \star \mathbf{I}(x,y,z) = \sum_{i=-N}^{N}\sum_{j=-N}^{N}\sum_{l=-N}^{N}\mathbf{K}(i,j,l) \times \mathbf{I}(x+i,y+j,z+l),$$

where $\mathbf{K}$ is a kernel comprising a 3D matrix of size $N \times N \times N$, and *I(x,y,z)* is a voxel of an example input volume $\mathbf{I}$ of coordinates *x,y,z*.

25. The method of any of claims 21-24, wherein for each decoding residual block (307, 308, 309, 310) $h(\mathbf{x}_l) = \mathbf{x}_l$.

26. The method of any of claims 1-25, wherein said at least one landmark (104, 206) is selected from the list comprising inlets and outlets surrounding ostium of Left Coronary Artery, inlets and outlets surrounding ostium of Right Coronary Artery, apex of left ventricle, base/basis of left ventricle, 17 segments of left ventricle according to American Heart Association, junction points of left and right ventricles, ostium LCA ostium of Left Coronary Artery, ostium RCA ostium of Right Coronary Artery, LM division of Left Main Coronary Artery, DG1 origin of 1st diagonal artery, DG2 origin of 2st diagonal artery origin of ramus intermedius artery, OM1 origin of 1st obtuse marginal artery, OM2 origin of 2st obtuse marginal artery, RCA origin of Right Coronary Artery, AM origin of Acute Marginal Branch, PDA origin of Posterior Descending Artery, PL origin of Posterior Left Ventricular Artery, inlet of Superior Vena Cava to right atrium, inlet of Inferior Vena Cava to right atrium, inlet of coronary sinus to right atrium, inlet of right appendage/auricle to right atrium, apex of right appendage/auricle, inlet of left superior/inferior and right superior/inferior pulmonary veins to left atrium, inlet of right appendage/auricle to right atrium, apex of left appendage/auricle, origin of pulmonary trunk, tricuspid valve including leaflets: anterior, posterior and septal, apex of Right Ventricle, origin of ascending aorta, aortic valve including leaflets: right, left, posterior anterior, right anterior, right posterior, anterior coronary, left coronary, right coronary, non-coronary, bicuspid valve including leaflets: anterior and posterior, mitral valve including leaflets: anterior and posterior, ANTETIOR CEREBRAL ARTERY, landmarks located at the beginning of horizontal or pre-communicating segment, vertical, post-communicating or infracallosal segment, precallosal segment, supracallosal segment, postcallosal segment, ANTERIOR COMMUNICATING ARTERY, SUPERIOR CEREBELLAR ARTERY, ANTERIOR INFERIOR CEREBELLAR ARTERY, POSTERIOR INFERIOR CEREBELLAR ARTERY, MIDDLE CEREBRAL ARTERY, landmarks located at the beginning of sphenoidal/horizontal segment, insular segment, opercular segment, cortial segment, POSTERIOR CEREBRAL ARTERY, landmarks located at the beginning of pre-communicating segment, post-communicating segment, quadrigeminal segment, cortical segment, POSTERIOR COMMUNICATING ARTERY, OPHTALMIC ARTERY, RIGHT AND LEFT CHOROIDAL ARTERY, BASILAR ARTERY, ANTERIOR SPINAL ARTERY, BRACHIOCEPHALIC ARTERY/TRUNK, RIGHT/LEFT SUBCLAVIAN ARTERY, RIGHT/LEFT COMMON CAROTID ARTERY, RIGHT/LEFT INTERNAL CAROTID ARTERY, RIGHT/LEFT EXTERNAL CAROTID ARTERY, RIGHT/LEFT VERTEBRAL ARTERY, RIGHT/LEFT THYROCERVICAL TRUNK, RIGHT/LEFT INTERNAL THORACIC ARTERY, RIGHT/LEFT COSTOCERVICAL TRUNK, RIGHT/LEFT SUPRASCAPULAR ARTERY, RIGHT/LEFT TRANSVERSE CERVICAL ARTERY, RIGHT/LEFT AXILLARY ARTERY, RIGHT/LEFT BRACHIUAL ARTERY, RIGHT/LEFT ULNAR ARTERY, RIGHT/LEFT RADIAL ARTERY, RIGHT/LEFT SUPERIOR THYROID ARTERY, RIGHT/LEFT LINGUAL ARTERY, RIGHT/LEFT FACIAL ARTERY, RIGHT/LEFT ASCENDING PHARYNGEAL ARTERY, RIGHT/LEFT OCCIPITAL ARTERY, RIGHT/LEFT POSTERIOR AURICULAR ARTERY, RIGHT/LEFT SUPERFICIAL TEMPORAL ARTERY, RIGHT/LEFT MAXILLARY ARTERY, POSTERIOR INTERCOSTAL ARTERIES, SUBCOSTAL ARTERIES, SUPERIOR PHRENIC ARTERIES, PERICARDIAL ARTERIES, OESOPHAGAL ARTERIES, ESOPHAGEAL BRANCHES OF INFERIOR THYROID ARTERY (TOP THIRD), ESOPHAGEAL BRANCHES OF THORACIC PART OF AORTA (MIDDLE THIRD), ESOPHAGEAL BRANCHES OF LEFT GASTRIC ARTERY (BOTTOM THIRD), LOWER DIAPHRAGMATIC ARTERIES, LUMBAR ARTERIES, CELIAC TRUNK, SUPERIOR MESENTRIC ARTERY, INFERIOR MESENTRIC ARTERY, MIDDLE SUPRARENAL ARTERY, RENAL ARTERIES, TESTICULAR ARTERY/INTERNAL SPERMATIC ARTERY/OVARIAN ARTERY, COMMON ILIAC ARTERIES, INTERNAL ILIAC ARTERIES, EXTERNAL ILIAC ARTERIES, FEMORAL ARTERIES, POPLITEAL ARTERIES, ANTERIOR TIBIAL ARTERIES, DORSAL ARTERIES OF FOOT, POSTERIOR TIBIAL ARTERIES, MEDIAL PLANTAR ARTERIES, LATERAL PLANTAR ARTERIES, V. CAVA SUPERIOR, VV. BRACHIOCEPHALICAE, V. SUBCLAVIA, VV. IUGULARES, V. CAVA INFERIOR, VV. ILIACAE COMMUNES, V. ILIACA EXTERNA, V. ILIACA INTERNA, VV. CORDIS, V. CARDIACA MAGNA, V. CARDIACA PARVA, V. CARDIACA MEDIA, V. POSTERIOR VENTRICULI SINISTRI, V. OBLIQUA ATRII SINISTRI, VV. CARDIACAE ANTERIORES, V. MARGINALIS DEXTRA, V. MARGINALIS SINISTRA, VV. CARDIACAE MINIMAE, VV. CEREBRI, V. CEREBRI INTERNA, V. SEPTI PELLUCIDI ANTERIOR, V. SEPTI PELLUCIDI POSTERIOR, V. THALAMOSTRIATA SUPERIOR, VV. THALAMOSTRIATAE INFERIORES, V. CHOROIDEA SUPERIOR, V. CHOROIDEA INFERIOR, V. CEREBRI MAGNA, VV. CEREBRI SUPERIORES, VV. CEREBRI INFERIORES, V. CEREBRI ANTERIOR, V. CEREBRI MEDIA PROFUNDA, V. CEREBRI MEDIA SUPERFICIALIS, VV. ANASTOMOTICAE, V. ANASTOMOTICA SUPERIOR, V. ANASTOMOTICA INFERIOR, V. BASALIS, V. COMMUNICANS ANTERIOR, V. COMMUNICANS POSTERIOR, CIRCULUS VENOSUS CEREBRI, V. COMMUNICANS POSTERIOR, V. SUPERIOR VERMIS, VV. HEMISPHAERII CEREBELLI SUPERIORES, V. VERMIS INFERIOR, VV. HEMISPHAERII CEREBELLI INFERIORES, VV. DIPLOICAE, V. DIPLOICA FRONTALIS, V. DIPLOICA TEMPORALIS ANTERIOR, V. DIPLOICA TEMPORALIS POSTERIOR, V. DIPLOICA OCCIPITALIS, VV. EMISSARIAE, V. EMISSARIA PARIETALIS, V. EMISSARIA MASTOIDEA, V. EMISSARIA CONDYLARIS, V. EMISSARIA OCCIPITALIS, PLEXUS VENOSUS FORAMINIS OVALIS, PLEXUS VENOSUS CAROTICUS INTERNUS, PLEXUS VENOSUS CANALIS HYPOGLOSSI, VV. MENINGEAE, VV. MENINGEAE MEDIAE, SINUS DURAE MATRIS, SINUS SAGITTALIS SUPERIOR, SINUS SAGITTALIS INFERIOR, SINUS RECTUS, SINUS TRANSVERSUS, SINUS SIGMOIDEUS, SINUS OCCIPITALIS, CONFLUENS SINUUM, SINUS CAVERNOSUS, SINUS INTERCAVERNOSI, PLEXUS BASILARIS, V. OPHTHALMICA SUPERIOR, V. LACRIMALIS, VV. ETHMOIDALES, ANTERIOR ET POSTERIOR, V. NASOFRONTALIS, V. OPHTHALMICA INFERIOR, V. FACIALIS, V. ANGULARIS, V. SUPRATROCHLEARIS, V. SUPRAORBITALIS, VV. PALPEBRALES, VV. NASALES EXTERNAE, VV. LABIALES, V. PROFUNDA FACIEI, RAMI PAROTIDEI, V. SUBMENTALIS, V. PALATINA EXTERNA, V. RETROMANDIBULARIS, VV. TEMPORALES SUPERFICIALES, V. TEMPORALIS MEDIA, V. TRANSVERSA FACIEI, VV. ARTICULARES, V. STYLOMASTOIDEA, VV. AURICULARES ANTERIORES, VV. PAROTIDEAE, VV. MAXILLARES, V. IUGULARIS EXTERNA, V. AURICULARIS POSTERIOR, V. OCCIPITALIS, V. SUPRASCAPULARIS, VV. TRANSVERSAE COLLI, V. IUGULARIS ANTERIOR, PLEXUS PTERYGOIDEUS, V. SPHENOPALATINA, VV. MENINGEAE MEDIAE, VV. TEMPORALES PROFUNDAE, VV. ALVEOLARES SUP., VV. MASSETERICAE, V. ALVEOLARIS INFERIOR, V. VERTEBRALIS, V. VERTEBRALIS ANTERIOR, V. CERVICALIS PROFUNDA, V. IUGULARIS INTERNA, SINUS SIGMOIDEUS, SINUS OCCIPITALIS, PLEXUS VENOSUS CANALIS HYPOGLOSSI, V. CANALICULI COCHLEAE, SINUS PETROSUS INFERIOR, V. OCCIPITALIS, V. FACIALIS, VV. PHARYNGEALES, V. LINGUALIS, V. PROFUNDA LINGUAGE, VV. DORSALES LINGUAE, V. COMITANS N. HYPOGLOSSI, VV. THYROIDEAE SUPERIORES, VV. SUBFASCIALES, ARCUS VENOSUS PALMARIS PROFUNDUS, VV. RADIALES, VV. ULNARES, VV. BRACHIALES, V. BRACHIALIS COMMUNIS, V. BASILICA, VV. MUSCULUS, VV. COLATERALIS ULNAE, V PROFUNDA BRACHII, V. AXILLARIS, V. SUBCLAVIA, VV. CUTANEAE, VV. DIGITORUM, V. INTERCAPITALIS, ARCUS VENOSUS DIGITALIS PALMARIS, V. INTERDIGITALIS, ARCUS VENOSUS DIGITALIS DORSALIS, RETE VENOSUM DORSALE MANUS, VV. METACARPALES DORSALES, ARCUS VENOSUS METACARPALIS DORSALIS, VV. MARGINALES, V. SALVATELLA, V. CEPHALICA POLLICIS, V. CEPHALICA, V. CEPHALICA ANTEBRACHII, V. CEPHALICA ACCESSORIA, V. INTERMEDIA CUBITI, V. BASILICA, V. INTERMEDIA ANTEBRACHII, V. INTERMEDIA BASILICA, V. INTERMEDIA CEPHALICA, V. CAVA SUPERIOR, V. BRACHIOCEPHALICA, ANGULUS VENOSUS, V. THYROIDEA INFERIOR, VV. THYROIDEAE IMAE, V. VERTEBRALIS, V. CERVICALIS PROFUNDA, V. IUGULARIS EXT., VV. PERICARDIACOPHRENICAE, VV. THYMICAE, VV. PERICARDIALES, VV. MEDIASTINALES, VV. BRONCHIALES, VV. TRACHEALES, VV. ESOPHAGEALES, VV. THORACICAE INTERNAE, VV. MUSCULOPHRENICAE, VV. EPIGASTRICAE SUPERIORES, VV. INTERCOSTALES ANTERIORES, RAMI PERFORANTES, RAMI STERNALES, V. INTERCOSTALIS SUPERIOR, VV. CUTANEAE ABDOMINIS ET PECTORIS, PLEXUS VENOSUS AREOLARIS, VV. THORACOEPIGASTRICAE, VV. COSTOAXILLARES, V. AZYGOS, V. HEMIAZYGOS, PLEXUS VENOSI VERTEBRALES EXTERNI, PLEXUS VENOSI VERTEBRALES INTERNI, VV. BASIVERTEBRALES, VV. INTERVERTEBRALES, VV. SPINALES, VV. SPINALES INTERNAE, VV. SPINALES EXTERNAE, VV. RADICULARES, VV. DORSALES PEDIS, VV. PLANTARES LATERALES, ARCUS VENOSUS PLANTARIS, VV. PLANTARES MEDIALES, VV. METATARSALES PLANTARES, VV.

PERFORANTES, VV. TIBIALES ANTERIORES, VV. TIBIALES POSTERIORES, VV. FIBULARES S. PERONEALES, V. POPLITEA, VV. GENICULARES, VV. SURALES, V. SAPHENA PARVA, V. FEMORALIS, V. EPIGASTRICA SUPERFICIALIS, V. CIRCUMFLEXA ILIACA SUPERFICIALIS, VV. THORACOEPIGASTRICAE, VV. PUDENDAE EXTERNAE,: VV. SCROTALES ANTERIORES, VV. LABIALES ANTERIORES, VV. DORSALES SUPERFICIALES PENIS, VV. DORSALES SUPERFICIALES CLITORIDIS, V. SAPHENA MAGNA, V.PROFUNDA FEMORIS, VV. PERFORANTES, VV. CRICUMFLEXAE MEDIALES FEMORIS, VV. CRICUMFLEXAE LATERALES FEMORIS, VV. GLUTEAE SUPERIORES, VV. GLUTEAE INFERIORES, VV. DIGITALES DORSALES, VV. INTERCAPITALES, VV. METATARSALES DORSALES, ARCUS VENOSUS DORSALIS PEDIS, VV. DIGITALES PLANTARES, ARCUS VENOSUS PLANTARIS, RETE VENOSUM PLANTARE, RETE VENOSUM DORSALE, V. SAPHENA, V. SAPHENA PARVA, V. CAVA INFERIOR, VV. PHRENICAE INFERIORES, VV. LUMBALES, VV. HEPATICAE, VV. RENALES, V. SUPRARENALIS, V. TESTICULARIS, V. OVARICA, VV. ILIACAE COMMUNES, V. SACRALIS MEDIANA, V. ILIACA EXTERNA, V. CIRCUMFLEXA ILIACA PROFUNDA, V. EPIGASTRICA INFERIOR, V. ILIACA INTERNA, V. ILIOLUMBALIS, VV. SACRALES LATERALES, VV. GLUTEAE SUPERIORES, VV. GLUTEAE INFERIORES, VV. OBTURATORIAE, V. PUDENDA INTERNA, VV. PROFUNDAE PENIS RESP. CLITORIDIS, VV. BULBI PENIS RESP. VV. BULBI VESTIBULI VAGINAE, VV. SCROTALES POSTERIORES RESP. LABIALES POSTERIORES, VV. RECTALES INFERIORES, V. DORSALIS PENIS, VV. CRICUMFLEXAE PENIS, V. DORSALIS CLITORIDIS, VV. DORSALES PENIS SUPERFICIALES, VV. DORSALES CLITORIDIS SUPERFICIALES, PLEXUS VENOSUS RECTALIS, PLEXUS VENOSUS VESICALIS, PLEXUS VENOSUS PROSTATICUS, PLEXUS VENOSUS UTERINUS, PLEXUS VENOSUS VAGINALIS, V. PORTAE HEPATIS, V. MESENTERICA SUPERIOR, VV. IEIUNALES ET ILEALES, V. ILEOCOLICA, V. APPENDICULARIS, V. COLICA DEXTRA, VV. PANCREATICAE, V. GASTROOMENTALIS DEXTRA, V. PANCREATICODUODENALIS INF., V. SPLENICA S. LIENALIS, VV. PANCREATICAE, VV. GASTRICAE BREVES, V. GASTROOMENTALIS SINISTRA, V. MESENTERICA INFERIOR, VV. SIGMOIDEAE, V. COLICA SIN., V. RECTALIS SUP., V. GASTRICA SINISTRA, V. GASTRICA DEXTRA, V. PREPYROLICA, V. PANCREATICODUODENALIS SUPERIOR POSTERIOR, V. CYSTICA, V. UMBILICALIS, major duodenal papillal papilla of Vater, inlet of cystic duct to common biliary duct, outlet of cystic duct from gallbladder, junction of right and left hepatic duct, junction of right anterior and right posterior hepatic duct, carina, subdivision to right superior lobar bronchus, subdivision to right middle lobar bronchus, subdivision to right inferior lobar bronchus, subdivision to left superior lobar bronchus, subdivision to left inferior lobar bronchus, subdivision to right first segmental bronchus, subdivision to right second segmental bronchus, subdivision to right third segmental bronchus, subdivision to right fourth segmental bronchus, subdivision to right fifth segmental bronchus, subdivision to right sixt segmental bronchus, subdivision to right seventh segmental bronchus, subdivision to right eight segmental bronchus, subdivision to right ninth segmental bronchus, subdivision to right tenth segmental bronchus, subdivision to right first segmental bronchus, subdivision to left first segmental bronchus, subdivision to left second segmental bronchus, subdivision to left third segmental bronchus, subdivision to left fourth segmental bronchus, subdivision to left fifth segmental bronchus, subdivision to left sixth segmental bronchus, subdivision to left seventh segmental bronchus, subdivision to left eighth segmental bronchus, anterior nares, outlet/drainage of right posterior ethmoidal cells to right sphenoethmoidal recess, outlet/drainage of left posterior ethmoidal cells to left sphenoethmoidal recess, outlet/drainage of right sphenoid sinus to right spheno-ethmoidal recess, outlet/drainage of right sphenoethmoidal recess to right superior nasal meatus, outlet/drainage of left sphenoethmoidal recess to left superior nasal meatus, outlet/drainage of right frontal sinus to right frontal recess, outlet/drainage of left frontal sinus to left frontal recess, outlet/drainage of right frontal recess to right middle nasal meatus, outlet/drainage of left frontal recess to left middle nasal meatus, outlet/drainage of right frontal ethmoidal cells to right ostiomeatal complex, outlet/drainage of right frontal ethmoidal cells to right ostiomeatal complex, outlet/drainage of right maxillary sinus to right ostiomeatal complex, outlet/drainage of left maxillary sinus to left ostiomeatal complex, outlet/drainage of right ostiomeatal complex to right middle nasal meatus, outlet/drainage of left ostiomeatal complex to left middle nasal meatus, outlet/drainage of right nasolacrimal duct to right inferior nasal meatus, outlet/drainage of left nasolacrimal duct to left inferior nasal meatus, postrior nares/ posterior nasal aperture/chonoae, uvula, pharyngeal tonsil, opening of left and right auditory tube, tip of epiglottis, right and left piriform recess/fossa/sinus, postcricoid region, cricoid cartillage, interarytenoid fold, right and left aryepiglottic fold, right and left arytenoid cartillages, right and left vesibular fold, outlet of right and left laryngeal sacc, vocal chords, right and left vocal fold, first tracheal cartillage, Kidneys, Renal papilla, Minor calyxes, Renal pyramids, Renal pelvis, inlet ureter, Abdominal aortic plexus, Abducens nerves, Accessory nerve, Accessory obturator nerve, Alderman's nerve, Anococcygeal nerve, Ansa cervicalis, Anterior interosseous nerve, Anterior superior alveolar nerve, Auerbach's plexus, Auriculotemporal nerve, Axillary nerve, Brachial plexus, Buccal branch of the facial nerve, Buccal nerve, Cardiac plexus, Cavernous nerves, Cavernous plexus, Celiac ganglia, Cervical branch of the facial nerve, Cervical plexus, Chorda tympani, Ciliary ganglion, Coccygeal nerve, Cochlear nerve, Common fibular nerve, Common palmar digital nerves of median nerve, Deep branch of the radial nerve, Deep fibular nerve, Deep petrosal nerve, Deep temporal nerves, Diagonal band of Broca, Digastric branch of facial nerve, Dorsal branch of ulnar nerve, Dorsal nerve of clitoris, Dorsal nerve of the penis, Dorsal scapular nerve, Esophageal plexus, Ethmoidal nerves, External laryngeal nerve, External nasal nerve, Facial nerve, Femoral nerve, Frontal nerve, Gastric plexuses, Geniculate ganglion, Genital branch of genitofemoral nerve, Genitofemoral nerve, Glossopharyngeal nerve, Greater auricular nerve, Greater occipital nerve, Greater petrosal nerve, Hepatic plexus, Hypoglossal nerve, Iliohypogastric nerve, Ilioinguinal nerve, Inferior alveolar nerve, Inferior anal nerves, Inferior cardiac nerve, Inferior cervical ganglion, Inferior gluteal nerve, Inferior hypogastric plexus, Inferior mesenteric plexus, Inferior palpebral nerve, Infraorbital nerve, Infraorbital plexus, Infratrochlear nerve, Intercostal nerves, Intercostobrachial nerve, Intermediate cutaneous nerve, Internal carotid plexus, Internal laryngeal nerve, Interneuron, Jugular ganglion, Lacrimal nerve, Lateral cord, Lateral cutaneous nerve of forearm, Lateral cutaneous nerve of thigh, Lateral pectoral nerve, Lateral plantar nerve, Lateral pterygoid nerve, Lesser occipital nerve, Lingual nerve, Long ciliary nerves, Long root of the ciliary ganglion, Long thoracic nerve, Lower subscapular nerve, Lumbar nerves, Lumbar plexus, Lumbar splanchnic nerves, Lumboinguinal nerve, Lumbosacral plexus, Lumbosacral trunk, Mandibular nerve, Marginal mandibular branch of facial nerve, Masseteric nerve, Maxillary nerve, Medial cord, Medial cutaneous nerve of arm, Medial cutaneous nerve of forearm, Medial cutaneous nerve, Medial pectoral nerve, Medial plantar nerve, Medial pterygoid nerve, Median nerve, Meissner's plexus, Mental nerve, Middle cardiac nerve, Middle cervical ganglion, Middle meningeal nerve, Motor nerve, Muscular branches of the radial nerve, Musculocutaneous nerve, Mylohyoid nerve, Nasociliary nerve, Nasopalatine nerve, Nerve of pterygoid canal, Nerve to obturator internus, Nerve to quadratus femoris, Nerve to the Piriformis, Nerve to the stapedius, Nerve to the subclavius, Nervus intermedius, Nervus spinosus, Nodose ganglion, Obturator nerve, Oculomotor nerve, Olfactory nerve, Ophthalmic nerve, Optic nerve, Otic ganglion, Ovarian plexus, Palatine nerves, Palmar branch of the median nerve, Palmar branch of ulnar nerve, Pancreatic plexus, Patellar plexus, Pelvic splanchnic nerves, Perforating cutaneous nerve, Perineal branches of posterior femoral cutaneous nerve, Perineal nerve, Petrous ganglion, Pharyngeal branch of vagus nerve, Pharyngeal branches of glossopharyngeal nerve, Pharyngeal nerve, Pharyngeal plexus, Phrenic nerve, Phrenic plexus, Posterior auricular nerve, Posterior branch of spinal nerve, Posterior cord, Posterior cutaneous nerve of arm, Posterior cutaneous nerve of forearm, Posterior cutaneous nerve of thigh, Posterior scrotal nerves, Posterior superior alveolar nerve, Proper palmar digital nerves of median nerve, Prostatic plexus (nervous), Pterygopalatine ganglion, Pudendal nerve, Pudendal plexus, Pulmonary branches of vagus nerve, Radial nerve, Recurrent laryngeal nerve, Renal plexus, Sacral plexus, Sacral splanchnic nerves, Saphenous nerve, Sciatic nerve, Semilunar ganglion, Sensory nerve, Short ciliary nerves, Sphenopalatine nerves, Splenic plexus, Stylohyoid branch of facial nerve, Subcostal nerve, Submandibular ganglion, Suboccipital nerve, Superficial branch of the radial nerve, Superficial fibular nerve, Superior cardiac nerve, Superior cervical ganglion, Superior ganglion of glossopharyngeal nerve, Superior ganglion of vagus nerve, Superior gluteal nerve, Superior hypogastric plexus, Superior labial nerve, Superior laryngeal nerve, Superior lateral cutaneous nerve of arm, Superior mesenteric plexus, Superior rectal plexus, Supraclavicular nerves, Supraorbital nerve, Suprarenal plexus, Suprascapular nerve, Supratrochlear nerve, Sural nerve, Sympathetic trunk, Temporal branches of the facial nerve, Third occipital nerve, Thoracic aortic plexus, Thoracic splanchnic nerves, Thoraco-abdominal nerves, Thoracodorsal nerve, Tibial nerve, Transverse cervical nerve, Trigeminal nerve, Trochlear nerve, Tympanic nerve, Ulnar nerve, Upper subscapular nerve, Uterovaginal plexus, Vagus nerve, Ventral ramus, Vesical nervous plexus, Vestibular nerve, Vestibulocochlear nerve, Zygomatic branches of facial nerve, Zygomatic nerve, Zygomaticofacial nerve, Zygomaticotemporal nerve, Foramen caecum, Optic canal, Superior orbital fissure, Foramen rotundum, Foramen ovale, Foramen spinosum, Foramen lacerum, Carotid canal, Internal acoustic foramen, Jugular foramen, Hypoglossal canal, and Foramen magnum.

27. A computer-readable storage medium comprising instructions which, when executed by a computer, cause the computer to carry out the steps of a method according to any of claims 1-26.

28. A system for detection of a landmark (104, 206) in a volume (101, 201) of medical images, wherein the system comprises:

- a measuring means for collection a computational tomography volume (101, 201) or a magnetic resonance volume, for a human patient, and
- a computer system adapted to perform the steps of a method according to any of claims 1-26.

**Patentansprüche**

1. Das computerimplementierte Verfahren zum Erfassen einer Landmarke (104, 206) in einem Volumen (101, 201) von medizinischen Bildern, wobei das Verfahren das Erzeugen mindestens einer Heatmap unter Verwendung eines trainierten U-Nets umfasst, das auf das Volumen von medizinischen Bildern angewendet wird, wobei das Volumen medizinischer Bilder ein Computertomographievolumen (101, 201) oder ein Magnetresonanzvolumen umfasst, wobei das Volumen von medizinischen Bildern Voxel umfasst, wobei die mindestens eine Heatmap eine Wahrscheinlichkeit umfasst, eine Lokalisierung der Landmarke (104, 206) in Voxeln zu finden, **dadurch gekennzeichnet, dass** das trainierte U-Net ein trainiertes Rest-U-Net (203) ist, das einen Kontraktionsweg und einen Expansionsweg umfasst, und wobei der Kontraktionsweg einen Codierungsrestblock (302, 303, 304, 305) zur Kodierung des Volumens von medizinischen Bildern umfasst und der Expansionsweg einen Restblock der Dekodierung (307, 308, 309, 310) zur Dekodierung des Volumens von medizinischen Bildern umfasst, die durch den Kontraktionsweg kodiert werden, und wobei das Verfahren zusätzlich das Transformieren der mindestens einen Heatmap in Koordinaten mindestens eines Orientierungspunkts (104, 206) unter Verwendung einer differenzierbaren Transformation von räumlichen 3D-Daten in numerische Repräsentationen (103, 206).

2. Das Verfahren nach Anspruch 1, wobei das Volumen von medizinischen Bildern ein vorverarbeitetes Volumen (102) von medizinischen Bildern ist.

3. Das Verfahren nach Anspruch 2, wobei das vorverarbeitete Volumen von medizinischen Bildern unter Verwendung von mindestens einem von zentralem Abschneiden, Zuschneiden und Einstellen von Werten von ausgewählten Voxeln auf definierte Werte, Normieren (204) der Werte von Voxeln und Verkleinern des Volumens von medizinischen Bildern und Vergrößern (202) erhalten wird.

4. Das Verfahren nach Anspruch 3, wobei das Zuschneiden und Einstellen von Werten ausgewählter Voxel auf definierte Werte das Einstellen von Werten von Voxeln von weniger als -300 HU bis - 300 HU und das Einstellen von Werten von Voxeln von mehr als 1100 HU bis 1100 HU umfasst.

5. Das Verfahren nach Anspruch 4, wobei das Normieren (204) der Werte von Voxeln das Einstellen von Werten von Voxeln gleich -300 HU auf 0, das Einstellen von Werten von Voxeln gleich 1100 HU auf 1 und das lineare Skalieren von Werten zwischen -300 HU und 1100 HU auf einen entsprechenden Wert in der Skala von 0 bis 1 beinhaltet.

6. Das Verfahren nach einem der Ansprüche 3-5, wobei das Verkleinern das 3- bis 4-fache Verringern des Volumens des Volumens von medizinischen Bildern beinhaltet.

7. Das Verfahren nach Anspruch 6, wobei das Verkleinern das Verringern des Volumens des Volumens von medizinischen Bildern 3,1-, 3,2-, 3,3-, 3,4-, 3,5-, 3,6-, 3,7-, 3,8- oder 3,9-mal beinhaltet.

8. Das Verfahren nach einem der Ansprüche 3-7, wobei das Vergrößern (202) Rotation bis zu $\pi/6$ Radiant und Translation bis zu 10 Voxel in jeder Dimension beinhaltet.

9. Das Verfahren nach einem der Ansprüche 1-8, wobei die Kodierung Downsampling des Volumens von medizinischen Bildern und Erhöhen der Anzahl von Kanälen umfasst, um eine downgesampelte Ausgabe zu erzeugen, und Senden der downgesampelten Ausgabe an einen entsprechenden Restblock der Kodierung (302, 303, 304, 305) und an einen entsprechenden Restblock der Dekodierung (307, 308, 309, 310).

10. Das Verfahren nach Anspruch 9, wobei Downsampling mit einem Faktor von zwei durchgeführt wird.

11. Das Verfahren nach einem der Ansprüche 1-10, wobei das Decodieren ein Upsampling einer Eingabe eines Restblocks der Dekodierung des Volumens von medizinischen Bildern umfasst, um eine ungesampelte Ausgabe mit einer verringerten Anzahl von Kanälen zu erzeugen.

12. Das Verfahren nach Anspruch 11, wobei das Upsampling mit einem Faktor von zwei durchgeführt wird.

13. Das Verfahren nach einem der Ansprüche 1-12, wobei das Training des trainierten Rest-U-Netzes (203) mindestens eines von Folgendem umfasst:

   - Minimierung der Abweichung zwischen der mindestens einen Heatmap und einer kommentierten Heatmap, die mindestens eine Anmerkung umfasst, wobei die mindestens eine Anmerkung auf die Lokalisierung der Landmarke (104, 206) auf der mindestens einen Heatmap hinweist, und
   - Minimierung des euklidischen Abstands zwischen der Lokalisierung auf der mindestens einen Heatmap und der Lokalisierung auf der Heatmap, die mindestens eine Anmerkung umfasst.

14. Das Verfahren nach einem der Ansprüche 1-13, wobei die Wahrscheinlichkeit, die Landmarke (104, 206) zu finden, eine Normalverteilung aufweist.

**15.** Das Verfahren nach einem der Ansprüche 13-14, wobei die Minimierung der euklidischen Entfernung $\mathcal{L}_E(\hat{\mathbf{y}},\mathbf{y}) = \|\hat{\mathbf{y}} - \mathbf{y}\|_2$ beinhaltet und die Minimierung der Divergenz, $\mathcal{L}_D(\hat{\mathbf{H}},\mathbf{y}) = D_{JS}(\hat{\mathbf{H}}\|\mathcal{N}(\mathbf{y}, \sigma^2))$, beinhaltet, wobei $D_{JS}(\cdot\|\cdot)$ die Jensen-Shannon-Divergenz ist, die Heatmap ist, $\hat{\mathbf{H}}$ die durch das Rest-U-Netzes (203) erzeugt und durch eine Normalisierungsfunktion normalisiert wird, $\mathbf{y}$ die erwartete Lokalisierung ist, $\hat{\mathbf{y}}$ die vorhergesagte Lokalisierung ist und die $\mathcal{N}(\mathbf{y}, \sigma^2)$ erwartete Heatmap ist, die durch Abtastung aus der Normalverteilung $\mathcal{N}$ mit der Standardabweichung $\sigma$ um die erwartete Lokalisierung $\mathbf{y}$ erzeugt wird.

**16.** Das Verfahren nach Anspruch 15, wobei $\sigma$ gleich 3 ist.

**17.** Das Verfahren nach einem der Ansprüche 13-16, wobei das Training des trainierten Rest-U-Netzes (203) eine lineare Kombination der Minimierung der Divergenz und der Minimierung des euklidischen Abstands beinhaltet: $\mathcal{L}(\hat{\mathbf{H}},\mathbf{y}) = \mathcal{L}_E(\mathrm{DSNT}(\hat{\mathbf{H}}),\mathbf{y}) + \lambda\mathcal{L}_D(\hat{\mathbf{H}},\mathbf{y}) = \mathcal{L}_E(\hat{\mathbf{y}},\mathbf{y}) + \lambda\mathcal{L}_D(\hat{\mathbf{H}},\mathbf{y})$,
wobei $\lambda$ ein Regularisierungskoeffizient-Hyperparameter ist.

**18.** Das Verfahren nach Anspruch 17, wobei $\lambda$ gleich 1 ist.

**19.** Das Verfahren nach einem der Ansprüche 13-18, wobei die mindestens eine Heatmap und die kommentierte Heatmap unter Verwendung des gleichen Volumens von medizinischen Bildern oder unter Verwendung eines unterschiedlichen Volumens erzeugt werden.

**20.** Das Verfahren nach einem der Ansprüche 1-19, wobei die 3D-differenzierbare räumliche zu numerische Transformation beinhaltet:

$$\mathrm{DSNT}(\hat{\mathbf{H}}) = \left[\langle\hat{\mathbf{H}}, \mathbf{X}\rangle_F, \langle\hat{\mathbf{H}}, \mathbf{Y}\rangle_F, \langle\hat{\mathbf{H}}, \mathbf{Z}\rangle_F\right],$$

wobei $\hat{\mathbf{H}} = \varphi(\mathbf{H})$ und die Heatmap H ist, $\hat{\mathbf{H}}$ die durch das Rest-U-Netz (203) erzeugt und durch eine Normalisierungsfunktion normalisiert wird, wobei $<\cdot, \cdot>_F$ ein Frobenius-Innenprodukt zweier Matrizen darstellt, wobei die beiden Matrizen aus $\hat{\mathbf{H}}$ **X, Y** und **Z** ausgewählt sind, und wobei
**X, Y** und **Z** Gitter in Form von $m \times n \times l$-*Matrizen* sind, definiert als:

$$\mathbf{X}_{i,j,k} = \frac{2j - (n+1)}{n}, \mathbf{Y}_{i,j,k} = \frac{2i - (m+1)}{m}, \mathbf{Z}_{i,j,k} = \frac{2k - (l+1)}{l}.$$

**21.** Das Verfahren gemäß einem der Ansprüche 1-20, bei dem jeder Restblock der Kodierung (302, 303, 304, 305) folgende Schritte aufweist: eine erste Faltungsschicht der Kodierung (402) zum Empfangen einer Eingabe eines Restblock der Kodierung (302, 303, 304, 305), eine erste Normschicht der Kodierung (403) zum Empfangen einer Ausgabe von der ersten Faltungsschicht der Kodierung (402), eine erste Aktivierungsschicht der Kodierung (404) zum Empfangen einer Ausgabe von der ersten Normschicht der Kodierung (403), eine zweite Faltungsschicht der Kodierung (405) zum Empfangen einer Ausgabe von der ersten Aktivierungsschicht der Kodierung (404), eine zweite Normschicht der Kodierung (406) zum Empfangen einer Ausgabe von der zweiten Faltungsschicht der Kodierung (405), eine zweite Aktivierungsschicht der Kodierung (407) zum Empfangen einer Ausgabe von der zweiten Normschicht der Kodierung (406) und eine nachfolgende Faltungsschicht der Kodierung (408) zum Empfangen der Eingabe (301) des Restblocks der Kodierung (302, 303, 304, 305), und

wobei die nachfolgende Faltungsschicht der Kodierung (408) eine 3D-Matrix der Größe 3 x 3 x 3 oder 1 x 1 x 1 enthält, wobei die zweite Faltungsschicht der Kodierung (405) eine 3D-Matrix der Größe 3 x 3 x 3 enthält und die erste Faltungsschicht der Kodierung (402) eine 3D-Matrix der Größe 3 x 3 x 3 enthält,
wobei die Ausgabe von der nachfolgenden Faltungsschicht der Kodierung (408) eine größere Kanalanzahl als die Eingabe (301) des Restblocks der Kodierung (302, 303, 304, 305) aufweist, wobei die Ausgabe von der ersten Faltungsschicht der Kodierung (402) eine größere Kanalanzahl als die Eingabe des Restblocks der Kodierung (302, 303, 304, 305) aufweist,
wobei eine Ausgabe von der nachfolgenden Faltungsschicht der Kodierung und von der zweiten Aktivierungsschicht der Kodierung (407) durch regelmäßige Matrixaddition zusammengeführt wird (409),

wobei die erste Faltungsschicht der Kodierung (402) und die nachfolgende Faltungsschicht der Kodierung (408) einen geschrittenen 3D-Faltungsoperator umfassen, wobei der geschrittene 3D-Faltungsoperator umfasst:

$$\mathbf{K} \star_s \mathbf{I} = \sum_{p=1}^{s} \sum_{q=1}^{s} \sum_{r=1}^{s} \mathbf{K}_{p,q,r} \star \mathbf{I}_{p,q,r},$$

wobei K ein Kern ist, der eine 3D-Matrix umfasst, I ein beispielhaftes Eingabevolumen ist und s der Schritt ist, und wobei die erste Aktivierung der Encoding-Norm und die zweite Aktivierungsschicht von Encoding (407) eine Aktivierungsfunktion umfasst, wobei die Aktivierungsfunktion aus tanh-Funktion, einer Rectified Linear Unit oder einer parametrischen Rectified Linear Unit ausgewählt ist, wobei die parametrische Rectified Linear Unit Folgendes umfasst:

$$f(\mathbf{y}_i) = \mathbf{y}_i \text{ if } \mathbf{y}_i \geq 0,$$

$$f(\mathbf{y}_i) = \alpha_i \mathbf{y}_i \text{ if } \mathbf{y}_i < 0$$

wobei $\mathbf{y}_i$ das i-te Element des Eingabevolumens $\mathbf{y}$ ist und *a* ein lernbarer Parameter ist, und wobei die erste Normschicht der Kodierung (403) und die zweite Normschicht der Kodierung (406) eine Batch-Normalisierung, eine Instanznormalisierung, eine Schichtnormalisierung oder eine 3D-Batch-Normalisierung beinhalten und wobei die 3D-Batch-Normalisierung beinhaltet:

$$\mathbf{y} = \frac{\mathbf{x} - E[\mathbf{x}]}{\sqrt{Var[\mathbf{x}] + \epsilon}} \cdot \gamma + \beta,$$

wobei $\mathbf{x}$ die Eingabe und $\mathbf{y}$ die Ausgabe der Batch-Normalisierungsschicht ist; $\gamma$ und $\beta$ sind lernbare Parameter und $\varepsilon$ ist ein kleiner konstanter Wert, der dem Nenner für numerische Stabilität hinzugefügt wird.

22. Das Verfahren nach einem der Ansprüche 1-21, wobei jeder Restblock der Dekodierung (307, 308, 309, 310) umfasst:

eine erste Faltungsschicht der Dekodierung (502) zum Empfangen einer Eingabe (501) eines Restblocks der Dekodierung (307, 308, 309, 310), der einen 3D-Kreuzkorrelationsoperator und eine 3D-Matrix der Größe 1 x 1 x 1 umfasst, eine Unsample-Schicht der Dekodierung (503) zum Empfangen der Ausgabe der ersten Faltungsschicht der Dekodierung (502), wobei die Unsample-Schicht der Dekodierung (503) konfiguriert ist, um die Ausgabe der ersten Faltungsschicht der Dekodierung (502) räumlich um den Faktor zwei unter Verwendung der nächsten Nachbarinterpolation zu unsampeln, eine erste Normschicht der Dekodierung (504) zum Empfangen der Ausgabe der Unsample-Schicht der Dekodierung (503), eine erste Aktivierungsschicht (505) zum Empfangen der Ausgabe der ersten Normschicht der Dekodierung (504), eine zweite Faltungsschicht der Dekodierung (506) zum Empfangen der Ausgabe der ersten Aktivierungsschicht (505), wobei die zweite Faltungsschicht der Dekodierung (506) einen Kern umfasst, der eine 3D-Matrix der Größe 3 x 3 x 3, eine zweite Normschicht der Dekodierung (507) zum Empfangen der Ausgabe der zweiten Faltungsschicht der Dekodierung (506), eine zweite Aktivierungsschicht der Decodierung (508) zum Empfangen der Ausgabe der zweite Normschicht der Dekodierung (507), und wobei der 3D-Kreuzkorrelationsoperator umfasst:

$$\mathbf{K} \star \mathbf{I}(x, y, z) = \sum_{i=-N}^{N} \sum_{j=-N}^{N} \sum_{l=-N}^{N} \mathbf{K}(i, j, l) \times \mathbf{I}(x + i, y + j, z + l),$$

wobei $\mathbf{K}$ ein Kern ist, der eine 3D-Matrix der Größe $N \times N \times N$ umfasst, und $\mathbf{I}(x,y,z)$ ein Voxel eines beispielhaften Eingangsvolumens $\mathbf{I}$ der Koordinaten *x,y,z* ist, wobei die erste Normschicht der Dekodierung (504) und die zweite Normschicht der Dekodierung (507) eine Batch-Normalisierung, eine Instanznormalisierung, eine Schichtnormalisierung oder eine 3D-Batch-Normalisierung beinhalten und wobei die 3D-Batch-Normalisierung beinhaltet:

$$\mathbf{y} = \frac{\mathbf{x} - E[\mathbf{x}]}{\sqrt{Var[\mathbf{x}] + \epsilon}} \cdot \gamma + \beta,$$

wobei $\mathbf{x}$ die Eingabe und $\mathbf{y}$ die Ausgabe der Batch-Normalisierungsschicht ist; $\gamma$ und lernbare Parameter $\beta$ sind und ein kleiner konstanter Wert $\varepsilon$ ist, der dem Nenner für die numerische Stabilität hinzugefügt wird, und

wobei die erste Aktivierungsschicht der Decodierung (505) und die zweite Aktivierungsschicht der Decodierung (508) eine Aktivierungsfunktion umfassen, wobei die Aktivierungsfunktion aus tanh-Funktion, einer Rectified Linear Unit oder einer parametrischen Rectified Linear Unit ausgewählt ist, wobei die parametrische gleichgerichtete lineare Einheit umfasst:

$$f(\mathbf{y}_i) = \mathbf{y}_i \text{ if } \mathbf{y}_i \geq 0,$$

$$f(\mathbf{y}_i) = \alpha_i \mathbf{y}_i \text{ if } \mathbf{y}_i < 0$$

wobei $\mathbf{y}_i$ das i-te Element des Eingabevolumens $\mathbf{y}$ ist und $a$ ein lernbarer Parameter ist.

23. Das Verfahren nach einem der Ansprüche 21-22, wobei jeder Restblock (302, 303, 304, 305, 307, 308, 309, 310) umfasst:

$$\mathbf{y}_l = \mathrm{h}(\mathbf{x}_l) + \mathcal{F}(\mathbf{x}_l, \mathbf{W}_l),$$

$$\mathbf{x}_{l+1} = f(\mathbf{y}_l)$$

wobei $\mathbf{x}_l$ und $\mathbf{x}_{l+1}$ die Eingabe und Ausgabe des *l*-ten Restblocks sind, $\mathcal{F}(\cdot)$ eine Restfunktion ist, $f(\mathbf{y}_l)$ eine Aktivierungsfunktion ist und $\mathrm{h}(\mathbf{x}_l)$ eine Identitätsabbildungsfunktion ist,
wobei für jeden Restblock der Kodierung (302, 303, 304, 305) die Restfunktion die erste Faltungsschicht der Kodierung (402), die erste Normschicht der Kodierung (403), die erste Aktivierungsschicht der Kodierung (404), die zweite Faltungsschicht der Kodierung (405), die zweite Normschicht der Kodierung (406) und die zweite Aktivierungsschicht der Kodierung (407) umfasst, und
wobei für jeden Restblock der Dekodierung (307, 308, 309, 310) die Restfunktion die zweite Faltungsschicht der Dekodierung (506), die zweite Normschicht der Dekodierung (507) und die zweite Decoding-Aktivierungsschicht (508) umfasst.

24. Das Verfahren nach Anspruch 23, wobei für jeden Restblock der Kodierung (302, 303, 304, 305):

$$\mathrm{h}(\mathbf{x}_l) = \sum_{c=0}^{C_{in}-1}(\mathbf{K}_{C_{out},c} \star \mathbf{x}_{l_c}),$$

wobei ein 3D-Kreuzkorrelationsoperator oder ein gestufter 3D-Kreuzkorrelationsoperator ist; $C_{in}$ die Anzahl der Eingabekanäle ist; $C_{out}$ die Anzahl der Ausgabekanäle ist; $\mathbf{K}$ ein Satz von lernbaren Gewichten in Form von Faltungskernen ist; und s der Schrittwert ist, wobei der 3D-Kreuzkorrelationsoperator Folgendes umfasst:

$$\mathbf{K} \star \mathbf{I}(x,y,z) = \sum_{i=-N}^{N}\sum_{j=-N}^{N}\sum_{l=-N}^{N}\mathbf{K}(i,j,l) \times \mathbf{I}(x+i, y+j, z+l),$$

wobei $\mathbf{K}$ ein Kern ist, der eine 3D-Matrix der Größe $N \times N \times N$ umfasst, und $I(x,y,z)$ ein Voxel eines beispielhaften Eingabevolumens $\mathbf{I}$ der Koordinaten $x,y,z$ ist.

25. Das Verfahren nach einem der Ansprüche 21-24, wobei für jeden Restblock der Dekodierung (307, 308, 309, 310) $\mathrm{h}(\mathbf{x}_l) = \mathbf{x}_l$.

26. Das Verfahren nach einem der Ansprüche 1-25, wobei das mindestens eine Landmarkenmerkmal (104, 206) aus der folgenden Liste ausgewählt wird: Ein- und Ausgänge um das Ostium der linken Koronararterie, Ein- und Ausgänge um das Ostium der rechten Koronararterie, Spitze des linken Ventrikels, Basis des linken Ventrikels, 17 Segmente des linken Ventrikels gemäß American Heart Association, Verbindungsstellen von linkem und rechtem Ventrikel, Ostium LCA (Ostium der linken Koronararterie), Ostium RCA (Ostium der rechten Koronararterie), LM-Abzweigung der linken Hauptkoronararterie, DGl-Ursprung der 1. Diagonalarterie, DG2-Ursprung der 2. Diagonalarterie, Ursprung der Ramus intermedius-Arterie, OM1-Ursprung der 1. obtusen Marginalarterie, OM2-Ursprung der 2. obtusen Marginalarterie, RCA-Ursprung der rechten Koronararterie, AM-Ursprung des akuten Marginalastes, PDA-Ursprung der Arteria descendens posterior, PL-Ursprung der posterioren linken Ventrikelarterie, Einmündung der Vena cava superior in den rechten Vorhof, Einmündung der Vena cava inferior in den rechten Vorhof, Einmündung des Sinus coronarius in den rechten Vorhof, Einmündung des rechten Vorhof-/Herzohrs in den rechten Vorhof, Spitze des rechten Vorhof-/Herzohrs, Einmündung der linken oberen/unteren und rechten oberen/unteren Lungenvenen in den linken Vorhof, Einmündung des rechten Vorhof-/Herzohrs in den rechten Vorhof, Spitze des linken Vorhof-/Herzohrs, Ursprung des Truncus pulmonalis, Trikuspidalklappe einschließlich der Segel: anterior, posterior und septal, Spitze des rechten Ventrikels, Ursprung der aufsteigenden Aorta, Aortenklappe einschließlich der Segel: rechts, links, posterior-anterior, rechts-anterior, rechts-posterior, anterior Koronar, links Koronar, rechts Koronar, nicht-koronare, bikuspide Klappe einschließlich der Segel: anterior und posterior, mitralklappe einschließlich der Segel: anterior und posterior, ARTERIA CEREBRI ANTERIOR, Landmarken am Beginn des horizontalen oder präkommunizierenden segments, Vertikalen, postkommunizierenden oder infrakallosalen segments, präcallosalen Segments, suprakallosalen Segments, postcallosalen Segments, ARTERIA COMMUNICANS ANTERIOR, ARTERIA CEREBELLI SUPERIOR, ARTERIA CEREBELLI ANTERIOR INFERIOR, ARTERIA CEREBELLI POSTERIOR INFERIOR, ARTERIA CEREBRI MEDIA, Landmarken am Beginn des Sphenoidal/Horizontalen Segments, insularen Segments, opercularen Segments, kortikalen Segments, Arteria Cerebri posterior, Landmarken am Beginn des Präkommunizierenden Segments, postkommunizierenden Segments, quadrigeminären Segments, kortikalen Segments, ARTERIA COMMUNICANS POSTERIOR, ARTERIA OPHTHALMICA, RECHTE UND LINKE ARTERIA CHOROIDALIS, ARTERIA BASILARIS, ARTERIA SPINALIS ANTERIOR, TRUNCUS BRACHIOCEPHALICUS, RECHTE/-LINKE ARTERIA SUBCLAVIA, RECHTE/LINKE ARTERIA CAROTIS COMMUNIS, RECHTE/LINKE ARTERIA CAROTIS INTERNA, RECHTE/LINKE ARTERIA CAROTIS EXTERNA, RECHTE/LINKE ARTERIA VERTEBRALIS, RECHTER/LINKER TRUNCUS THYROCERVICALIS, RECHTE/LINKE ARTERIA THORACICA INTERNA, RECHTER/LINKER TRUNCUS COSTOCERVICALIS, RECHTE/LINKE ARTERIA SUPRASCAPULARIS, RECHTE/LINKE ARTERIA CERVICALIS TRANSVERSA, RECHTE/LINKE ARTERIA AXILLARIS, RECHTE/LINKE ARTERIA BRACHIALIS, RECHTE/LINKE ARTERIA ULNARIS, RECHTE/LINKE ARTERIA RADIALIS, RECHTE/LINKE ARTERIA THYROIDEA SUPERIOR, RECHTE/LINKE ARTERIA LINGUALIS, RECHTE/LINKE ARTERIA FACIALIS, RECHTE/LINKE ARTERIA PHARYNGEA ASCENDENS, RECHTE/LINKE ARTERIA OCCIPITALIS, RECHTE/-LINKE ARTERIA AURICULARIS POSTERIOR, RECHTE/LINKE ARTERIA TEMPORALIS SUPERFICIALIS, RECHTE/LINKE ARTERIA MAXILLARIS, HINTERE INTERKOSTALARTERIEN, SUBKOSTALARTERIEN, OBERE PHRENIKALARTERIEN, PERIKARDARTERIEN, ÖSOPHAGUSARTERIEN, ÖSOPHAGUSÄSTE DER ARTERIA THYROIDEA INFERIOR (OBERES DRITTEL), ÖSOPHAGUSÄSTE DES THORAKALEN ANTEILS DER AORTA (MITTLERES DRITTEL), ÖSOPHAGUSÄSTE DER ARTERIA GASTRICA SINISTRA (UNTERES DRITTEL), UNTERE ZWERCHFELLARTERIEN, LUMBALARTERIEN, TRUNCUS COELIACUS, ARTERIA MESENTERICA SUPERIOR, ARTERIA MESENTERICA INFERIOR, MITTLERE NEBENNIERENARTERIE, NIERENARTERIEN, HODENARTERIE/INTERNE SAMENARTERIE/EIERSTOCKARTERIE, GEMEINSAME ARTERIA ILIACA, ARTERIA ILIACA INTERNA, ARTERIA ILIACA EXTERNA, ARTERIA FEMORALIS, ARTERIA POPLITEA, ARTERIA TIBIALIS ANTERIOR, DORSALE FUSSARTERIEN, ARTERIA TIBIALIS POSTERIOR, MEDIALE PLANTARARTERIEN, LATERALE PLANTARARTERIEN, V. CAVA SUPERIOR, VV. BRACHIOCEPHALICAE, V. SUBCLAVIA, VV. IUGULARES, V. CAVA INFERIOR, VV. ILIACAE COMMUNES, V. ILIACA EXTERNA, V. ILIACA INTERNA, VV. CORDIS, V. CARDIACA MAGNA, V. CARDIACA PARVA, V. CARDIACA MEDIA, V. POSTERIOR VENTRICULI SINISTRI, V. OBLIQUA ATRII SINISTRI, VV. CARDIACAE ANTERIORES, V. MARGINALIS DEXTRA, V. MARGINALIS SINISTRA, VV. CARDIACAE MINIMAE, VV. CEREBRI, V. CEREBRI INTERNA, V. SEPTI PELLUCIDI ANTERIOR, V. SEPTI PELLUCIDI POSTERIOR, V. THALAMOSTRIATA SUPERIOR, VV. THALAMOSTRIATAE INFERIORES, V. CHOROIDEA SUPERIOR, V. CHOROIDEA INFERIOR, V. CEREBRI MAGNA, VV. CEREBRI SUPERIORES, VV. CEREBRI INFERIORES, V. CEREBRI ANTERIOR, V. CEREBRI MEDIA PROFUNDA, V. CEREBRI MEDIA SUPERFICIALIS, VV. ANASTOMOTICAE, V. ANASTOMOTICA SUPERIOR, V. ANASTOMOTICA INFERIOR, V. BASALIS, V. COMMUNICANS ANTERIOR, V. COMMUNICANS POSTERIOR, CIRCULUS VENOSUS CEREBRI, V. COMMUNICANS POSTERIOR, V. SUPERIOR VERMIS, VV. HEMISPHAERII CEREBELLI SUPERIORES, V. VERMIS INFERIOR, VV. HEMISPHAERII CEREBELLI INFERIORES, VV. DIPLOICAE, V. DIPLOICA FRONTALIS, V. DIPLOICA TEMPORALIS ANTERIOR, V. DIPLOICA TEMPORALIS POSTERIOR, V. DIPLOICA OCCIPITALIS, VV. EMISSARIAE, V. EMISSARIA PARIETALIS, V. EMISSARIA MASTOIDEA, V. EMISSARIA CONDYLARIS, V. EMISSARIA OCCIPITALIS, PLEXUS VENOSUS FORAMINIS OVALIS, PLEXUS VENOSUS CAROTICUS INTERNUS, PLEXUS VENOSUS CANALIS HYPOGLOSSI, VV. MENINGEAE, VV. MENINGEAE MEDIAE, SINUS DURAE MATRIS, SINUS SAGITTALIS SUPERIOR, SINUS SAGITTALIS INFERIOR, SINUS RECTUS, SINUS TRANSVERSUS, SINUS SIGMOIDEUS, SINUS OCCIPITALIS, CONFLUENS SINUUM, SINUS CAVERNOSUS, SINUS INTERCAVERNOSI, PLEXUS BASILARIS, V. OPHTHALMICA SUPERIOR, V. LACRIMALIS, VV. ETHMOIDALES, ANTERIOR ET POSTERIOR, V. NASOFRONTALIS, V. OPHTHALMICA INFERIOR, V. FACIALIS, V. ANGULARIS, V. SUPRATROCHLEARIS, V. SUPRAORBITALIS, VV. PALPEBRALES, VV. NASALES EXTERNAE, VV. LABIALES, V. PROFUNDA FACIEI, RAMI PAROTIDEI, V. SUBMENTALIS, V. PALATINA EXTERNA, V. RETROMANDIBULARIS, VV. TEMPORALES SUPERFICIALES, V. TEMPORALIS MEDIA, V. TRANSVERSA FACIEI, VV. ARTICULARES, V. STYLOMASTOIDEA, VV. AURICULARES ANTERIORES, VV. PAROTIDEAE, VV. MAXILLARES, V.

IUGULARIS EXTERNA, V. AURICULARIS POSTERIOR, V. OCCIPITALIS, V. SUPRASCAPULARIS, VV. TRANSVERSAE COLLI, V. IUGULARIS ANTERIOR, PLEXUS PTERYGOIDEUS, V. SPHENOPALATINA, VV. MENINGEAE MEDIAE, VV. TEMPORALES PROFUNDAE, VV. ALVEOLARES SUP., VV. MASSETERICAE, V. ALVEOLARIS INFERIOR, V. VERTEBRALIS, V. VERTEBRALIS ANTERIOR, V. CERVICALIS PROFUNDA, V. IUGULARIS INTERNA, SINUS SIGMOIDEUS, SINUS OCCIPITALIS, PLEXUS VENOSUS CANALIS HYPOGLOSSI, V. CANALICULI COCHLEAE, SINUS PETROSUS INFERIOR, V. OCCIPITALIS, V. FACIALIS, VV. PHARYNGEALES, V. LINGUALIS, V. PROFUNDA LINGUAGE, VV. DORSALES LINGUAE, V. COMITANS N. HYPOGLOSSI, VV. THYROIDEAE SUPERIORES, VV. SUBFASCIALES, ARCUS VENOSUS PALMARIS PROFUNDUS, VV. RADIALES, VV. ULNARES, VV. BRACHIALES, V. BRACHIALIS COMMUNIS, V. BASILIKA, VV. MUSCULUS, VV. COLATERALIS ULNAE, V PROFUNDA BRACHII, V. AXILLARIS, V. SUBCLAVIA, VV. CUTANEAE, VV. DIGITORUM, V. INTERCAPITALIS, ARCUS VENOSUS DIGITALIS PALMARIS, V. INTERDIGITALIS, ARCUS VENOSUS DIGITALIS DORSALIS, RETE VENOSUM DORSALE MANUS, VV. METACARPALES DORSALES, ARCUS VENOSUS METACARPALIS DORSALIS, VV. MARGINALES, V. SALVATELLA, V. CEPHALICA POLLICIS, V. CEPHALICA, V. CEPHALICA ANTEBRACHII, V. CEPHALICA ACCESSORIA, V. INTERMEDIA CUBITI, V. BASILICA, V. INTERMEDIA ANTEBRACHII, V. INTERMEDIA BASILICA, V. INTERMEDIA CEPHALICA, V. CAVA SUPERIOR, V. BRACHIOCEPHALICA, ANGULUS VENOSUS, V. THYROIDEA INFERIOR, VV. THYROIDEAE IMAE, V. VERTEBRALIS, V. CERVICALIS PROFUNDA, V. IUGULARIS EXT., VV. PERICARDIACOPHRENICAE, VV. THYMICAE, VV. PERICARDIALES, VV. MEDIASTINALES, VV. BRONCHIALES, VV. TRACHEALES, VV. ESOPHAGEALES, VV. THORACICAE INTERNAE, VV. MUSCULOPHRENICAE, VV. EPIGASTRICAE SUPERIORES, VV. INTERCOSTALES ANTERIORES, RAMI PERFORANTES, RAMI STERNALES, V. INTERCOSTALIS SUPERIOR, VV. CUTANEAE ABDOMINIS ET PECTORIS, PLEXUS VENOSUS AREOLARIS, VV. THORACOEPIGASTRICAE, VV. COSTOAXILLARES, V. AZYGOS, V. HEMIAZYGOS, PLEXUS VENOSI VERTEBRALES EXTERNI, PLEXUS VENOSI VERTEBRALES INTERNI, VV. BASIVERTEBRALES, VV. INTERVERTEBRALES, VV. SPINALES, VV. SPINALES INTERNAE, VV. SPINALES EXTERNAE, VV. RADICULARES, VV. DORSALES PEDIS, VV. PLANTARES LATERALES, ARCUS VENOSUS PLANTARIS, VV. PLANTARES MEDIALES, VV. METATARSALES PLANTARES, VV. PERFORANTES, VV. TIBIALES ANTERIORES, VV. TIBIALES POSTERIORES, VV. FIBULARES S. PERONEALES, V. POPLITEA, VV. GENICULARES, VV. SURALES, V. SAPHENA PARVA, V. FEMORALIS, V. EPIGASTRICA SUPERFICIALIS, V. CIRCUMFLEXA ILIACA SUPERFICIALIS, VV. THORACOEPIGASTRICAE, VV. PUDENDAE EXTERNAE,: VV. SCROTALES ANTERIORES, VV. LABIALES ANTERIORES, VV. DORSALES SUPERFICIALES PENIS, VV. DORSALES SUPERFICIALES CLITORIDIS, V. SAPHENA MAGNA, V.PROFUNDA FEMORIS, VV. PERFORANTES, VV. CRICUMFLEXAE MEDIALES FEMORIS, VV. CRICUMFLEXAE LATERALES FEMORIS, VV. GLUTEAE SUPERIORES, VV. GLUTEAE INFERIORES, VV. DIGITALES DORSALES, VV. INTERCAPITALES, VV. METATARSALES DORSALES, ARCUS VENOSUS DORSALIS PEDIS, VV. DIGITALES PLANTARES, ARCUS VENOSUS PLANTARIS, RETE VENOSUM PLANTARE, RETE VENOSUM DORSALE, V. SAPHENA, V. SAPHENA PARVA, V. CAVA INFERIOR, VV. PHRENICAE INFERIORES, VV. LUMBALES, VV. HEPATICAE, VV. RENALES, V. SUPRARENALIS, V. TESTICULARIS, V. OVARICA, VV. ILIACAE COMMUNES, V. SACRALIS MEDIANA, V. ILIACA EXTERNA, V. CIRCUMFLEXA ILIACA PROFUNDA, V. EPIGASTRICA INFERIOR, V. ILIACA INTERNA, V. ILIOLUMBALIS, VV. SACRALES LATERALES, VV. GLUTEAE SUPERIORES, VV. GLUTEAE INFERIORES, VV. OBTURATORIAE, V. PUDENDA INTERNA, VV. PROFUNDAE PENIS BZW. CLITORIDIS, VV. BULBI PENIS RESP. VV. BULBI VESTIBULI VAGINAE, VV. SCROTALES POSTERIORES BZW. LABIALES POSTERIORES, VV. RECTALES INFERIORES, V. DORSALIS PENIS, VV. CRICUMFLEXAE PENIS, V. DORSALIS CLITORIDIS, VV. DORSALES PENIS SUPERFICIALES, VV. DORSALES CLITORIDIS SUPERFICIALES, PLEXUS VENOSUS RECTALIS, PLEXUS VENOSUS VESICALIS, PLEXUS VENOSUS PROSTATICUS, PLEXUS VENOSUS UTERINUS, PLEXUS VENOSUS VAGINALIS, V. PORTAE HEPATIS, V. MESENTERICA SUPERIOR, VV. IEIUNALES ET ILEALES, V. ILEOCOLICA, V. APPENDICULARIS, V. COLICA DEXTRA, VV. PANCREATICAE, V. GASTROOMENTALIS DEXTRA, V. PANCREATICODUODENALIS INF., V. SPLENICA S. LIENALIS, VV. PANCREATICAE, VV. GASTRICAE BREVES, V. GASTROOMENTALIS SINISTRA, V. MESENTERICA INFERIOR, VV. SIGMOIDEAE, V. COLICA SINISTRA (LINKE KOLIKVENE), V. RECTALIS SUPERIOR (OBERE REKTALVENE), V. GASTRICA SINISTRA (LINKE MAGENVENE), V. GASTRICA DEXTRA (RECHTE MAGENVENE), V. PREPYLORICA (PRÄPYLORISCHE VENE), V. PANCREATICODUODENALIS SUPERIOR POSTERIOR (HINTERE OBERE PANKREATIKODUODENALE VENE), V. CYSTICA (GALLENBLASENVENE), V. UMBILICALIS (Nabelvene), Papilla duodeni major / Papilla Vateri, Einmündung des Ductus cysticus in den Ductus choledochus, Abgang des Ductus cysticus aus der Gallenblase, Vereinigung des rechten und linken Lebergangs (Ductus hepaticus dexter et sinister), Vereinigung des rechten vorderen und rechten hinteren Lebergangs, Carina tracheae (Bifurkation), Aufzweigung zum rechten Oberlappenbronchus, Aufzweigung zum rechten Mittellappenbronchus, Aufzweigung zum rechten Unterlappenbronchus, Aufzweigung zum linken Oberlappenbronchus, Aufzweigung zum linken Unterlappenbronchus, Aufzweigung zum ersten rechten Segmentbronchus, Aufzweigung zum zweiten rechten Segmentbronchus, Aufzweigung zum dritten rechten Segmentbronchus, Aufzweigung zum vierten rechten Segmentbronchus, Aufzweigung zum fünften rechten Segmentbronchus, Aufzweigung zum sechsten rechten Segmentbronchus, Aufzweigung zum siebten rechten Segmentbronchus, Aufzweigung zum achten rechten Segmentbronchus, Aufzweigung zum neunten rechten Segmentbronchus, Aufzweigung zum zehnten rechten Segmentbronchus, Aufzweigung zum ersten rechten Segmentbronchus, Aufzweigung zum ersten linken Segmentbronchus, Aufzweigung zum zweiten linken Segmentbronchus, Aufzweigung zum dritten linken Segmentbronchus, Aufzweigung zum vierten linken Segmentbronchus, Aufzweigung zum fünften linken Segmentbronchus, Aufzweigung zum sechsten linken Segmentbronchus, Aufzweigung zum siebten linken Segmentbronchus, Aufzweigung zum achten linken Segmentbronchus, vordere Nasenöffnungen (anterior nares), Abfluss der rechten hinteren Siebbeinzellen in den rechten sphenoethmoidalen Recessus, Abfluss der linken hinteren Siebbeinzellen in den linken sphenoethmoidalen Recessus, Abfluss der rechten Keilbeinhöhle in den rechten sphenoethmoidalen Recessus, Abfluss des rechten sphenoethmoidalen Recessus in den rechten oberen Nasengang, Abfluss des linken sphenoethmoidalen Recessus in den linken oberen Nasengang, Abfluss der rechten Stirnhöhle in den rechten Frontalrecessus, Abfluss der linken Stirnhöhle in den linken Frontalrecessus, Abfluss des rechten Frontalrecessus in den rechten mittleren Nasengang, Abfluss des linken Frontalrecessus in den linken mittleren Nasengang, Abfluss der rechten frontoethmoidalen Zellen in den rechten ostiomeatalen Komplex, Abfluss der linken frontoethmoidalen Zellen in den linken ostiomeatalen Komplex, Abfluss der rechten Kieferhöhle in den rechten ostiomeatalen Komplex, Abfluss der linken Kieferhöhle in den linken ostiomeatalen Komplex, Abfluss des rechten ostiomeatalen Komplexes in den rechten mittleren Nasengang, Abfluss des linken ostiomeatalen Komplexes in den linken mittleren Nasengang, Abfluss des rechten Ductus nasolacrimalis in den rechten unteren Nasengang, Abfluss des linken Ductus nasolacrimalis in den linken unteren Nasengang, hintere Nasenöffnungen / Choanen, Uvula (Zäpfchen), Rachenmandel (Tonsilla pharyngealis), Öffnung der rechten und linken Tuba auditiva, Spitze der Epiglottis, rechte und linke Recessus piriformes, postkrikoidaler Bereich, Ringknorpel (Cartilago cricoidea), Interarytänafelde, rechte und linke aryepiglottische Falte, rechte und linke Aryknorpel, rechte und linke Vestibularfalte, Ausführungsgang des rechten und linken Larynxsacks, Stimmbänder, rechte und linke Stimmfalte, erster Trachealknorpel, Nieren, Nierenpapille, kleine Kelche (kleine Nierenkelche), Nierenpyramiden, Nierenbecken, Eintritt des Ureters, abdominaler Aortenplexus, Nervus abducens, Nervus accessorius, Nervus obturatorius accessorius, Aldermann-Nerv, anokokzygealer Nerv, Ansa cervicalis, Nervus interosseus anterior, Nervus alveolaris superior anterior, Auerbach-Plexus, Nervus auriculotemporalis, Nervus axillaris, Plexus brachialis, R. buccalis des Nervus facialis (buccaler Ast des Fazialis), Nervus buccalis, Plexus cardiacus, Nervi cavernosi, Plexus cavernosus, Ganglia coeliaca, R. cervicalis des Nervus facialis, Plexus cervicalis, Chorda tympani, Ganglion ciliare, Nervus coccygeus, Nervus cochlearis, Nervus fibularis communis, Gemeinsame palmare Digitalnerven des Nervus medianus, R. profundus des Nervus radialis (tiefer Ast des Nervus radialis), Nervus fibularis profundus, Nervus petrosus profundus, Nervi temporales profundi, diagonales Band nach Broca (Ligamentum diagonale Brocae), R. digastricus des Nervus facialis, R. dorsalis des Nervus ulnaris, Nervus dorsalis clitoridis, Nervus dorsalis penis, Nervus dorsalis scapulae, Plexus oesophageus, Nervi ethmoidales, Nervus laryngeus externus, Nervus nasalis externus, Nervus facialis, Nervus femoralis, Nervus frontalis, Plexus gastrici, Ganglion geniculatum, R. genitalis des Nervus genitofemoralis, Nervus genitofemoralis, Nervus glossopharyngeus, Nervus auricularis magnus, Nervus occipitalis major, Nervus petrosus major, Plexus hepaticus, Nervus hypoglossus, Nervus iliohypogastricus, Nervus ilioinguinalis, Nervus alveolaris inferior, inferiores Analkanalnerven / Nervi anales inferiores, Nervus cardiacus inferior, Ganglion cervicale inferius, Nervus gluteus inferior, Plexus hypogastricus inferior, Plexus mesentericus inferior, Nervus palpebralis inferior, Nervus infraorbitalis, Plexus infraorbitalis, Nervus infratrochlearis, Nervi intercostales, Nervus intercostobrachialis, Nervus cutaneus intermedius, Plexus caroticus internus, Nervus laryngeus internus, Interneuron, Ganglion jugulare, Nervus lacrimalis, Fasciculus lateralis, Nervus cutaneus lateralis antebrachii, Nervus cutaneus lateralis femoris, Nervus pectoralis lateralis, Nervus plantaris lateralis, Nervus pterygoideus lateralis, Nervus occipitalis minor, Nervus lingualis, Nervi ciliares longi, Radix longa ganglii ciliares, Nervus thoracicus longus, Nervus subscapularis inferior, Nervi lumbales, Plexus lumbalis, Nn. splanchnici lumbales, Nervus lumboinguinalis, Plexus lumbosacralis, Truncus lumbosacralis, Nervus mandibularis, R. marginalis mandibularis des Nervus facialis, Nervus massetericus, Nervus maxillaris, Fasciculus medialis, Nervus cutaneus medialis brachii, Nervus cutaneus medialis antebrachii, Nervus cutaneus medialis, Nervus pectoralis medialis, Nervus plantaris medialis, Nervus pterygoideus medialis, Nervus medianus, Plexus myentericus (Auerbach-Plexus), Nervus mentalis, Nervus cardiacus medius, Ganglion cervicale medium, Nervus meningeus medius, Nervus motorius, Rami musculares des Nervus radialis, Nervus musculocutaneus, Nervus mylohyoideus, Nervus nasociliaris, Nervus nasopalatinus, Nervus canalis pterygoidei, Nervus musculi obturatorii internus, Nervus musculi quadrati femoris, Nervus musculi piriformis, Nervus stapedius, Nervus subclavius, Nervus intermedius, Nervus spinosus, Ganglion nodosum, Nervus obturatorius, Nervus oculomotorius, Nervus olfactorius, Nervus ophthalmicus, Nervus opticus, Ganglion oticum, Plexus ovaricus, Nervi palatini, R. palmaris des Nervus medianus, R. palmaris des Nervus ulnaris, Plexus pancreaticus, Plexus patellaris, Nn. splanchnici pelvici, Nervus cutaneus perforans, Rr. perineales des Nervus cutaneus femoris posterior, Nervus perinealis, Ganglion petrosum, R. pharyngeus des Nervus vagus, Rr. pharyngei des Nervus glossopharyngeus, Nervus pharyngeus, Plexus pharyngeus, Nervus phrenicus, Plexus phrenicus, Nervus auricularis posterior, R. posterior des Spinalnervs, Fasciculus posteriori, Nervus cutaneus brachii posterior, Nervus cutaneus antebrachii posterior, Nervus cutaneus femoris posterior, Nervi scrotales posteriores, Nervus alveolaris superior posterior, Rami digitales palmares proprii des Nervus medianus, Plexus prostaticus, Ganglion pterygopalatinum, Nervus pudendus, Plexus pudendus, Rami pulmonales des Nervus vagus, Nervus radialis, Nervus laryngeus recurrens, Plexus renalis, Plexus sacralis, Nn. splanchnici sacrales, Nervus saphenus, Nervus ischiadicus, Ganglion semilunare, Nervus sensorius, Nervi ciliares breves, Nervi sphenopalatini, Plexus splenicus, R. stylohyoideus des Nervus facialis, Nervus subcostalis, Ganglion submandibulare, Nervus suboccipitalis, R. superficialis des Nervus radialis, Nervus fibularis superficialis, Nervus cardiacus superior, Ganglion cervicale superius, Ganglion superius des Nervus glossopharyngeus, Ganglion superius des Nervus vagus, Nervus gluteus superior, Plexus hypogastricus superior, Nervus labialis superior, Nervus laryngeus superior, Nervus cutaneus brachii lateralis superior, Plexus mesentericus superior, Plexus rectalis superior, Nervi supraclaviculares, Nervus supraorbitalis, Plexus suprarenalis, Nervus suprascapularis, Nervus supratrochlearis, Nervus suralis, Truncus sympathicus, Rr. temporales des Nervus facialis, Nervus occipitalis tertius, Plexus aorticus thoracicus, Nn. splanchnici thoracici, Nn. thoracoabdominales, Nervus thoracodorsalis, Nervus tibialis, Nervus transversus cervicalis, Nervus trigeminus, Nervus trochlearis, Nervus tympanicus, Nervus ulnaris, Nervus subscapularis superior, Plexus uterovaginalis, Nervus vagus, R. ventralis, Plexus vesicalis, Nervus vestibularis, Nervus vestibulocochlearis, Rr. zygomatici des Nervus facialis, Nervus zygomaticus, Nervus zygomaticofacialis, Nervus zygomaticotemporalis, Foramen caecum, Canalis opticus, Fissura orbitalis superior, Foramen rotundum, Foramen ovale, Foramen spinosum, Foramen lacerum, Canalis caroticus, Foramen acusticum internum, Foramen jugulare, Canalis nervi hypoglossi, Foramen magnum.

27. Das computerlesbare Speichermedium, das Anweisungen umfasst, die, wenn sie von einem Computer ausgeführt werden, den Computer veranlassen, die Schritte eines Verfahrens nach einem der Ansprüche 1-26 durchzuführen.

28. Das System zum Erfassen einer Landmarke (104, 206) in einem Volumen (101, 201) von medizinischen Bildern, wobei das System Folgendes umfasst:

- Messmittel zum Erfassen eines Computertomographievolumens (101, 201) oder eines Magnetresonanzvolumens für einen menschlichen Patienten und
- Computersystem, das dazu ausgelegt ist, die Schritte eines Verfahrens nach einem der Ansprüche 1-26 durchzuführen.

**Revendications**

1. Procédé mis en œuvre par ordinateur d'extraction d'amers (104, 206) dans un volume (101, 201) des images médicales, le procédé consistant à générer au moins une carte de densité en utilisant un réseau U-Net entraîné appliqué au volume des images médicales, le volume des images médicales comprenant un volume issu de tomodensitométrie (101, 201) ou un volume issu de résonance magnétique, dans lequel le volume des images médicales comprend des voxels, ladite au moins une carte de densité comprenant une probabilité de trouver une localisation du ledit amer (104, 206) dans des voxels, **caractérisé en ce que** le réseau U-Net entraîné (203) qui comprend une voie contractante et une voie expansive, et dans lequel la voie contractante comprend un block résiduel encodeur (302, 303, 304, 305) pour coder le volume des images médicales et la voie expansive comprend un block résiduel de décodage (307, 308, 309, 310) pour décoder le volume des images médicales encodées par la voie contractante, et dans lequel le procédé en outre consiste à transformer ladite au moins une carte de densité aux coordonnées d'au moins un amers (104, 206) en utilisant la transformée différentiable spatiale-numérique en trois dimensions (103, 206).

2. Procédé selon la revendication 1, dans lequel le volume des images médicales est un volume prétraité (102) des images médicales.

3. Procédé selon la revendication 2, dans lequel le volume prétraité (102) des images médicales est obtenu en utilisant au moins une des écrêtage central, découpage et le réglage des valeurs des voxels sélectionnés aux valeurs définies, de la normalisation (204) des valeurs de voxels et du sous-dimensionnement du volume des images médicales et de l'augmentation (202).

4. Procédé selon la revendication 3, dans lequel ledit écrêtage et réglage des valeurs des voxels sélectionnés aux valeurs définies consiste à régler les valeurs des voxels inférieurs à -300 UH sur -300 UH et régler les valeurs des voxels supérieurs à 1100 UH sur 1100 UH.

5. Procédé selon la revendication 4, dans lequel ladite normalisation (204) des valeurs des voxels consiste à régler les valeurs des voxels égaux à -300UH sur 0, régler les valeurs des voxels égaux à 1100UH sur 1, et échelonner linéairement des valeurs comprises entre -300UH et 1100 UH sont réglées sur une valeur correspondante à l'échelle de 0 à 1.

6. Procédé selon l'une quelconque des revendications 3-5, dans lequel ledit sous-dimensionnement consiste à diminuer le volume du volume des images médicales 3 à 4 fois.

7. Procédé selon la revendication 6, dans lequel ledit sous-dimensionnement consiste à diminuer le volume du volume des images médicales 3.1, 3.2, 3.3, 3.4, 3.5, 3.6, 3.7, 3.8 ou 3.9 fois.

8. Procédé selon l'une quelconque des revendications 3-7, dans lequel l'augmentation (202) consiste à une rotation jusqu'à $\pi/6$ radians et une translation jusqu'à 10 voxels dans chaque dimension.

9. Procédé selon l'une quelconque des revendications 1-8, dans lequel le codage consiste au sous-échantillonnage du volume des images médicales et à augmenter le nombre des canaux pour produire un signal de sortie sous-échantillonné et envoyer le signal de sortie sous-échantillonné à un bloc encodeur résiduel correspondante (302, 303, 304, 305) et à un bloc résiduel de décodage correspondante (307, 308, 309, 310).

10. Procédé selon la revendication 9, dans lequel le sous-échantillonnage est effectué par un facteur de deux.

11. Procédé selon l'une quelconque des revendications 1-10, dans lequel le décodage consiste à suréchantillonner un signal d'entrée à un bloc résiduel de décodage du volume des images médicales pour produire un signal d'entrée suréchantillonné avec un nombre de canaux diminué.

12. Procédé selon la revendication 11, dans lequel le suréchantillonnage est effectué par un facteur de deux.

13. Procédé selon l'une quelconque des revendications 1-12, dans lequel l'entraînement du réseau U-Net résiduel entraîne (203) consiste au moins à :

- minimisation de divergence entre ladite au moins une carte de densité et une carte de densité annotée comprenant au moins une annotation, dans laquelle ladite au moins une annotation indique une localisation d'amer (104, 206) sur ladite au moins une carte de densité, et
- minimisation de la distance euclidienne entre la localisation sur ladite au moins une carte de densité et la localisation sur la carte de densité comprenant au moins une annotation.

14. Procédé selon l'une quelconque des revendications 1-13, dans lequel la probabilité de trouver l'amer (104, 206) présente la distribution normale.

15. Procédé selon l'une quelconque des revendications 13-14, dans lequel ladite minimisation de la distance euclidienne consiste à $\mathcal{L}_E(\hat{\mathbf{y}}, \mathbf{y}) = \|\hat{\mathbf{y}} - \mathbf{y}\|_2$ et ladite minimisation de divergence consiste à $\mathcal{L}_D(\hat{\mathbf{H}}, \mathbf{y}) = D_{JS}(\hat{\mathbf{H}}\|\mathcal{N}(\mathbf{y}, \sigma^2))$, où $D_{JS}(\cdot\|\cdot)$ est la divergence de Jensen-Shannon, $\hat{\mathbf{H}}$ est la carte de densité produite par le réseau U-Net résiduel (203) et normalisée par une fonction de normalisation, $\mathbf{y}$ est la localisation attendue, $\hat{\mathbf{y}}$ est la localisation prévue, et $\mathcal{N}(\mathbf{y}, \sigma^2)$ est la carte de densité attendue produite par échantillonnage à partir de la distribution normale $\mathcal{N}$ avec un écart type $\sigma$ autour de la localisation attendue $\mathbf{y}$.

16. Procédé selon la revendication 15, dans lequel $\sigma$ est égal à 3.

17. Procédé selon l'une quelconque des revendications 13-16, dans lequel l'entraînement du réseau U-Net résiduel entraîne (203) consiste à une combinaison linéaire de ladite minimisation de divergence et ladite minimisation de la distance euclidienne : $\mathcal{L}(\hat{\mathbf{H}}, \mathbf{y}) = \mathcal{L}_E(DSNT(\hat{\mathbf{H}}), \mathbf{y}) + \lambda \mathcal{L}_D(\hat{\mathbf{H}}, \mathbf{y}) = \mathcal{L}_E(\hat{\mathbf{y}}, \mathbf{y}) + \lambda \mathcal{L}_D(\hat{\mathbf{H}}, \mathbf{y})$, où $\lambda$ est un hyperparamètre du coefficient de régularisation.

18. Procédé selon la revendication 17, dans lequel $\lambda$ est égal à 1.

**19.** Procédé selon l'une quelconque des revendications 13-18, dans lequel ladite au moins une carte de densité et ladite carte de densité annotée sont produites en utilisant le même volume des images médicales ou en utilisant des volumes différents.

**20.** Procédé selon l'une quelconque des revendications 1-19, dans lequel la transformée différentiable spatiale-numérique en trois dimensions consiste à :

$$\text{DSNT}(\hat{\mathbf{H}}) = \left[ \langle \hat{\mathbf{H}}, \mathbf{X} \rangle_F, \langle \hat{\mathbf{H}}, \mathbf{Y} \rangle_F, \langle \hat{\mathbf{H}}, \mathbf{Z} \rangle_F \right],$$

où $\hat{\mathbf{H}} = \varphi(\mathbf{H})$, et $\hat{\mathbf{H}}$ est la carte de densité **H** produite par le réseau U-Net résiduel (203) et normalisée par une fonction de normalisation, dans laquelle $< \cdot, \cdot >_F$ représente un produit scalaire de Frobenius de deux matrices, dans lequel lesdites deux matrices sont sélectionnées parmi $\hat{\mathbf{H}}$, **X**, **Y** et **Z**, et dans lequel **X**, **Y** et **Z** sont des grilles sous forme des matrices définies comme :

$$\mathbf{X}_{i,j,k} = \frac{2j - (n+1)}{n}, \mathbf{Y}_{i,j,k} = \frac{2i - (m+1)}{m}, \mathbf{Z}_{i,j,k} = \frac{2k - (l+1)}{l}.$$

**21.** Procédé selon l'une quelconque des revendications 1-20, dans lequel chacun bloc encodeur résiduel (302, 303, 304, 305) comprend : une première couche encodeur de convolution (402) pour recevoir un signal d'entrée du block encodeur résiduel (302, 303, 304, 305), une première couche encodeur de norme (403) pour recevoir un signal de sortie depuis la première couche encodeur de convolution (402), une première couche encodeur d'activation (404) pour recevoir un signal de sortie depuis la première couche encodeur de norme (403), une seconde couche encodeur de convolution (405) pour recevoir un signal de sortie depuis la première couche encodeur d'activation (404), une seconde couche encodeur de norme (406) pour recevoir un signal de sortie depuis la seconde couche encodeur de convolution (405), une seconde couche encodeur d'activation (407) pour recevoir un signal de sortie depuis la seconde couche encodeur de norme (406), et une couche encodeur de convolution ultérieure (408) pour recevoir un signal d'entrée (301) du block encodeur résiduel (302, 303, 304, 305), et

dans lequel la couche encodeur de convolution ultérieure (408) comporte une matrice en 3D de taille 3 x 3 x 3 ou 1 x 1 x 1, dans lequel la seconde couche encodeur de convolution (405) comporte une matrice en 3D de taille 3 x 3 x 3 et la première couche encodeur de convolution (402) comporte une matrice en 3D de taille 3 x 3 x 3,
dans lequel le signal de sortie depuis la couche encodeur de convolution ultérieure (408) présente un nombre de canaux plus grand que le signal d'entrée (301) du bloc encodeur résiduel (302, 303, 304, 305), dans lequel le signal de sortie depuis la première couche encodeur de convolution (402) présente un nombre de canaux plus grand que le signal d'entrée (301) du bloc encodeur résiduel (302, 303, 304, 305),
dans lequel le signal de sortie depuis la couche encodeur de convolution ultérieure et depuis la seconde couche encodeur d'activation (407) est fusionné par l'addition matricielle standard,
dans lequel la première couche encodeur de convolution (402) et la couche encodeur de convolution ultérieure (408) comprend un opérateur de 3D convolution en stride, l'opérateur de 3D convolution en stride comprenant :

$$\mathbf{K} \star_s \mathbf{I} = \sum_{p=1}^{s} \sum_{q=1}^{s} \sum_{r=1}^{s} \mathbf{K}_{p,q,r} \star \mathbf{I}_{p,q,r},$$

où **K** est un noyau comprenant une matrice en 3D, **I** est un volume d'entrée d'exemple, et $s$ est le stride, et dans lequel la première couche encodeur d'activation et la seconde couche encodeur d'activation (407) comprend une fonction d'activation, ladite fonction d'activation étant sélectionnée dans le groupe de fonction tanh, de fonction Unité Linéaire Rectifiée ou de fonction Unité Linéaire Rectifiée Paramétrée, la fonction Unité Linéaire Rectifiée Paramétrée comprenant :

$$f(\mathbf{y}_i) = \mathbf{y}_i \text{ si } \mathbf{y}_i \geq 0,$$

$$f(\mathbf{y}_i) = \alpha_i \mathbf{y}_i \text{ si } \mathbf{y}_i < 0$$

où $y_i$ est un $i^{er}$ élément du volume d'entrée y, et $a$ est un paramètre apprenable, et
dans lequel la première couche encodeur de norme (403) et la seconde couche encodeur de norme (406) consiste à une normalisation par lot, une normalisation par instance, une normalisation par couche ou une normalisation par lot en 3D, et la normalisation par lot en 3D consistant à :

$$\mathbf{y} = \frac{\mathbf{x} - E[\mathbf{x}]}{\sqrt{Var[\mathbf{x}] + \epsilon}} \cdot \gamma + \beta$$

où **x** est le signal d'entrée, et **y** est le signal de sortie de couche de normalisation par lot ; $\gamma$ et $\beta$ sont des paramètres apprenables et $\varepsilon$ est une valeur constante faible ajoutée au dénominateur pour la stabilité numérique.

22. Procédé selon l'une quelconque des revendications 1-21, dans lequel chacun bloc résiduel de décodage (307, 308, 309, 310) comprend :

une première couche de convolution de décodage (502) pour recevoir un signal d'entrée (501) du block résiduel de décodage (307, 308, 309, 310), comprenant un opérateur de 3D corrélation croisée et une matrice en 3D de taille 1 x 1 x 1, une couche de décodage déséchantillonnant (503) pour recevoir un signal de sortie depuis la première couche de convolution de décodage (502), la couche de décodage déséchantillonnant (503) étant configurée pour déséchantillonner le signal de sortie de la première couche de convolution de décodage (502) de manière spatiale par un facteur de deux en utilisant l'interpolation au plus proche voisin, la première couche de norme de décodage (504) pour recevoir un signal de sortie depuis la couche de décodage déséchantillonnant (503), une première couche d'activation (505) pour recevoir un signal de sortie depuis la première couche de norme de décodage (504), une seconde couche de convolution de décodage (506) pour recevoir un signal de sortie depuis la première couche d'activation (505), la seconde couche de convolution de décodage (506) comprenant un noyau comprenant une matrice en 3D de taille 3 x 3 x 3, une seconde couche de norme de décodage (507) pour recevoir un signal de sortie depuis la seconde couche de convolution de décodage (506), une seconde couche d'activation de décodage (508) pour recevoir un signal de sortie de la seconde couche de norme de décodage (507), et
dans lequel l'opérateur de 3D corrélation croisée comprend :

$$\mathbf{K} \star \mathbf{I}(x, y, z) = \sum_{i=-N}^{N} \sum_{j=-N}^{N} \sum_{l=-N}^{N} \mathbf{K}(i, j, l) \times \mathbf{I}(x + i, y + j, z + l),$$

où **K** est un noyau comprenant une matrice en 3D de taille $N \times N \times N$, et $I(x,y,z)$ est un voxel du volume d'entrée d'exemple **I** des coordonnées $x,y,z$,
dans lequel la première couche de norme de décodage (504) et la seconde couche de norme de décodage (507) consiste à une normalisation par lot, une normalisation par instance, une normalisation par couche ou une normalisation par lot en 3D, et la normalisation par lot en 3D consistant à:

$$\mathbf{y} = \frac{\mathbf{x} - E[\mathbf{x}]}{\sqrt{Var[\mathbf{x}] + \epsilon}} \cdot \gamma + \beta,$$

où x est le signal d'entrée, et **y** est le signal de sortie de couche de normalisation par lot ; $\gamma$ et $\beta$ sont des paramètres apprenables et $\varepsilon$ est une valeur constante faible ajoutée au dénominateur pour la stabilité numérique, et
dans lequel la première couche d'activation de décodage (505) et la seconde couche d'activation de décodage (508) comprend une fonction d'activation, ladite fonction d'activation étant sélectionnée dans le groupe de fonction tanh, de fonction Unité Linéaire Rectifiée ou de fonction Unité Linéaire Rectifiée Paramétrée, la fonction Unité Linéaire Rectifiée Paramétrée comprenant :

$$f(\mathbf{y}_i) = \mathbf{y}_i \text{ si } \mathbf{y}_i \geq 0,$$

$$f(\mathbf{y}_i) = \alpha_i \mathbf{y}_i \text{ si } \mathbf{y}_i < 0$$

dans laquelle $y_i$ est un $i^{er}$ élément du volume d'entrée **y,** et $a$ est un paramètre apprenable.

23. Procédé selon l'une quelconque des revendications 21-22, dans lequel chacun bloc résiduel (302, 303, 304, 305, 307, 308, 309, 310) comprend :

$$\mathbf{y}_l = \mathrm{h}(\mathbf{x}_l) + \mathcal{F}(\mathbf{x}_l, \mathbf{W}_l),$$

$$\mathbf{x}_{l+1} = f(\mathbf{y}_l)$$

où $\mathbf{x}_l$ et $\mathbf{x}_{l+1}$ sont des signales d'entrée et de sortie de $l^{er}$ bloc résiduel, $\mathcal{F}(\cdot)$ est une fonction résiduelle, $f(\mathbf{y}_1)$ est une fonction d'activation et $\mathrm{h}(\mathbf{x}_l)$ est une fonction d'application identique,

dans lequel pour chacun bloc encodeur résiduel (302, 303, 304, 305) la fonction résiduelle comprend d'abord la première couche encodeur de convolution (402), la première couche encodeur de norme (403), la première couche encodeur d'activation (404), la seconde couche encodeur de convolution (405), la seconde couche encodeur de norme (406), et la seconde couche encodeur d'activation (407), et

dans lequel pour chacun bloc résiduel de décodage (307, 308, 309, 310), la fonction résiduelle comprend la seconde couche de convolution de décodage (506), la seconde couche de norme de décodage (507) et la seconde couche d'activation de décodage (508).

24. Procédé selon la revendication 23, dans lequel pour chacun bloc encodeur résiduel (302, 303, 304, 305) :

$$\mathrm{h}(\mathbf{x}_l) = \sum_{c=0}^{C_{entrée}-1}(\mathbf{K}_{C_{sortie},c} \star \mathbf{x}_{l_c}),$$

où * est un opérateur de 3D corrélation croisée ou un opérateur de 3D corrélation croisée en stride; $\mathbf{C}_{entrée}$ est un nombre de canaux d'entrée ; $\mathbf{C}_{sortie}$ est un nombre de canaux de sortie ; $\mathbf{K}$ est un ensemble des poids apprenables sous forme des noyaux de convolution ; et s est la valeur de stride, dans lequel l'opérateur de 3D corrélation croisée comprend :

$$\mathbf{K} \star \mathbf{I}(x, y, z) = \sum_{i=-N}^{N} \sum_{j=-N}^{N} \sum_{l=-N}^{N} \mathbf{K}(i, j, l) \times \mathbf{I}(x + i, y + j, z + l),$$

où $\mathbf{K}$ est un noyau comprenant une matrice en 3D de taille $N \times N \times N$, et $\mathbf{I}(x,y,z)$ est un voxel d'un volume d'entrée d'exemple $\mathbf{I}$ des coordonnées $x,y,z$.

25. Procédé selon l'une quelconque des revendications 21-24, dans lequel $\mathrm{h}(\mathbf{x}_l) = \mathbf{x}_l$ pour chacun block résiduel de décodage 5307, 308, 309, 310).

26. Procédé selon l'une quelconque des revendications 1-25, dans lequel ledit au moins un amer (104, 206) est sélectionné dans la liste comprenant des orifices d'entrée et des orifices de sortie entourant un ostium de l'Artère Coronaire Gauche, des orifices d'entrée et des orifices de sortie un ostium de l'Artère Coronaire Droite, un apex du ventricule gauche, fond/base du ventricule gauche, 17 segments du ventricule gauche selon l'American Heart Association, des points de raccordement des ventricules gauche et droit, d'ostium LCA de l'Artère Coronaire Gauche, d'ostium RCA de l'Artère Coronaire Droite, un région LM de l'Artère Coronaire Gauche Principale, d'origine DG1 de la première branche diagonale, d'origine DG2 de la seconde branche diagonale d'artère de rameau intermédiaire, d'origine OM1 de la première artère marginale, d'origine OM2 de la seconde artère marginale, d'origine RCA de l'Artère Coronaire Droite, d'origine AM de la Branche Marginale Aiguë, d'origine PDA de l'artère postérieure descendante, d'origine PL de l'Artère Ventriculaire Gauche Postérieure, l'orifice d'entrée de la Veine Cave Supérieure à l'atrium droit, l'orifice d'entrée de la Veine Cave Inférieure à l'atrium droit, l'orifice d'entrée du sinus coronaire à l'atrium droit, l'orifice d'entrée de l'appendice droit/auricule droite de l'atrium droit, apex de l'appendice droit/auricule droite, l'orifice d'entrée des veines pulmonaires supérieures/inférieures gauches ou supérieures/inférieures droites, l'orifice d'entrée de l'appendice droit/auricule droite de l'atrium droit, apex de l'appendice gauche/auricule gauche, origine du tronc pulmonaire, la valve tricuspide comprenant des feuillets : antérieurs, postérieurs et septaux, apex du Ventricule Droit, origine de l'aorte ascendante, la valve aortique comprenant des feuillets : droit, gauche, postérieur antérieur, postérieur, droit antérieur, droit postérieur, coronaire antérieur, coronaire gauche, coronaire droit, non coronaire, la valve bicuspide comprenant des feuillets : antérieur et postérieur, la valve mitrale comprenant des feuillets : antérieur et postérieur, l'artère cérébrale antérieure, des amers situés au début du segment horizontal ou segment précommunicant, segment vertical, segment post-communicant ou infracalleux, segment précalleux, segment supracalleux, segment postcalleux, ARTERE COMMUNICANTE ANTERIEURE, ARTERE CEREBELLEUSE ANTERO-SUPERIEURE, ARTERE CEREBELLEUSE ANTERO-INFERIEURE, ARTERE CEREBELLEUSE POSTERO-INFERIEURE, ARTERE CEREBRALE MOYENNE, des amers situés au début du segment sphénoïdal/horizontal, segment insulaire, segment operculaire, segment corticale, ARTERE CEREBRALE POSTERIEURE, des amers situés au début du segment précommunicant, segment postcommunicant, segment quadrijumeaux, segment cortical, ARTERE COMMUNICANTE POSTERIEURE, ARTERE OPHTALMIQUE, ARTERE CHOROIDIENNE DROITE ET GAUCHE, TRONC BASILAIRE, ARTERE SPINALE ANTERIEURE, TRONC BRACHIOCEPHALIQUE, ARTERE SUBCLAVIERE DROITE/GAUCHE, ARTERE CAROTIDE COMMUNE DROITE/GAUCHE, ARTERE CAROTIDE INTERNE DROITE/GAUCHE, ARTERE CAROTIDE EXTERNE DROITE/GAUCHE, ARTERE VERTEBRALE DROITE/GAUCHE, TRONC THYRO-CERVICAL DROIT/GAUCHE, ARTERE THORACIQUE INTERNE DROITE/GAUCHE, TRONC COSO-CERVICAL DROIT/GAUCHE, ARTERE SCAPULAIRE SUPERIEURE DROITE/GAUCHE, ARTERE TRANSVERSE DE COU DROITE/GAUCHE, ARTERE AXILLAIRE DROITE/GAUCHE, ARTERE BRACHIALE DROITE/GAUCHE, ARTERE CUBITALE DROITE/GAUCHE, ARTERE RADIALE DROITE/GAUCHE, ARTERE THYROIDIENNE SUPERIEURE DROITE/GAUCHE, ARTERE LINGUALE DROITE/GAUCHE, ARTERE FACIALE DROITE/GAUCHE, ARTERE PHARYNGIENNE ASCENDANTE DROITE/-GAUCHE, ARTERE OCCIPITALE DROITE/GAUCHE, ARTERE AURICULAIRE POSTERIEURE DROITE/GAUCHE, ARTERE TEMPORALE SUPERFICIELLE DROITE/GAUCHE, ARTERE MAXILLAIRE DROITE/GAUCHE, DES ARTERES INTERCOSTALES POSTERIEURES, DES ARTERE SOUS-COSTALES, DES ARTERES PHRENIQUES SUPERIEURES, DES ARTERES PERICARDIQUES, DES ARTERE OESOPHAGIENNES, DES RAMEAUX OESOPHAGIENS DE L'ARTERE THYROIDIENNE INFERIEURE (PREMIER TIERS), DES RAMEAUX OESOPHAGIENS DE LA PARTIE THORACIQUE DE L'AORTE (PARTIE MOYENNE), DES RAMEAUX OESOPHAGIENS DE L'ARTERE GASTRIQUE GAUCHE (DERNIER TIERS), DES ARTERES DIAPHRAGMATIQUES INEFRIEURES, DES ARTERES LOMBALES, TRONC COELIAQUE, ARTERE MESENTRIQUE SUPERIEURE, ARTERE MESENTRIQUE INFERIEURE, ARTERE SUPRA-RENALE MOYENNE, DES ARTERES RENALES, ARTERE TESTICULAIRE/ARTERE SPERMATIQUE INTERNE/ARTERE OVARIENNE, DES ARTERES ILIAQUES COMMUNES, DES ARTERES ILIAQUES INTERNES, DES ARTERES ILIAQUES EXTERNES, DES ARTERES FEMORALES, DES ARTERES POPLITEES, DES ARTERES TIBIALES ANTERIEURES, DES ARTERES DORSALES DU PIED, DES ARTERES TIBIALES POSTERIEURES, DES ARTERES PLANTAIRES MEDIALES, DES ARTERES LATERALES, V. CAVA SUPERIOR, VV. BRACHIOCEPHALICAE, V. SUBCLAVIA, VV. IUGULARES, V. CAVA INFERIOR, VV. ILIACAE COMMUNES, V. ILIACA EXTERNA, V. ILIACA INTERNA, VV. CORDIS, V. CARDIACA MAGNA, V. CARDIACA PARVA, V. CARDIACA MEDIA, V. POSTERIOR VENTRICULI SINISTRI, V. OBLIQUA ATRII SINISTRI, VV. CARDIACAE ANTERIORES, V. MARGINALIS DEXTRA, V. MARGINALIS SINISTRA, VV. CARDIACAE MINIMAE, VV. CEREBRI, V. CEREBRI INTERNA, V. SEPTI PELLUCIDI ANTERIOR, V. SEPTI PELLUCIDI POSTERIOR, V. THALAMOSTRIATA SUPERIOR, VV. THALAMOSTRIATAE INFERIORES, V. CHOROIDEA SUPERIOR, V. CHOROIDEA INFERIOR, V. CEREBRI MAGNA, VV. CEREBRI SUPERIORES, VV. CEREBRI INFERIORES, V. CEREBRI ANTERIOR, V. CEREBRI MEDIA PROFUNDA, V. CEREBRI MEDIA SUPERFICIALIS, VV. ANASTOMOTICAE, V. ANASTOMOTICA SUPERIOR, V. ANASTOMOTICA INFERIOR, V. BASALIS, V. COMMUNICANS ANTERIOR, V. COMMUNICANS POSTERIOR, CIRCULUS VENOSUS CEREBRI, V. COMMUNICANS POSTERIOR, V. SUPERIOR VERMIS, VV. HEMISPHAERII CEREBELLI SUPERIORES, V. VERMIS INFERIOR, VV. HEMISPHAERII CEREBELLI INFERIORES, VV. DIPLOICAE, V. DIPLOICA FRONTALIS, V. DIPLOICA TEMPORALIS ANTERIOR, V. DIPLOICA TEMPORALIS POSTERIOR, V. DIPLOICA OCCIPITALIS, VV. EMISSARIAE, V. EMISSARIA PARIETALIS, V. EMISSARIA MASTOIDEA, V. EMISSARIA CONDYLARIS, V. EMISSARIA OCCIPITALIS, PLEXUS VENOSUS FORAMINIS OVALIS, PLEXUS VENOSUS CAROTICUS INTERNUS, PLEXUS VENOSUS CANALIS HYPOGLOSSI, VV. MENINGEAE, VV. MENINGEAE MEDIAE, SINUS DURAE MATRIS, SINUS SAGITTALIS SUPERIOR, SINUS SAGITTALIS INFERIOR, SINUS RECTUS, SINUS TRANSVERSUS, SINUS SIGMOIDEUS, SINUS OCCIPITALIS, CONFLUENS SINUUM, SINUS CAVERNOSUS, SINUS INTERCAVERNOSI, PLEXUS BASILARIS, V. OPHTHALMICA SUPERIOR, V. LACRIMALIS, VV. ETHMOIDALES, ANTERIOR ET POSTERIOR, V. NASOFRONTALIS, V. OPHTHALMICA INFERIOR, V. FACIALIS, V. ANGULARIS, V. SUPRATROCHLEARIS, V. SUPRAORBITALIS, VV. PALPEBRALES, VV. NASALES EXTERNAE, VV. LABIALES, V. PROFUNDA FACIEI, RAMI PAROTIDEI, V. SUBMENTALIS, V. PALATINA EXTERNA, V. RETROMANDIBULARIS, VV. TEMPORALES SUPERFICIALES, V. TEMPORALIS MEDIA, V. TRANSVERSA FACIEI, VV. ARTICULARES, V. STYLOMASTOIDEA, VV. AURICULARES ANTERIORES, VV. PAROTIDEAE, VV. MAXILLARES, V. IUGULARIS EXTERNA, V. AURICULARIS POSTERIOR, V. OCCIPITALIS, V. SUPRASCAPULARIS, VV. TRANSVERSAE COLLI, V. IUGULARIS ANTERIOR, PLEXUS PTERYGOIDEUS, V. SPHENOPALATINA, VV. MENINGEAE MEDIAE, VV. TEMPORALES PROFUNDAE, VV. ALVEOLARES SUP., VV. MASSETERICAE, V. ALVEOLARIS INFERIOR, V. VERTEBRALIS, V. VERTEBRALIS ANTERIOR, V. CERVICALIS PROFUNDA, V. IUGULARIS INTERNA, SINUS SIGMOIDEUS, SINUS OCCIPITALIS, PLEXUS VENOSUS CANALIS HYPOGLOSSI, V. CANALICULI COCHLEAE, SINUS PETROSUS INFERIOR, V. OCCIPITALIS, V. FACIALIS, VV. PHARYNGEALES, V. LINGUALIS, V. PROFUNDA LINGUAGE, VV. DORSALES LINGUAE, V. COMITANS N. HYPOGLOSSI, VV.

THYROIDEAE SUPERIORES, VV. SUBFASCIALES, ARCUS VENOSUS PALMARIS PROFUNDUS, VV. RADIALES, VV. ULNARES, VV. BRACHIALES, V. BRACHIALIS COMMUNIS, V. BASILICA, VV. MUSCULUS, VV. COLATERALIS ULNAE, V PROFUNDA BRACHII, V. AXILLARIS, V. SUBCLAVIA, VV. CUTANEAE, VV. DIGITORUM, V. INTERCAPITALIS, ARCUS VENOSUS DIGITALIS PALMARIS, V. INTERDIGITALIS, ARCUS VENOSUS DIGITALIS DORSALIS, RETE VENOSUM DORSALE MANUS, VV. METACARPALES DORSALES, ARCUS VENOSUS METACARPALIS DORSALIS, VV. MARGINALES, V. SALVATELLA, V. CEPHALICA POLLICIS, V. CEPHALICA, V. CEPHALICA ANTEBRACHII, V. CEPHALICA ACCESSORIA, V. INTERMEDIA CUBITI, V. BASILICA, V. INTERMEDIA ANTEBRACHII, V. INTERMEDIA BASILICA, V. INTERMEDIA CEPHALICA, V. CAVA SUPERIOR, V. BRACHIOCEPHALICA, ANGULUS VENOSUS, V. THYROIDEA INFERIOR, VV. THYROIDEAE IMAE, V. VERTEBRALIS, V. CERVICALIS PROFUNDA, V. IUGULARIS EXT., VV. PERICARDIACOPHRENICAE, VV. THYMICAE, VV. PERICARDIALES, VV. MEDIASTINALES, VV. BRONCHIALES, VV. TRACHEALES, VV. ESOPHAGEALES, VV. THORACICAE INTERNAE, VV. MUSCULOPHRENICAE, VV. EPIGASTRICAE SUPERIORES, VV. INTERCOSTALES ANTERIORES, RAMI PERFORANTES, RAMI STERNALES, V. INTERCOSTALIS SUPERIOR, VV. CUTANEAE ABDOMINIS ET PECTORIS, PLEXUS VENOSUS AREOLARIS, VV. THORACOEPIGASTRICAE, VV. COSTOAXILLARES, V. AZYGOS, V. HEMIAZYGOS, PLEXUS VENOSI VERTEBRALES EXTERNI, PLEXUS VENOSI VERTEBRALES INTERNI, VV. BASIVERTEBRALES, VV. INTERVERTEBRALES, VV. SPINALES, VV. SPINALES INTERNAE, VV. SPINALES EXTERNAE, VV. RADICULARES, VV. DORSALES PEDIS, VV. PLANTARES LATERALES, ARCUS VENOSUS PLANTARIS, VV. PLANTARES MEDIALES, VV. METATARSALES PLANTARES, VV. PERFORANTES, VV. TIBIALES ANTERIORES, VV. TIBIALES POSTERIORES, VV. FIBULARES S. PERONEALES, V. POPLITEA, VV. GENICULARES, VV. SURALES, V. SAPHENA PARVA, V. FEMORALIS, V. EPIGASTRICA SUPERFICIALIS, V. CIRCUMFLEXA ILIACA SUPERFICIALIS, VV. THORACOEPIGASTRICAE, VV. PUDENDAE EXTERNAE,: VV. SCROTALES ANTERIORES, VV. LABIALES ANTERIORES, VV. DORSALES SUPERFICIALES PENIS, VV. DORSALES SUPERFICIALES CLITORIDIS, V. SAPHENA MAGNA, V.PROFUNDA FEMORIS, VV. PERFORANTES, VV. CRICUMFLEXAE MEDIALES FEMORIS, VV. CRICUMFLEXAE LATERALES FEMORIS, VV. GLUTEAE SUPERIORES, VV. GLUTEAE INFERIORES, VV. DIGITALES DORSALES, VV. INTERCAPITALES, VV. METATARSALES DORSALES, ARCUS VENOSUS DORSALIS PEDIS, VV. DIGITALES PLANTARES, ARCUS VENOSUS PLANTARIS, RETE VENOSUM PLANTARE, RETE VENOSUM DORSALE, V. SAPHENA, V. SAPHENA PARVA, V. CAVA INFERIOR, VV. PHRENICAE INFERIORES, VV. LUMBALES, VV. HEPATICAE, VV. RENALES, V. SUPRARENALIS, V. TESTICULARIS, V. OVARICA, VV. ILIACAE COMMUNES, V. SACRALIS MEDIANA, V. ILIACA EXTERNA, V. CIRCUMFLEXA ILIACA PROFUNDA, V. EPIGASTRICA INFERIOR, V. ILIACA INTERNA, V. ILIOLUMBALIS, VV. SACRALES LATERALES, VV. GLUTEAE SUPERIORES, VV. GLUTEAE INFERIORES, VV. OBTURATORIAE, V. PUDENDA INTERNA, VV. PROFUNDAE PENIS RESP. CLITORIDIS, VV. BULBI PENIS RESP. VV. BULBI VESTIBULI VAGINAE, VV. SCROTALES POSTERIORES RESP. LABIALES POSTERIORES, VV. RECTALES INFERIORES, V. DORSALIS PENIS, VV. CRICUMFLEXAE PENIS, V. DORSALIS CLITORIDIS, VV. DORSALES PENIS SUPERFICIALES, VV. DORSALES CLITORIDIS SUPERFICIALES, PLEXUS VENOSUS RECTALIS, PLEXUS VENOSUS VESICALIS, PLEXUS VENOSUS PROSTATICUS, PLEXUS VENOSUS UTERINUS, PLEXUS VENOSUS VAGINALIS, V. PORTAE HEPATIS, V. MESENTERICA SUPERIOR, VV. IEIUNALES ET ILEALES, V. ILEOCOLICA, V. APPENDICULARIS, V. COLICA DEXTRA, VV. PANCREATICAE, V. GASTROOMENTALIS DEXTRA, V. PANCREATICODUODENALIS INF., V. SPLENICA S. LIENALIS, VV. PANCREATICAE, VV. GASTRICAE BREVES, V. GASTROOMENTALIS SINISTRA, V. MESENTERICA INFERIOR, VV. SIGMOIDEAE, V. COLICA SIN., V. RECTALIS SUP., V. GASTRICA SINISTRA, V. GASTRICA DEXTRA, V. PREPYROLICA, V. PANCREATICODUODENALIS SUPERIOR POSTERIOR, V. CYSTICA, V. UMBILICALIS, la papille duodénale grande/papille de Vater, une entrée du conduit cystique au conduit cholédoque, une sortie du conduit cystique à la vésicule biliaire, la jonction du conduit hépatique droit et gauche, la jonction du conduit hépatique postérieur droit et gauche, la carène, segment à la bronche lobaire supérieure droite, segment à la bronche lobaire intermédiaire droite, segment à la bronche lobaire inférieure droite, segment à la bronche lobaire supérieure gauche, segment à la bronche lobaire inférieure gauche, segment à la bronche segmentaire première droite, segment à la bronche segmentaire seconde droite, segment à la bronche segmentaire troisième droite, segment à la bronche segmentaire quatrième droite, segment à la bronche segmentaire cinquième droite, segment à la bronche segmentaire sixième droite, segment à la bronche segmentaire septième droite, segment à la bronche segmentaire huitième droite, segment à la bronche segmentaire neuvième droite, segment à la bronche segmentaire dixième droite, segment à la bronche segmentaire première droite, segment à la bronche segmentaire première gauche, segment à la bronche segmentaire seconde gauche, segment à la bronche segmentaire troisième gauche, segment à la bronche segmentaire quatrième gauche, segment à la bronche segmentaire cinquième gauche, segment à la bronche segmentaire sixième gauche, segment à la bronche segmentaire septième gauche, segment à la bronche segmentaire huitième gauche, des narines postérieures, l'orifice de sortie/le drain des cellules ethmoïdales postérieures droites au récessus sphéno-ethmoïdal droit, l'orifice de sortie/le drain des cellules ethmoïdales postérieures gauches au récessus sphéno-ethmoïdal gauche, l'orifice de sortie/le drain du sinus sphénoïdal droit au récessus sphéno-ethmoïdal droit, l'orifice de sortie/le drain du récessus sphéno-ethmoïdal au méat nasal supérieur droit, l'orifice de sortie/le drain du récessus sphéno-ethmoïdal gauche au méat nasal supérieur gauche, l'orifice de sortie/le drain du sinus frontal droit au récessus frontal droit, l'orifice de sortie/le drain du sinus frontal gauche au récessus frontal gauche, l'orifice de sortie/le drain du récessus frontal droit au méat nasal moyen droit, l'orifice de sortie/le drain du récessus frontal gauche au méat nasal moyen gauche, l'orifice de sortie/le drain des cellules ethmoïdales frontales droites à l'unité ostéo-méatale droite, l'orifice de sortie/le drain des cellules ethmoïdales frontales droites à l'unité ostéo-méatale droite, l'orifice de sortie/le drain du sinus maxillaire droit à l'unité ostéo-méatale droite, l'orifice de sortie/le drain du sinus maxillaire gauche à l'unité ostéo-méatale gauche, l'orifice de sortie/le drain de l'unité ostéo-méatale droite au méat nasal moyen droit, l'orifice de sortie/le drain de l'unité ostéo-méatale gauche au méat nasal moyen gauche, l'orifice de sortie/le drain du conduit nasolacrymal droit au méat nasal inférieur droit, l'orifice de sortie/le drain du conduit nasolacrymal gauche au méat nasal inférieur gauche, des narines postérieures/orifices nasals postérieurs/choanes, l'uvula, la tonsille pharyngée, l'ouverture du tube auditif droit et gauche, la pointe de l'épiglotte, le récessus piriforme/la fausse/sinus droit(e) et gauche, la jonction pharyngo-œsophagienne, le cartilage cricoïde, le pli interarytenoïdien, le pli ary-épiglottique droits et gauches, des cartilages aryténoïdes droits et gauches, la bande ventriculaire droite et gauche, l'orifice de sortie du saccule laryngé droit et gauche, les cordes vocales, le pli vocal droit et gauche, le cartilage premier de la trachée, des reins, la papille rénale, des calices mineurs, des pyramides rénales, le bassinet rénal, l'orifice d'entrée de l'uretère, le plexus nerveux aortique abdominal, des nerfs abducens, le nerf accessoire, le nerf obturateur accessoire, le rameau auriculaire du nerf vague, le nerf ano-coccygien, l'anse cervicale, le nerf interosseux antebrachial antérieur, le nerf alvéolaire supérieur antérieur, le plexus d'Auerbach, le nerf auriculo-temporal, le nerf axillaire, le plexus brachial, le rameau buccal du nerf facial ; le nerf buccal, le plexus cardiaque, des nerfs caverneux, le plexus nerveux caverneux, des ganglions cœliaques, le rameau cervical du nerf facial, le plexus nerveux cervical, la corde du tympan, le ganglion ciliaire, le nerf coccygien, le nerf cochléaire, le nerf fibulaire commun, des nerfs digitaux palmaires communs du nerf médian, le rameau profond du nerf radial, le nerf fibulaire profond, la racine sympathique du ganglion ptérygopalatin, des nerfs temporaux profonds, la bandelette diagonale de Broca, le rameau digastrique du nerf facial, le rameau dorsal du nerf ulnaire, le nerf dorsal du clitoris, le nerf dorsal du pénis, le nerf dorsal de la scapula, le plexus œsophagien, des nerfs ethmoïdaux, le nerf laryngé externe, le rameau nasal externe, le nerf facial, le nerf fémoral, le nerf frontal, des plexus nerveux gastriques, le ganglion géniculé, le rameau génital du nerf génito-fémoral, le nerf génito-fémoral, le nerf glosso-pharyngien, le nerf auriculaire grand, le grand occipital nerf, le nerf grand pétreux, le plexus nerveux hépatique, le nerf hypoglosse, le nerf ilio-hypogastrique, le nerf ilioinguinal, le nerf alvéolaire inférieur, des nerfs anaux inférieurs, le nerf cardiaque cervical inférieur, le ganglion cervical inférieur, le nerf glutéal inférieur, le plexus hypogastrique inférieur, le plexus nerveux mésentérique inférieur, le nerf palpébral inférieur, le nerf infra-orbitaire, le plexus infra-orbitaire, le nerf infra-trochléaire, des nerfs intercostaux, des nerfs intercosto-brachiaux, le nerf cutané intermédiaire, le plexus nerveux carotidien interne, le nerf laryngé interne, l'interneurone, le ganglion jugulaire, le nerf lacrymal, le faisceau latéral, le nerf cutané antibrachial latéral, le nerf cutané fémoral latéral, le nerf pectoral latéral, le nerf plantaire latéral, le nerf du ptérygoïdien latéral, le nerf petit occipital, le nerf lingual, des nerfs ciliaires longs, la racine sympathique du ganglion ciliaire, le nerf thoracique long, le nerf subscapulaire inférieur, des nerfs lombaires, le plexus lombal, des nerfs splanchniques lombaires, le rameau fémoral du nerf génito-fémoral, le plexus lombo-sacré, le tronc lombo-sacré, le nerf mandibulaire, le rameau marginal mandibulaire du nerf facial, le nerf massétérique, le nerf maxillaire, le faisceau médial, le nerf cutané médial du bras, le nerf cutané médial de l'avant-bras, le nerf cutané médial, le nerf pectoral médial, le nerf plantaire médial, le nerf ptérygoïdien médial, le nerf médian, le plexus de Meissner, le nerf mentonnier, le nerf cardiaque moyen, le ganglion cervical moyen, le nerf méningé moyen, le nerf moteur, des rameaux musculaires du nerf radial, le nerf musculo-cutané, le nerf mylo-hyoïdien, le nerf naso-ciliaire, le nerf naso-palatin, le nerf du canal ptérygoïdien, le nerf du muscle obturateur interne, le nerf du muscle carré fémoral, le nerf du muscle piriforme, le nerf stapédien, le nerf subclavier, le nerf intermédiaire de Wrisberg, le nerf épineux, le ganglion nodosum, le nerf obturateur, le nerf oculo-moteur, le nerf olfactique, le nerf ophtalmique, le nerf optique, le ganglion otique, le plexus nerveux ovarien, des nerfs palatins, le rameau palmaire du nerf médian, le rameau palmaire du nerf ulnaire, le plexus nerveux pancréatique, le plexus patellaire, des nerfs splanchniques pelviens principaux, le nerf cutané perforant, des rameaux périnéaux du nerf cutané fémoral postérieur, le nerf périnéal, le ganglion pétreux, le rameau pharyngien du nerf vague, des rameaux pharyngés du nerf glosso-pharyngien, le nerf pharyngien, le plexus veineux pharyngien, le nerf phrénique, le plexus phrénique, le nerf auriculaire postérieur, le rameau postérieur de nerf spinal, le faisceau postérieur, le nerf cutané postérieur du bras, le nerf cutané postérieur du avant-bras, le nerf cutané fémoral postérieur, des nerfs scrotaux postérieurs, le nerf alvéolaire supérieure postérieure, des nerfs digitaux palmaires propres du nerf médian, le plexus nerveux prostatique, le ganglion ptérygopalatin, le nerf pudendal, le plexus pudendal, des rameaux pulmonaires du nerf vague, le nerf radial, le nerf laryngé récurrent, le plexus nerveux rénal, le plexus sacré, des nerfs splanchniques sacrés, le nerf saphène, le nerf ischiatique, le ganglion de Gasser, le nerf sensoriel, des nerfs ciliaires courts, des nerfs sphénopalatines, le plexus nerveux liénal, le rameau stylo-hyoïdien du nerf facial, le nerf subcostal, le ganglion submandibulaire, le nerf suboccipital, le rameau superficiel du nerf facial, le nerf fibulaire superficiel, le nerf cardiaque supérieur, le ganglion cervical supérieur, le ganglion supérieur du nerf glosso-pharyngien, le ganglion supérieur du nerf vague, le nerf glutéal supérieur, le plexus hypogastrique supérieur, le nerf labial supérieur, le nerf laryngé supérieur, le nerf cutané brachial latéro-supérieur, le plexus nerveux mésentérique supérieur, le plexus nerveux rectal supérieur, des nerfs supra-claviculaires, le nerf supra-orbitaire, le plexus nerveux suprarénal, le nerf supra-scapulaire, le nerf supra-trochléaire, le nerf sural, le tronc sympathique, des rameaux temporaux du nerf facial, le troisième nerf occipital, le plexus aortique thoracique, des nerfs splanchniques thoraciques, des nerfs thoraco-abdominals, le nerf thoraco-dorsal, le nerf tibial, le nerf transverse du cou, le nerf trijumeau, le nerf trochléaire, le nerf tympanique, le nerf ulnaire, le nerf subscapulaire supérieur, le plexus nerveux utéro-vaginal, le nerf vague, la branche antérieure, le plexus nerveux vésical, le nerf vestibulaire, le nerf vestibulo-cochléaire, des rameaux zygomatiques du nerf facial, le nerf zygomatique, le nerf zygomatico-facial, le nerf zygomaticotemporal, le foramen caecum, le canal optique, la fissure orbitaire supérieure, le foramen rond, le foramen ovale, le foramen épineux, le foramen déchiré, le canal carotidien, le trou auditif interne, le foramen jugulaire, le canal du nerf hypoglosse, et le foramen magnum.

27. Support de stockage lisible par ordinateur comprenant des instructions qui, lorsqu'elles sont exécutées par un ordinateur, amènent l'ordinateur à exécuter les étapes du procédé selon l'une quelconque des revendications 1-26.

28. Système pour extraction d'amers (104, 206) dans un volume (101, 201) des images médicales, le système comprenant :

   - des moyens de mesure pour collecter un volume issu de tomodensitométrie (101, 201) ou un volume issu de résonance magnétique, pour un patient humain, et
   - un système informatique adapté à effectuer les étapes du procédé selon l'une quelconque des revendications 1-26.

| CT volume | 101 |
| Preprocessing | 102 |
| 3D DSNT enhanced residual U-Net | 103 |
| Landmarks coordinates prediction | 104 |

Fig. 1

EP 4 487 296 B1

```
┌─────────────────────────────────┐
│           CT volume             │  201
└─────────────────────────────────┘
                 │
                 ▼
┌─────────────────────────────────┐        ┌──────────────┐        ┌──────────────┐
│  Preprocessing and augmentation │  202   │ Conversion to│  207   │  CT volume   │  209
└─────────────────────────────────┘        │   heatmaps   │◄───────│   landmark   │
                 │                          └──────────────┘        │  annotation  │
                 ▼                                 │                └──────────────┘
┌─────────────────────────────────┐               │                       │
│          Residual U-Net         │  203          │                       │
└─────────────────────────────────┘               ▼                       │
                 │                          ┌──────────────┐               │
                 ▼                          │ Loss function│  208          │
┌─────────────────────────────────┐  204   │ for divergence│              │
│  Heatmap normalization function │───────►└──────────────┘               │
└─────────────────────────────────┘                                       │
                 │                                                         │
                 ▼                                                         │
┌─────────────────────────────────┐                                       ▼
│ Differentiable spatial to       │  205                            ┌──────────────┐
│ numerical transform             │                                 │ Loss function│  210
└─────────────────────────────────┘                                 │ for regression│
                 │                                              ┌───►└──────────────┘
                 ▼                                              │
┌─────────────────────────────────┐  206                       │
│  Landmarks coordinates prediction│──────────────────────────┘
└─────────────────────────────────┘
```

Fig. 2

43

Input (C=1) 301

Encoder block ($C_{in}$=1, $C_{out}$=16, s=2, $k_s$=3) 302

Encoder block ($C_{in}$=16, $C_{out}$=32, s=2, $k_s$=3) 303

Encoder block ($C_{in}$=32, $C_{out}$=64, s=2, $k_s$=3) 304

Encoder block ($C_{in}$=64, $C_{out}$=128, s=2, $k_s$=3) 305

Encoder block(in=128, out=256, s=1, $k_s$=1) 306

Decoder block ($C_{in}$=384, $C_{out}$=64) 307

Decoder block ($C_{in}$=128, $C_{out}$=32) 308

Decoder block ($C_{in}$=64, $C_{out}$=16) 309

Decoder block ($C_{in}$=32, $C_{out}$=2) 310

Output (C=2) 311

Fig. 3

Fig. 4

| Input (C$_{in}$) | 501 |

$\downarrow$

| Convolution layer (C$_{in}$, C$_{out}$, k$_s$=1) | 502 |

$\downarrow$

| Upsample layer | 503 |

$\downarrow$

| Norm layer | 504 |

$\downarrow$

| Activation layer | 505 |

$\downarrow$

| Convolution layer (C$_{out}$, C$_{out}$, k$_s$=3) | 506 |

$\downarrow$

| Norm layer | 507 |

$\downarrow$

| Activation layer | 508 | $\rightarrow$ ( + ) 509

$\downarrow$

| Output (C$_{out}$) | 510 |

Fig. 5

EP 4 487 296 B1

```
┌─────────────────────────────────────────┐        ┌──────────────────────────────────────────┐
│  Parameter selection and initialization  │ 601    │            Training dataset               │ 602
└─────────────────────────────────────────┘        └──────────────────────────────────────────┘
                    │                                                    │
                    │                               ┌──────────────────────────────────────────┐
                    │                               │             Batch of data                │ 603
                    │                               └──────────────────────────────────────────┘
                    ▼                                                    │
        ┌──────────────────────────────────────────────────────────────────────────┐
        │                   3D DSNT enhanced residual U-Net                          │ 604
        └──────────────────────────────────────────────────────────────────────────┘
   ┌──────────────┐                              │
   │   Update     │ 609        ┌──────────────────────────────────────────┐
   │  parameters  │            │          Forward-propagation             │ 605
   └──────────────┘            └──────────────────────────────────────────┘
        │                                          │
   ┌──────────────┐            ┌──────────────────────────────────────────┐
   │    Back-     │ 608        │            Loss calculation               │ 606
   │ propagation  │            └──────────────────────────────────────────┘
   └──────────────┘                               │
                    N        ◇ Requirements ◇ N   607
                             ◇    met?     ◇
                                    │ Y
                    ┌──────────────────────────────────────────┐
                    │              Stop training                │ 610
                    └──────────────────────────────────────────┘
```

Fig. 6

Fig. 7

Fig. 8

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **AL, W.A.** ; **JUNG, H.Y.** ; **YUN, I.D.** ; **JANG, Y.** ; **PARK, H.B.** ; **CHANG, H.J.** Automatic aortic valve landmark localization in coronary ct angiography using colonial walk.. *PloS one*, 2018, vol. 13 (7), e0200317
- **DABBAH, M.A.** ; **MURPHY, S.** ; **PELLO, H.** ; **COURBON, R.** ; **BEVERIDGE, E.** ; **WISEMAN, S.** ; **WYETH, D.** ; **POOLE, I.** Detection and location of 127 anatomical landmarks in diverse ct datasets. In: Medical Imaging 2014: Image Processing. International Society for Optics and Photonics, 2014, vol. 9034, 903415
- **DONNER, R.** ; **MENZE, B.H.** ; **BISCHOF, H.** ; **LANGS, G.** Global localization of 3d anatomical structures by pre-filtered hough forests and discrete optimization.. *Medical image analysis*, 2013, vol. 17 (8), 1304-1314
- **ELATTAR, M.** ; **WIEGERINCK, E.** ; **VAN KESTEREN, F.** ; **DUBOIS, L.** ; **PLANKEN, N.** ; **VANBAVEL, E.** ; **BAAN, J.** ; **MARQUERING, H.** Automatic aortic root landmark detection in cta images for preprocedural planning of transcatheter aortic valve implantation.. *The international journal of cardiovascular imaging*, 2016, vol. 32 (3), 501-511
- **GAO, Y.** ; **SHEN, D.** Collaborative regression-based anatomical landmark detection.. *Physics in Medicine & Biology*, 2015, vol. 60 (24), 9377
- Robust anatomical landmark detection for mr brain image registration. **HAN, D.** ; **GAO, Y.** ; **WU, G.** ; **YAP, P.T.** ; **SHEN, D.** International Conference on Medical Image Computing and Computer-Assisted Intervention. Springer, 2014, 186-193
- **IBRAGIMOV, B.** ; **LIKAR, B.** ; **PERNUS, F.** ; **VRTOVEC, T.** Computerized cephalometry by game theory with shape-and appearance-based landmark refinement. *Proceedings of International Symposium on Biomedical imaging (ISBI)*, 2015
- Dynamic model-driven quantitative and visual evaluation of the aortic valve from 4d ct.. **IONASEC, R.I.** ; **GEORGESCU, B.** ; **GASSNER, E.** ; **VOGT, S.** ; **KUTTER, O.** ; **SCHEUERING, M.** ; **NAVAB, N.** ; **COMANICIU, D.** International Conference on Medical Image Computing and Computer-Assisted Intervention. Springer, 2008, 686-694
- **JADERBERG, M.** ; **SIMONYAN, K.** ; **ZISSERMAN, A. et al.** Spatial transformer networks.. *Advances in neural information processing systems*, 2015, vol. 28, 2017-2025

- **KHANNA, A.** ; **LONDHE, N.D.** ; **GUPTA, S.** ; **SEMWAL, A.** A deep residual u-net convolutional neural network for automated lung segmentation in computed tomography images.. *Biocybernetics and Biomedical Engineering*, 2020, vol. 40 (3), 1314-1327
- **LIN, J.** Divergence measures based on the shannon entropy.. *IEEE Transactions on Information theory*, 1991, vol. 37 (1), 145-151
- Discriminative context modeling using auxiliary markers for lv landmark detection from a single mr image. **LU, X.** ; **JOLLY, M.P.** International Workshop on Statistical Atlases and Computational Models of the Heart. Springer, 2012, 105-114
- Landmark detection in cardiac mri using learned local image statistics.. **MAHAPATRA, D.** International Workshop on Statistical Atlases and Computational Models of the Heart.. Springer, 2012, 115-124
- **MOSTAFA, A.** ; **GHANEM, A.M.** ; **EL-SHATOURY, M.** ; **BASHA, T.** Improved centerline extraction in fully automated coronary ostium localization and centerline extraction framework using deep learning. *2021 43rd Annual International Conference of the IEEE Engineering in Medicine Biology Society (EMBC)*, 2021, 3846-3849
- Stacked hourglass networks for human pose estimation. **NEWELL, A.** ; **YANG, K.** ; **DENG, J.** European conference on computer vision.. Springer, 2016, 483-499
- **NIBALI, A.** ; **HE, Z.** ; **MORGAN, S.** ; **PRENDERGAST, L.** Numerical coordinate regression with convolutional neural networks. *arXiv:1801.07372*, 2018
- **TOMPSON, J.J.** ; **JAIN, A.** ; **LECUN, Y.** ; **BREGLER, C.** Joint training of a convolutional network and a graphical model for human pose estimation.. *Advances in neural information processing systems*, 2014, vol. 27, 1799-1807
- **TOSHEV, A.** ; **SZEGEDY, C.** Deeppose: Human pose estimation via deep neural networks. *Proceedings of the IEEE conference on computer vision and pattern recognition.*, 2014, 1653-1660
- Patient specific models for planning and guidance of minimally invasive aortic valve implantation. **WÄCHTER, I.** ; **KNESER, R.** ; **KOROSOGLOU, G.** ; **PETERS, J.** ; **BAKKER, N.** ; **WEESE, J. et al.** International Conference on Medical Image Computing and Computer-Assisted Intervention.. Springer, 2010, 526-533

- **YANG, W.** ; **LI, S.** ; **OUYANG, W.** ; **LI, H.** ; **WANG, X.** Learning feature pyramids for human pose estimation. *proceedings of the IEEE international conference on computer vision.*, 2017, 1281-1290
- **YAO, Z.** ; **XIE, W.** ; **ZHANG, J.** ; **DONG, Y.** ; **QIU, H.** ; **YUAN, H.** ; **JIA, Q.** ; **WANG, T.** ; **SHI, Y.** ; **ZHUANG, J. et al.** Imagetbad: A 3d computed tomography angiography image dataset for automatic segmentation oftype-b aortic dissection.. *Frontiers in Physiology*, 2021, vol. 12
- **ZHANG, Z.** ; **LIU, Q.** ; **WANG, Y.** Road extraction by deep residual u-net.. *IEEE Geoscience and Remote Sensing Letters*, 2018, vol. 15 (5), 749-753
- **ZHENG, Y.** ; **JOHN, M.** ; **LIAO, R.** ; **NOTTLING, A.** ; **BOESE, J.** ; **KEMPFERT, J.** ; **WALTHER, T.** ; **BROCKMANN, G.** ; **COMANICIU, D.** Automatic aorta segmentation and valve landmark detection in c-arm ct for transcatheter aortic valve implantation.. *IEEE transactions on medical imaging*, 2012, vol. 31 (12), 2307-2321

- **HE, KAIMING et al.** Delving deep into rectifiers: Surpassing human-level performance on imagenet classification. *Proceedings of the IEEE international conference on computer vision.*, 2015
- **IOFFE, SERGEY** ; **CHRISTIAN SZEGEDY**. Batch normalization: Accelerating deep network training by reducing internal covariate shift. *International conference on machine learning. PMLR*, 2015
- **KINGMA, DIEDERIK P.** ; **JIMMY BA**. Adam: A method for stochastic optimization. *arXiv:1412.6980*, 2014
- **WU, YUXIN** ; **KAIMING HE**. Group normalization. *Proceedings of the European conference on computer vision (ECCV)*, 2018
- **ULYANOV, DMITRY** ; **ANDREA VEDALDI** ; **VICTOR LEMPITSKY**. Instance normalization: The missing ingredient for fast stylization. *arXiv:1607.08022*, 2016
- **BA, JIMMY LEI** ; **JAMIE RYAN KIROS** ; **GEOFFREY E. HINTON**. Layer normalization. *arXiv:1607.06450*, 2016